# EUROPÄISCHE PATENTSCHRIFT

(11) **EP 4 090 611 B1**
(45) Veröffentlichungstag und Bekanntmachung des Hinweises auf die Patenterteilung: **20.03.2024**
(21) Anmeldenummer: 21708905.1
(22) Anmeldetag: 12.01.2021
(51) Int. Cl.: B65G 1/137

(54) **VERFAHREN UND KOMMISSIONIERLAGER ZUM LAGERN UND KOMMISSIONIEREN VON WAREN**
METHOD AND COMMISSIONING WAREHOUSE FOR STORING AND COMMISSIONING GOODS
MÉTHODE ET ENTREPÔT DE PRÉLÈVEMENT POUR LE STOCKAGE ET LE PRÉLÈVEMENT DE MARCHANDISES

(30) Priorität: 17.01.2020 AT 500352020
(43) Veröffentlichungstag der Anmeldung: 23.11.2022
(73) Patentinhaber: TGW Logistics Group GmbH, 4614 Marchtrenk (AT)
(72) Erfinder: FORSTER, Florian, 83093 Bad Endorf (DE)
(74) Vertreter: Burger, Hannes
(86) Internationale Anmeldenummer: PCT/AT2021/060009
(87) Internationale Veröffentlichungsnummer: WO 2021/142498

(56) Entgegenhaltungen:
- EP-A2- 1 659 077
- WO-A1-2012/116690
- WO-A1-2018/090081
- WO-A2-2020/014725

## Beschreibung

Die Erfindung betrifft ein Verfahren und Kommissionierlager zum Lagern und Kommissionieren von Waren, insbesondere Lebensmittel aus dem Frischebereich, enthaltenden und stapelbaren Warenträgern, wie in den Ansprüchen 1 und 8 beschrieben.

Aus dem Stand der Technik sind Kommissionierlager bekannt, bei welchen aus Wareneingangseinheiten mit gleichen Waren (sortenreine Wareneingangseinheiten) Warenausgangseinheiten mit unterschiedlichen Waren gebildet werden.

Die Warenausgangseinheiten mit unterschiedlichen Waren sind beispielsweise bei der Versorgung von Einzelhandelsgeschäften beziehungsweise Filialen von Lebensmitteleinzelhändlern erforderlich, bei denen in einem Zentrallager in großen Wareneingangseinheiten angelieferte Waren in kleinere Verbrauchseinheiten geteilt und mit anderen Waren zur Auslieferung zusammengestellt werden.

Die Waren sind in Warenträgern (Behälter, Kartons) gelagert. Die Wareneingangseinheiten umfassen auf Ladehilfsmittel (Palette, Rollcontainer) abgestellte Warenträgerstapel aus mehreren übereinander angeordneten Warenträgern. Beispielweise sind auf einer Europaletten (1200mm x 800mm) vier Warenträgerstapel jeweils mit Warenträgern mit einer Grundfläche von 600mm x 400 mm oder sechs Warenträgerstapel jeweils mit Warenträgern mit einer Grundfläche von 300mm x 400mm gestapelt.

Das Kommissionierlager umfasst einen Anlieferbereich für die Wareneingangseinheiten, einen Lagerbereich, einen Auftragsbearbeitungsbereich und einen Auslieferbereich für die Warenausgangseinheiten. Im Anlieferbereich sind automatisiert betriebene Depalettiervorrichtungen vorgesehen, an denen Warenträgerstapel aus den Wareneingangseinheiten vereinzelt werden. Danach werden die Warenträgerstapel im Lagerbereich gelagert. Im Auftragsbearbeitungsbereich werden Kommissionieraufträge bearbeitet, indem die benötigten Warenträgerstapel aus dem Lagerbereich ausgelagert und zu Umladevorrichtungen (Palettiervorrichtungen) transportiert werden. An den Umladevorrichtungen werden einzelne Warenträger oder gesamte Warenträgerstapel gemäß Kommissionierauftrag auf ein Zielladehilfsmittel (Palette, Rollcontainer) geladen. Der Transport der einzulagernden Warenträgerstapel zwischen Anlieferbereich und Lagerbereich erfolgt durch eine Einlagerfördertechnik und der Transport der zu kommissionierenden Warenträgerstapel zwischen Lagerbereich und Auftragsbearbeitungsbereich erfolgt durch eine Auslagerfördertechnik. Ein solches Kommissionierlager ist beispielweise in der WO 2015/144139 A1 beschrieben. Dieses bekannte Kommissionierlager eignet sich vornehmlich zum Transport von Behältern, weniger zum Transport von Kartons. Es ist nämlich im Regelfall damit zu rechnen, dass die Kartons Feuchtigkeit aufnehmen und an Stabilität verlieren, sodass ein Stapel aus mehreren übereinander gestapelten Kartons droht umzufallen, insbesondere wenn Beschleunigungskräfte einwirken. Um dem entgegenzuwirken, können Kartons mehr oder weniger nur einzeln manipuliert werden, was die Leistung eines solchen Kommissionierlagers stark minimiert.

Die WO 2012/127102 A1 offenbart ein Kommissionierlager, welches einen Anlieferbereich für die Wareneingangseinheiten, einen Lagerbereich und einen Auslieferbereich für die Warenausgangseinheiten umfasst. Die Wareneingangseinheiten werden im Anlieferbereich bereitgestellt und aus diesen Behälterstapel vereinzelt. Die vereinzelten Behälterstapel werden durch eine Einlagerfördertechnik in den Lagerbereich transportiert und im Lagerbereich an verschiedenen Einlagerpufferbahnen bereitgestellt. Im Lagerbereich ist ein Portalroboter angeordnet, welcher von den Behälterstapeln einzelne Behälter oder Behälterteilstapel entnehmen und auf dem Boden an vorgegeben Lagerplätzen abstellen kann. An jedem Lagerplatz ist ein Stapel von mehreren übereinander angeordneten Behältern mit gleichen Waren abgestellt. Die Kommissionierung erfolgt durch den Portalroboter, indem von den Behälterstapeln einzelne Behälter oder Behälterteilstapel entnommen und im Lagerbereich auf freien Lagerplätzen zu auftragsbezogenen Behälterstapeln (Warenausgangseinheiten) zusammengestellt werden. Danach werden die auftragsbezogenen Behälterstapeln auf verschiedene Auslagerpufferbahnen abgegeben und von den Auslagerpufferbahnen und einer Auslagerfördertechnik aus dem Lagerbereich in den Auslieferbereich transportiert. Dieses Kommissionierlager ist ausschließlich zur Lagerung und Kommissionierung von Behältern, nicht jedoch von Kartons ausgelegt.

Bekannt sind auch Kommissionierlager, bei denen mobile Lagerregale von autonom verfahrbaren, fahrerlosen Transportfahrzeugen transportiert werden, beispielweise aus der US 2017/022010 A1 oder WO 2018/039423 A1. Die Lagerregale umfassen in übereinanderliegenden Lagerebenen angeordnete Fachböden, auf welchen Waren abgestellt sind. Die Aufnahme eines Warenträgerstapels aus mehreren übereinander gestapelten Warenträgern im jeweiligen Lagerregal ist nicht vorgesehen.

Die WO 2018/090081 A1 offenbart ein Kommissionierlager zum Lagern und Kommissionieren von Waren enthaltenden und stapelbaren Warenträgern, bei dem in einer Beladestation Warenträgerstapelgruppen auf Transportgestelle übergeben und danach durch autonom verfahrbare, fahrerlose Transportfahrzeuge von der Beladestation in einen Lagerbereich transportiert werden. Zur Bearbeitung eines Kommissionierauftrags werden beladene Transportgestelle durch autonom verfahrbare, fahrerlose Transportfahrzeuge vom Lagerbereich zu einer Entladestation transportiert und dort durch eine automatisiert betriebene Entladevorrichtung (Gelenkarmroboter) auf ein Zielladehilfsmittel umgeladen. Das Zielladehilfsmittel wird mit dem Auftragsstapel auf einem Transportgestell transportiert. Die Transportgestelle haben lediglich einen Transportrahmen und einen Boden. Die Transportgestelle weisen jedoch keine Seitenwände zur Lagestabilisierung der Warenträgerstapelgruppe auf, sodass die Transportfahrzeuge nur mit geringer Dynamik bewegt werden können. Um dennoch ein leistungsfähiges Kommissionierlager zu schaffen, muss die Anzahl der Transportfahrzeuge wesentlich erhöht werden. Das "Verkehrsaufkommen" und die Investitionskosten steigen enorm an. Unabhängig davon muss damit gerechnet werden, dass während dem Transport Warenträger vom Warenträgerstapel fallen, sofern der Hallenboden geringste Unebenheiten aufweist.

Die EP 2 746 194 A1 offenbart ein Verfahren zum Lagern und Kommissionieren von Waren auf Paletten, bei dem die Paletten (ohne Transportladehilfen) innerhalb des Kommissioniersystems durch autonom verfahrbare, fahrerlose Transportfahrzeuge transportiert werden.

Die DE 10 2017 000 274 A1 offenbart eine mobile Transportladehilfe mit nach einer Richtung nach unten geneigten und parallel angeordneten Abstützschienen, auf welchen ein Großladungsträger abgestellt werden kann. Im Großladungsträger befinden sich Bauelemente für die Produktion eines Fahrzeuges. Eine Kommissionierung der Bauelemente findet jedoch nicht statt.

Die WO 2012/116 690 A1 offenbart eine mobile Stapelladehilfe zum Transport eines kommissionierten Reifenstapels, welche einen in einer Richtung geneigten Boden und eine vertikal zum Boden ausgerichtete Stapelstütze umfasst, gegen letztere der Reifenstapel angelehnt werden kann. Mobile Transportladehilfen zum Transport der Waren zum Stapelroboter werden nicht verwendet. Vielmehr schließt der Stapelroboter zum Stapeln der Reifen auf die Stapelladehilfe an eine Produktionslinie an und es erfolgt der Transport der produzierten Reifen durch eine stationäre Fördertechnik (beispielweise ein Rollenförderer) von der Produktion zum Stapelroboter.

Die EP 3 823 916 A2 betrifft ein älteres Recht gemäß Artikel 54(3) EPÜ, welche ein Verfahren und ein Kommissionierlager zum Lagern und Kommissionieren von Waren offenbart, bei dem Transportladehilfen mit Warenträgern beladen und mit autonom verfahrbaren, fahrerlosen Transportfahrzeugen transportiert werden. Während Warenträgerstapelgruppen zu Warenträgerstapeln vereinzelt und diese Warenträgerstapeln auf die Transportladehilfen umgeladen werden, wenn diese automatisch kommissionierbare Warenträger umfassen, werden Warenträgerstapelgruppen "unverändert" auf die Transportladehilfen umgeladen, wenn diese manuell kommissionierbare Warenträger umfassen. Es ist aber nicht vorgesehen, dass Warenträgerstapelgruppen "unverändert" auf die Transportladehilfen umgeladen, im Lagerbereich zwischengelagert und zur Bearbeitung eines Kommissionierauftrages an einer automatischen Entladevorrichtung bereitgestellt werden.

Eine Aufgabe der Erfindung ist es ein verbessertes Verfahren zum Lagern und Kommissionieren von Waren enthaltenden und stapelbaren Warenträgern und ein entsprechendes Kommissionierlager zu schaffen. Insbesondere soll unabhängig vom verwendeten Warenträger (Behälter aus Kunststoff oder Kartons) ein weitgehend störungsfreier Betrieb und ein schneller Warenumschlag möglich sein.

Die Aufgabe der Erfindung wird durch die Maßnahmen gemäß Anspruch 1 gelöst.

Dabei ist von Vorteil, dass unabhängig davon welcher Warenträger verwendet wird, die Warenträger in höherer Anzahl direkt übereinander gestapelt werden können. Die Warenträger können aus unterschiedlichen Materialien hergestellt sein, beispielweise können Behälter aus Kunststoff oder Kartons verwendet werden. Im Kommissionierlager werden entweder Behälter oder Kartons kommissioniert. Jedoch ist auch eine Kombination aus Behältern und Kartons denkbar. Ebenso können die Warenträger unterschiedliche Dimensionen ausbilden. Üblicherweise ist eine Grundfläche der Warenträger 600mm x 400mm oder 300mm x 400mm. Die Transportfahrten können effizienter durchgeführt werden, da je Transportfahrt eine höhere Anzahl an Warenträgern transportiert werden kann.

Für den Transport der leeren Transportladehilfen und mit Warenträgerstapelgruppen beladenen Transportladehilfen werden autonom verfahrbare, lenkbare Transportfahrzeuge (eines fahrerlosen Transportsystems) eingesetzt, welche von einem übergeordneten Leitrechner automatisch gesteuert werden. Solche Transportfahrzeuge sind dem Fachmann unter "automated guided vehicles (kurz AGV)" bzw. "autonomous mobile robots (kurz AMR)" bekannt. Ein solches Transportsystem umfasst die Transportfahrzeuge, Mittel zur Standortbestimmung und Lageerfassung der Transportfahrzeuge und Mittel zur Datenübertragung an und von den Transportfahrzeugen im Transportsystem. Jedes Transportfahrzeug umfasst ein Fahrgestell mit einer Antriebseinheit und eine auf dem Fahrgestell angeordnete Ladeplattform zur Aufnahme / Abgabe / Transport einer mobilen (ortsungebundenen) Transportladehilfe. Für die Navigation der Transportfahrzeuge sind unterschiedliche Technologien bekannt. So wird neben der spurgeführten, induktiven oder optischen Navigation auch eine Lasernavigation eingesetzt, bei welcher jedes Transportfahrzeug mit einem Laserscanner ausgerüstet ist, mit welchem stationäre Referenzpunkte in der Umgebung detektiert werden und anhand der detektierten Umgebungsmerkmale das Transportfahrzeug navigiert wird. Möglich ist die Navigation auch mittels GPS-System, insbesondere Differential Global Positioning System (dGPS).

Ein solches Transportsystem lässt sich problemlos in bereits bestehende Kommissionierlager integrieren und bestens an schwankende Leistungsanforderungen anpassen.

Auch wenn in vorteilhafter Weise die Transportfahrzeuge mit denselben Leistungsdaten (Fahrgeschwindigkeit, Beschleunigungswerte, Lastaufnahme, und dgl.) konfiguriert sind, können Gruppen von Transportfahrzeugen mit unterschiedlichen Leistungsdaten eingesetzt werden. Dies kann sich von Vorteil erweisen, wenn im Kommissionierlager unterschiedliche Temperaturzonen vorgesehen sind. In diesem Fall können die Transportfahrzeuge der ersten Gruppe und zweiten Gruppe eine unterschiedliche Steuerelektronik oder Räder mit unterschiedlichen Materialeigenschaften aufweisen.

Die Bereitstellung von Warenträgerstapelgruppen umfasst die Bereitstellung von bevorzugt sortenreinen Warenträgerstapelgruppen. Die Warenträgerstapelgruppen umfassen nebeneinander und übereinander angeordnete (gestapelte) Warenträger. Insbesondere bilden die Warenträgerstapelgruppen übereinander liegende Stapellagen, welche jeweils mehrere nebeneinander angeordnete Warenträger umfassen. Die Warenträger sind innerhalb einer Stapellage entweder gleich oder verschieden ausgerichtet. Die Stapellagen können wiederum gleich oder verschieden zusammengesetzt oder verschieden ausgerichtet vorliegen. Handelt es sich um eine "sortenreine" Warenträgerstapelgruppe, so enthalten die Warenträger dieser Warenträgerstapelgruppe dieselben Waren. Auch wenn dies eher der Ausnahmefall ist, so kann die Bereitstellung von Warenträgerstapelgruppen auch die Bereitstellung von gemischten Warenträgerstapelgruppen umfassen. Eine gemischte Warenträgerstapelgruppe umfasst Warenträger mit unterschiedlichen Waren. Dabei können in der Warenträgerstapelgruppe die unteren Warenträger eine erste Ware und die oberen Warenträger eine zweite Ware enthalten.

Um die Transportsicherheit hoher Warenträgerstapelgruppen und auch dynamische Fahrbewegungen der Transportfahrzeuge zu gewährleisten, werden Transportsicherungen verwendet. Auch kann durch die Verwendung der Transportsicherungen ein Entladevorgang zuverlässiger durchgeführt werden.

Die Transportsicherungen sind an wenigstens einigen der autonom verfahrbaren, fahrerlosen Transportfahrzeugen oder an wenigstens einigen der mobilen Transportladehilfen vorgesehen. Die jeweilige Transportsicherung dient der Lagestabilisierung einer Warenträgerstapelgruppe, wenn diese auf der mobilen Transportladehilfe aufgenommen ist und transportiert und/oder entladen wird.

Eine Transportladehilfe kann auch als Quellladehilfsmittel verstanden werden.

Nach einer ersten Ausführung, weist die Transportladehilfe Seitenwände und einen Bodenwandteil auf. Es wird eine (einzelne) Warenträgerstapelgruppe zwischen den Seitenwänden auf dem Bodenwandteil aufgenommen. Wird die (einzelne) Warenträgerstapelgruppe durch ein Transportfahrzeug transportiert oder werden Warenträger von der Transportladehilfe entladen, kann eine Verlagerung der Warenträger oder Warenträgerstapelgruppe vermieden oder zumindest begrenzt werden.

Nach einer zweiten Ausführung, weist die Transportladehilfe einen Bodenwandteil und das Transportfahrzeug Seitenwände auf. Es wird eine (einzelne) Warenträgerstapelgruppe zwischen den Seitenwänden auf dem Bodenwandteil aufgenommen. Wird die (einzelne) Warenträgerstapelgruppe durch ein Transportfahrzeug transportiert oder werden Warenträger von der Transportladehilfe entladen, kann eine Verlagerung der Warenträger oder Warenträgerstapelgruppe vermieden oder zumindest begrenzt werden.

Nach beiden Ausführungen bilden die Seitenwände die Transportsicherung und dienen demnach der Lagestabilisierung der Warenträger / Warenträgerstapelgruppe. Erst durch die Verwendung der beschriebenen Transportsicherung können Warenträger schlechter Qualität, beispielsweise durch Feuchtigkeitsaufnahme, Beschädigungen, und dgl., als Warenträgerstapelgruppe einerseits zwischen einem Anlieferbereich und einem Lagerbereich und andererseits zwischen einem Lagerbereich und einem Auftragsbearbeitungsbereich transportiert werden.

In einem der Verfahrensschritte ist es vorgesehen, dass leere Transportladehilfen durch die autonom verfahrbaren, fahrerlosen Transportfahrzeuge zu einer Beladestation transportiert und dort entweder an einer oder mehreren automatisiert betriebenen Beladevorrichtung(en) oder auf einer Pufferfläche nahe der Beladevorrichtung(en) bereitgestellt werden. Die Pufferfläche ist auf einem Boden ausgebildet.

Die Transportladehilfen werden nach der Entnahme des letzten Warenträgers / Warenträgerstapels von der Entladestation zurück zur Beladestation transportiert und dort die leeren Transportladehilfen entweder an einer automatisiert betriebenen Beladevorrichtung oder auf der Pufferfläche bereitgestellt. Grundsätzlich kann aber auch ein Lieferant leere Transportladehilfen anliefern, welche im Anlieferbereich übernommen und zur Beladestation transportiert werden.

Das Beladen einer leeren Transportladehilfe mit einer (einzigen) Warenträgerstapelgruppe kann besonders einfach und effizient durchgeführt werden.

Die Warenträgerstapelgruppe(n) wird auf einer Fördertechnik zu der einen oder den mehreren Beladevorrichtung(en) transportiert und durch die eine oder den mehreren Beladevorrichtung(en) "unverändert" auf die leere(n) Transportladehilfe(n) umgeladen, nicht aber aus der Warenträgerstapelgruppe Warenträgerstapel oder einzelne Warenträger manipuliert. Dies erweist sich in mehreren Aspekten von Vorteil:
- Erstens erweist es sich bei Warenträgern aus Karton von Vorteil, da die üblicherweise im Bereich der Behälterwände vorhandenen Stapelnasen und Stapelausnehmungen zur gegenseitigen Lagefixierung der übereinander gestapelten Warenträger im Eingriff bleiben und durch mehrmaliges Abheben und Aufsetzen von Warenträgern hervorgerufene Beschädigungen an den Stapelnasen und Stapelausnehmungen vermieden werden.
- Zweitens erweist es sich von Vorteil, wenn die Warenträger aus Kunststoff hergestellt sind, da die üblicherweise im Bereich der Behälterwände vorhandenen Stapelränder zur gegenseitigen Lagefixierung der übereinander gestapelten Warenträger im Eingriff bleiben und durch mehrmaliges Abheben und Aufsetzen von Warenträgern hervorgerufene Abnutzungen an den Stapelrändern vermieden werden.
- Drittens kann die Beladevorrichtung besonders einfach aufgebaut werden.
- Viertens kann die Beladung sehr rasch durchgeführt werden, was insbesondere dann von wesentlichem Vorteil ist, wenn eher weniger verschiedene Waren und eine hohe Menge an Waren kommissioniert werden, wie dies beispielweise im Lebensmittelbereich der Fall sein kann. Dabei werden innerhalb eines eingeschränkten Zeitfensters die Waren von verschiedensten Lieferanten und in Großmengen angeliefert. Die Waren müssen jedoch innerhalb kürzester Zeit in den Lagerbereich transportiert und danach kommissioniert werden. Nachdem die (einzelne) Warenträgerstapelgruppe "unverändert" aus dem Anlieferbereich zu der Beladestation transportiert und an einer oder mehreren Beladevorrichtungen auf die leere Transportladehilfen umgeladen werden, kommt es zu keinen Verzögerungen in der Abarbeitung der angelieferten Waren.

Die Transportladehilfe wird mit einer bevorzugt "unverpackten" Warenträgerstapelgruppe beladen. Bei einer "unverpackten" Warenträgerstapelgruppe handelt es sich um eine Warenträgerstapelgruppe ohne zusätzlicher Verpackungsfolie (Stretchfolie oder Schrumpffolie), mit welcher die Warenträgerstapelgruppe verpackt sein kann, oder ohne zusätzlichem Umreifungsband, mit welchem die Warenträgerstapelgruppe umreift sein kann. Eine Verpackungsfolie oder ein Umreifungsband kann beispielweise vor dem Beladen der Transportladehilfe entfernt worden sein.

Die nunmehr (bevorzugt mit einer "unverpackten" Warenträgerstapelgruppe) beladene Transportladehilfe wird nach der Beladung mit einem der Transportfahrzeuge von der Beladestation im Anlieferbereich zum Lagerbereich transportiert und dort auf einen freien Lagerplatz abgestellt. Das Transportfahrzeug umfasst eine Ladeplattform, mit welcher die Transportladehilfe auf dem Transportfahrzeug übernommen und mit welcher die Transportladehilfe von dem Transportfahrzeug abgegeben sowie während der Fahrbewegung auf dem Transportfahrzeug abgestützt werden kann. Die Ladeplattform kann hierzu beispielweise relativ gegenüber dem Fahrgestell heb- und senkbar ausgebildet sein.

Die Transportladehilfen werden im Lagerbereich auf Lagerplätzen abgestellt. Die Lagerplätze sind auf einer Lagerfläche bevorzugt auf einem Boden im Lagerbereich ausgebildet. Im Lagerbereich befinden sich Transportladehilfen, welche noch mit einem Warenträger, einigen Warenträgern oder einem vollständigen (bevorzugt "unverpackten") Warenträgerstapel beladen sind. Während einige der teilentladenen Transportladehilfen nach einer Entladung aus dem Auftragsbearbeitungsbereich zurück in den Lagerbereich transportiert werden, werden die vollständig beladenen Transportladehilfen direkt aus dem Anlieferbereich in den Lagebereich transportiert.

Der Lagerbereich ist über einige der Transportfahrzeuge des Transportsystems mit der Beladestation im Anlieferbereich und über einige der Transportfahrzeuge des Transportsystems mit der Entladestation im Auftragsbearbeitungsbereich fördertechnisch verbunden. Die Entladestation im Auftragsbearbeitungsbereich kann zusätzlich über einige der Transportfahrzeuge mit der Beladestation im Anlieferbereich fördertechnisch verbunden sein.

Schließlich wird zur Bearbeitung eines von mehreren Kommissionieraufträgen (welche an einem Auftragsrechner elektronisch erfasst werden) zumindest eine die benötigten (gleichen) Waren / Warenträger enthaltende Transportladehilfe mit einem der Transportfahrzeuge vom Lagerbereich zur Entladestation transportiert. Werden verschiedene Waren / Warenträger benötigt, so werden die diese Waren / Warenträger enthaltenden Transportladehilfen mit mehreren Transportfahrzeugen vom Lagerbereich zur Entladestation transportiert. Die Entladestation umfasst eine oder mehrere automatisiert betriebene Entladevorrichtungen, mittels welcher das Entladen einer oder mehrerer der Transportladehilfe(n) durch Entnahme der für die Bearbeitung des genannten Kommissionierauftrags benötigten Warenträger und die Zusammenstellung der Warenträger auf einem oder mehreren Zielladehilfsmitteln automatisch erfolgt, daher ohne manuelle Bearbeitungsschritte.

Beispielweise umfasst ein Kommissionierauftrag von einer ersten Ware 24 Warenträger und von einer zweiten Ware 18 Warenträger.

Ein erstes Transportfahrzeug transportiert eine Transportladehilfe mit der Warenträgerstapelgruppe enthaltend die erste Ware vom Lagerbereich zur Entladestation und ein zweites Transportfahrzeug transportiert eine Transportladehilfe mit einer Warenträgerstapelgruppe enthaltend die zweite Ware vom Lagerbereich zur Entladestation.

Die Transportladehilfen werden nacheinander an einer einzigen Entladevorrichtung oder nebeneinander an einer einzigen Entladevorrichtung oder parallel an mehreren Entladevorrichtungen bereitgestellt.

Wird an der oder den Entladevorrichtung(en) noch ein vorangegangener Kommissionierauftrag bearbeitet, so kann die oder können die Transportladehilfen von dem oder den Transportfahrzeug(en) vorerst auf einer Pufferfläche nahe der Entladevorrichtung(en) abgestellt werden. Sobald die Entladevorrichtung eine Transportladehilfe des vorangegangenen Kommissionierauftrags entladen und die Transportladehilfe von dieser Entladevorrichtung abtransportiert wurde, kann eine Transportladehilfe des gegenwärtigen Kommissionierauftrags mit einem Transportfahrzeug von der Pufferfläche zur Entladevorrichtung transportiert und dort bereitgestellt werden.

Sodann wird die Transportladehilfe, welche an der oder den automatisiert betriebenen Entladevorrichtung(en) bereitgestellt wird (werden), von der Entladevorrichtung durch Entnahme der für die Bearbeitung eines Kommissionierauftrags benötigten Warenträger entladen.

Das Entladen einer oder mehrerer der Transportladehilfe(n) kann die Entnahme eines einzelnen Warenträgers umfassen. Befindet sich der Warenträger in einem Warenträgerstapel, so wird der oberste Warenträger im Stapel entnommen. Das Entladen einer oder mehrerer der Transportladehilfe(n) kann die Entnahme eines Warenträgerteilstapels aus zumindest zwei übereinander gestapelten Warenträgern umfassen. Befindet sich die Warenträger in einem Warenträgerstapel, so werden die oberen Warenträger im Stapel als Teilstapel entnommen. Das Entladen einer oder mehrerer der Transportladehilfe(n) kann gegebenenfalls sogar die Entnahme eines gesamten Warenträgerstapels aus sämtlichen übereinander gestapelten Warenträgern umfassen.

Nach letzteren Ausführungen wird ein Teilstapel oder gesamter Warenträgerstapel aus der Warenträgerstapelgruppe von der Entladevorrichtung "unverändert" von der Transportladehilfe entladen, nicht aber aus der Warenträgerstapelgruppe einzelne Warenträger manipuliert. Dies erweist sich in mehreren Aspekten von Vorteil:
- Erstens erweist es sich bei Warenträger aus Karton von Vorteil, da die üblicherweise im Bereich der Behälterwände vorhandenen Stapelnasen und Stapelausnehmungen zur gegenseitigen Lagefixierung der übereinander gestapelten Warenträger im Eingriff bleiben und durch mehrmaliges Abheben und Aufsetzen von Warenträgern hervorgerufene Beschädigungen an den Stapelnasen und Stapelausnehmungen vermieden werden.
- Zweitens erweist es sich von Vorteil, wenn die Warenträger aus Kunststoff hergestellt sind, da die üblicherweise im Bereich der Behälterwände vorhandenen Stapelränder zur gegenseitigen Lagefixierung der übereinander gestapelten Warenträger im Eingriff bleiben und durch mehrmaliges Abheben und Aufsetzen von Warenträgern hervorgerufene Abnutzungen an den Stapelrändern vermieden werden.
- Drittens kann die Entladevorrichtung besonders einfach aufgebaut werden.
- Viertens kann die Entladung sehr rasch durchgeführt werden, was insbesondere dann von wesentlichem Vorteil ist, wenn eher weniger verschiedene Waren und eine hohe Menge an Waren kommissioniert werden, wie dies beispielweise im Lebensmittelbereich der Fall sein kann.

Nach dem oder mit dem Entladen der Transportladehilfe(n) werden die Warenträger auf einem oder mehreren Zielladehilfsmitteln zum genannten Kommissionierauftrag zusammengestellt.

Das Entladen der Transportladehilfen zu einem Kommissionierauftrag kann auch in einer durch das Steuerungssystem ermittelten Reihenfolge (Sequenz) erfolgen. Die Warenträger / Warenträgerstapel werden in dieser Reihenfolge an der Entladestation bereitgestellt und in dieser Reihenfolge auf das Zielladehilfsmittel umgeladen. Andererseits kann auch über die Transportfahrzeuge eine Reihenfolge in der Bereitstellung der Transportladehilfen an der Entladestation hergestellt werden.

Es können auf einem Zielladehilfsmittel (Warenausgangseinheit) entsprechend einem Kommissionierauftrag entweder Warenträger einer einzigen Ware oder Warenträger verschiedener Waren zusammengestellt werden.

Auch wenn die Erfindung nicht auf die Anwendung im Frischebereich einschränkend zu verstehen ist, so ist dies das bevorzugte Einsatzgebiet. Dies vor allem deswegen, weil verderbliche Waren, wie beispielsweise Obst und Gemüse, einen schnellen Warenumschlag erfordern und bei denen üblicherweise nur eine beschränkte Anzahl von unterschiedlichen Sorten gleichzeitig kommissioniert werden müssen. Grundsätzlich können die Vorteile dieser Anwendung auch im Bereich von "general merchandise" oder im Textilbereich gut umgesetzt werden.

Es kann sich auch von Vorteil erweisen, wenn die Bereitstellung von Warenträgerstapelgruppen die Bereitstellung von Warenträgerstapelgruppen auf Anlieferladungsträgern umfasst und das Beladen einer der leeren Transportladehilfen mit einer der Warenträgerstapelgruppen das Beladen einer der leeren Transportladehilfen mit einer der Warenträgerstapelgruppen auf einem Anlieferladungsträger umfasst. Durch diese Maßnahme kann die Beladung der leeren Transportladehilfen nochmals vereinfacht werden und es bleibt die Stabilität der Warenträgerstapelgruppe unverändert erhalten. Eine kostspielige und zeitaufwendige Depalettierung kann entfallen.

Eine besonders einfache Ausgestaltung ergibt sich, wenn die Zusammenstellung der Warenträger zum genannten Kommissionierauftrag derart durchgeführt wird, dass ein an der Entladevorrichtung aus der (bevorzugt sortenreinen) Warenträgerstapelgruppe entnommener einzelner Warenträger oder ein aus der (bevorzugt sortenreinen) Warenträgerstapelgruppe entnommener Warenträgerstapel durch die Entladevorrichtung auf ein Zielladehilfsmittel übergeben wird. Ein solche Variante bietet sich vor allem an, wenn das Kommissionierlager besonders kompakt aufgebaut werden muss. Die eine oder mehreren Entladevorrichtung(en) bildet / bilden nach dieser Ausführung eine Kommissioniervorrichtung zum Entladen der Transportladehilfe(n) und zum Zusammenstellen (Beladen) von einem oder mehreren Zielladehilfsmittel(n) mit Warenträgern gemäß Kommissionierauftrag / Kommissionieraufträgen.

Günstig erweisen sich auch die Verfahrensschritte
i) Rücktransport einer Transportladehilfe nach der Entnahme der Warenträger von der Entladestation zurück in den Lagerbereich, sollten nicht alle Warenträger aus der genannten Transportladehilfe entnommen worden sein, oder
ii) Transport einer Transportladehilfe nach der Entnahme der Warenträger von einer ersten Entladevorrichtung zu einer zweiten Entladevorrichtung, sollten nicht alle Warenträger aus der genannten Transportladehilfe entnommen worden sein und sollten diese Warenträger zu einem Kommissionierauftrag an der zweiten Entladevorrichtung benötigt werden, oder
iii) Transport einer Transportladehilfe nach der Entnahme der Warenträger von der Entladevorrichtung zu einer Wartezone in der Entladestation, sollten nicht alle Warenträger aus der genannten Transportladehilfe entnommen worden sein und sollten diese Warenträger zu einem bereits avisierten Kommissionierauftrag an der genannten Entladevorrichtung oder einer der Entladevorrichtungen benötigt werden, oder
iv) Rücktransport einer Transportladehilfe nach der Entnahme zu der Beladestation und Bereitstellung der Transportladehilfe entweder an der automatisiert betriebenen Beladevorrichtung oder auf der Pufferfläche, sollten alle Warenträger von der genannten Transportladehilfe entnommen worden sein,
v) Lagestabilisierung einer angebrochenen Warenträgerstapelgruppe, sollten nicht alle Warenträger aus der genannten Transportladehilfe entnommen worden sein, durch die Transportsicherung während der genannten Transportbewegung nach Fall i), ii) und iii).

Der Leitrechner steuert die Transportfahrzeuge abhängig von den aktiv zu bearbeitenden Kommissionieraufträgen an. Werden nicht sämtliche Waren zu einem ersten Kommissionierauftrag benötigt und reichen die restlichen Waren zu einem zweiten Kommissionierauftrag aus, so kann ein Transportfahrzeug die diese Waren / Warenträger enthaltende Transportladehilfe von der betreffenden Entladevorrichtung beispielweise zu einer anderen Entladevorrichtung transportieren, wenn diese zeitnah benötigt werden. Andererseits ist auch eine Zwischenpufferung der Transportladehilfe einerseits auf einer Pufferfläche nahe der Entladevorrichtung möglich und andererseits in einer die Entladestation aufweisenden Wartezone, welche in einer kürzeren Distanz zur Entladevorrichtung liegt als der Lagerbereich. Leere Transportladehilfen werden stattdessen unmittelbar und auf kürzestem Wege zur Beladestation transportiert. Somit ergeben sich wegoptimierte Bewegungsfahrten der Transportfahrzeuge.

Es erweisen sich auch die nachfolgenden Schritte als günstig
- Bereitstellung einer ersten Temperaturzone im Lagerbereich, in welchem die Transportladehilfen mit den Warenträgerstapelgruppen umfassend nebeneinander und übereinander angeordnete Warenträger enthaltend Waren einer ersten Warengruppe,
- Bereitstellung einer zweiten Temperaturzone im Lagerbereich, in welchem die Transportladehilfen mit den Warenträgerstapelgruppen umfassend nebeneinander und übereinander angeordnete Warenträger enthaltend Waren einer zweiten Warengruppe,
- Definition einer ersten Warengruppe und einer zweiten Warengruppe, welcher ersten Warengruppe Waren einer ersten Lagertemperatur zugeordnet sind und welcher zweiten Warengruppe Waren einer zweiten Lagertemperatur zugeordnet sind, und Erfassen von Daten enthaltend Daten über die erste Warengruppe, insbesondere eine erste Lagertemperatur für die Waren, und die zweite Warengruppe, insbesondere eine zweite Lagertemperatur für die Waren, an einem Rechnersystem,
- Identifizierung der Warenträgerstapelgruppe und/oder Transportladehilfen mittels einer im Anlieferbereich vorgesehenen Erfassungsvorrichtung durch Lesen eines Datenträgers, welcher Datenträger jeweils auf den Warenträgerstapelgruppen und/oder Transportladehilfen angebracht ist,
- Selektiver Transport der jeweils mit der Warenträgerstapelgruppe beladenen Transportladehilfen mit den autonom verfahrbaren, fahrerlosen Transportfahrzeugen entweder in die erste Temperaturzone oder zweite Temperaturzone und Lagestabilisierung der Warenträgerstapelgruppe durch die Transportsicherung während der Transportbewegung,
- Lagerung der Transportladehilfen mit der Warenträgerstapelgruppe umfassend nebeneinander und übereinander angeordnete Warenträger enthaltend Waren der ersten Warengruppe in der ersten Temperaturzone,
- Lagerung der Transportladehilfen mit der Warenträgerstapelgruppe umfassend nebeneinander und übereinander angeordnete Warenträger enthaltend Waren der zweiten Warengruppe in der zweiten Temperaturzone.

Durch die selektive Lagerung der Waren abhängig von der Warengruppe wird dem hohen Qualitätsanspruch entsprochen. Beispielweise kann im Lebensmittelbereich (Frischebereich) die erste Temperaturzone einen Temperaturbereich von 2°C bis 7°C und die zweite Temperaturzone einen Temperaturbereich von 10°C bis 15°C aufweisen.

Von Vorteil sind auch die Schritte
- Transport von einer oder mehreren die zu einem ersten Kommissionierauftrag benötigten Warenträger enthaltenden Transportladehilfe(n) von der ersten Temperaturzone und Transport von einer oder mehreren die zu einem zweiten Kommissionierauftrag benötigten Warenträger enthaltenden Transportladehilfe(n) von der zweiten Temperaturzone zur Entladestation mit einer gemeinsam genutzten, automatisiert betriebenen Entladevorrichtung und Lagestabilisierung der Warenträgerstapelgruppe durch die Transportsicherung während der Transportbewegung,
- Bereitstellung genannter Transportladehilfe(n) zum ersten Kommissionierauftrag entweder an der automatisiert betriebenen Entladevorrichtung oder auf einer Pufferfläche nahe der Entladevorrichtung durch das (die) autonom verfahrbare(n), fahrerlose(n) Transportfahrzeug(e),
- Bereitstellung genannter Transportladehilfe(n) zum zweiten Kommissionierauftrag entweder an der automatisiert betriebenen Entladevorrichtung oder auf einer Pufferfläche nahe der Entladevorrichtung durch das (die) autonom verfahrbare(n), fahrerlose(n) Transportfahrzeug(e),
- Sequentielle Zusammenstellung von Warenträgern auf einem ersten Zielladehilfsmittel mit mehreren Warenträgern enthaltend Waren einer ersten Warengruppe, und Zusammenstellung von Warenträgern auf einem zweiten Zielladehilfsmittel mit mehreren Warenträgern enthaltend Waren einer zweiten Warengruppe an der Entnahmestation mit einer gemeinsam genutzten, automatisiert betriebenen Entladevorrichtung.

Unabhängig davon aus welcher Temperaturzone die Waren / Warenträger ausgelagert werden, können diese an derselben Entnahmestation manipuliert werden. Dadurch vereinfacht sich die Komplexität des Kommissioniersystems und reduzieren sich auch die Anschaffungskosten.

Von Vorteil sind auch die Verfahrensmaßnahmen umfassend die Schritte
- Bereitstellung von Stapelladehilfen jeweils zur Aufnahme und gegebenenfalls Lagestabilisierung eines aus den Warenträgern gemäß dem genannten Kommissionierauftrag zusammengestellten Auftragsstapels, wovon die Stapelladehilfen zumindest eine erste Stapelladehilfe und/oder zumindest eine zweite Stapelladehilfe umfassen, und welche ihrerseits einen Bodenwandteil und gegebenenfalls an diesem vorragende Seitenwände umfassen,
- Bestücken der ersten Stapelladehilfe mit einem Zielladehilfsmittel an einer Bestückungsstation mit einer oder mehreren automatisiert betriebenen Bestückungsvorrichtung(en), indem das Zielladehilfsmittel auf dem Bodenwandteil abgestellt wird, sofern eine erste Stapelladehilfe im Kommissionierlager verwendet wird, und/oder
- Definition der zweiten Stapelladehilfe als Zielladehilfsmittel, sofern eine zweite Stapelladehilfe im Kommissionierlager verwendet wird.

Die erste Stapelladehilfe und/oder zweite Stapelladehilfe kann nach einer Ausführung lediglich der Aufnahme eines aus den Warenträgern gemäß dem genannten Kommissionierauftrag zusammengestellten Auftragsstapels dienen und weisen lediglich einen Bodenwandteil auf, nicht aber an diesem vorragende Seitenwände. Die Seitenwände werden nach dieser Ausführung an wenigstens einigen der Transportfahrzeuge ausgebildet, wie oben beschrieben, welche der Lagestabilisierung eines aus den Warenträgern gemäß dem genannten Kommissionierauftrag zusammengestellten Auftragsstapels dienen, wenn dieser auf dem Bodenwandteil aufgenommen ist.

Die Verwendung der ersten Stapelladehilfe oder zweiten Stapelladehilfe erlaubt den zuverlässigen Transport des Auftragsstapels unabhängig davon welche Warenträger gestapelt wurden. So können die Warenträger, insbesondere Behälter und Kartons gemischt gestapelt werden. Die Praxis hat gezeigt, dass es ausreichend ist, wenn die erste Stapelladehilfe / zweite Stapelladehilfe eine erste Stapelwand und eine zweite Stapelwand aufweisen. Eine Stapellage wird ausgehend von der Ecke von hinten nach vorne und von links nach rechts oder von rechts nach links aufgefüllt. Andererseits kann eine Stapellage ausgehend von der Ecke von links nach rechts oder von rechts nach links und hinten nach vorne aufgefüllt werden. Es kann ein Warenträger durch die Transfervorrichtung exakt in der Ecke positioniert und gestapelt werden. Der Auftragsstapel bekommt auf diese Weise eine hohe Stabilität.

Eine erste Stapelladehilfe kann im Kommissionierlager eingesetzt werden, wenn das Zielladehilfsmittel mit dem Auftragsstapel zum Kunden geliefert wird. Eine zweite Stapelladehilfe kann im Kommissionierlager eingesetzt werden, wenn das Zielladehilfsmittel durch einen Auslieferladungsträger, bevorzugt einen Rollcontainer, eine Palette und dgl. ausgewechselt werden soll. Der Auslieferladungsträger wird beispielweise in der Ladungssicherungsstation mit dem Auftragsstapel beladen und an den Kunden geliefert.

Die erste Stapelladehilfe kann ein Transportgestell, einen Boden und nach einer möglichen Ausführung an diesem vorragende Seitenwände umfassen, wobei das Transportgestell einen Transportrahmen ausbildet, gegen welchen eine Ladeplattform des Transportfahrzeuges angestellt werden kann, und wobei der Boden einen Bodenwandteil ausbildet, auf welchem ein Zielladehilfsmittel, insbesondere eine Palette, mit dem auf diesem gestapelten Auftragsstapel abgestellt werden kann, und die Seitenwände eine Transportsicherung zur Lagestabilisierung eines Auftragsstapels bilden, wenn dieser mit dem Zielladehilfsmittel auf dem Bodenwandteil aufgenommen ist.

Die zweite Stapelladehilfe kann ein Transportgestell, einen Boden und nach einer möglichen Ausführung an diesem vorragende Seitenwände umfassen, wobei das Transportgestell einen Transportrahmen ausbildet, gegen welchen eine Ladeplattform des Transportfahrzeuges angestellt werden kann, und wobei der Boden einen Bodenwandteil aufweist, welcher auf seiner oberen Seite vorragende und durch Aufnahmekanäle voneinander getrennte Abstellklötze ausbildet, auf welcher die Warenträger des Auftragsstapels abgestellt werden können, sodass die zumindest eine zweite Stapelladehilfe das Zielladehilfsmittel bildet und die Seitenwände eine Transportsicherung zur Lagestabilisierung eines Auftragsstapels bilden, wenn dieser auf dem Bodenwandteil aufgenommen ist.

Bevorzugt wird das Transportfahrzeug unterhalb der ersten / zweiten Stapelladehilfe und derart gegenüber der ersten / zweiten Stapelladehilfe positioniert, dass die Ladeplattform des Transportfahrzeuges gegen den Transportrahmen angestellt werden kann.

Es erweisen sich auch folgende Schritte von Vorteil
- Transport von Stapelladehilfen durch die autonom verfahrbaren, fahrerlosen Transportfahrzeuge zur Entladestation und Bereitstellung von einer oder mehreren Stapelladehilfe(n) entweder an einer oder mehreren automatisiert betriebenen Entladevorrichtung(en) oder auf einer Pufferfläche nahe der Entladevorrichtung(en),
- Zusammenstellung der Warenträger gemäß dem genannten Kommissionierauftrag zum Auftragsstapel auf dem Zielladehilfsmittel in der ersten Stapelladehilfe oder auf dem Bodenwandteil der zweiten Stapelladehilfe, welche erste Stapelladehilfe oder zweite Stapelladehilfe an der automatisiert betriebenen Entladevorrichtung(en) bereitgestellt wird.

Ebenso wie die Transportladehilfen können auch die Stapelladehilfen durch die autonom verfahrbaren, fahrerlosen Transportfahrzeugen zwischen der Beladestation und Entladestation transportiert werden. Es können entweder jene Transportfahrzeuge verwendet werden, welche auch die Transportladehilfen transportieren, oder es werden zusätzliche autonom verfahrbare, fahrerlose Transportfahrzeuge bereitgestellt, welche den Transport der Stapelladehilfen übernehmen.

Im Kommissionierlager können (nicht automatisch kommissionierbare) Warenträger, so genannte "ugly Warenträger" auch manuell kommissioniert werden. Während ein Großteil der Warenträger, nämlich mehr als 90% des gesamten Warenträgersortiments durch die automatisiert betriebene(n) Entladevorrichtung(en) automatisch kommissioniert werden, wird der verbleibende Anteil der Warenträger an der (den) teilautomatisiert betriebenen Entladevorrichtung(en) manuell kommissioniert. Ein automatisches Kommissionieren von Warenträgern ist insbesondere möglich, wenn diese eine erste Längenabmessung von etwa 600mm oder zweite Längenabmessung von etwa 300mm oder eine dritte Längenabmessung zwischen 600mm und 300mm aufweisen. Eine Breite kann zwischen von 300mm und 400mm betragen. Weisen die Warenträger eine Längenabmessung von weniger als 300mm auf und/oder weisen die Warenträger eine geringe Formstabilität auf, werden diese manuell kommissioniert.

Die Bearbeitung eines Kommissionierauftrags kann in vorteilhafter Weise die Schritte umfassen
- Transport einer oder von mehreren die zum Kommissionierauftrag benötigten Warenträger enthaltenden Transportladehilfe(n) vom Lagerbereich zur Entladestation und Bereitstellung genannter Transportladehilfe(n) entweder an einer oder mehreren teilautomatisiert betriebenen Entladevorrichtung(en) oder auf einer Pufferfläche nahe der Entladevorrichtung(en) durch ein oder mehrere autonom verfahrbare(s), fahrerlose(s) Transportfahrzeug(e) und Lagestabilisierung der Warenträgerstapelgruppe durch die Transportsicherung während der Transportbewegung der beladenen Transportladehilfe(n),
- manuelles Entladen einer oder mehrerer der Transportladehilfe(n), welche an der oder den teilautomatisiert betriebenen Entladevorrichtung(en) bereitgestellt wird (werden), durch Entnahme der für die Bearbeitung des genannten Kommissionierauftrags benötigten Warenträger, und
- manuelle Zusammenstellung der Warenträger auf einem oder mehreren Zielladehilfsmitteln zum genannten Kommissionierauftrag, wenn das oder die Zielladehilfsmitteln an der oder die teilautomatisiert betriebenen Entladevorrichtung(en) bereitgestellt wird (werden).

Die Bereitstellung genannter Transportladehilfe(n) an einer oder mehreren teilautomatisiert betriebenen Entladevorrichtung(en) kann die Schritte umfassen
- Übernahme einer Transportladehilfe von einem autonom verfahrbaren, fahrerlosen Transportfahrzeug auf eine Hubplattform der Entladevorrichtung(en),
- Andienen der Warenträger auf einem Andienungsniveau durch Anheben der Transportladehilfe, welche auf der Hubplattform abgestellt ist, um ein ergonomisches Entladen der Warenträger durch eine Kommissionierperson zu ermöglichen.

Dadurch ist auch bei einer manuellen Kommissionierung (Entladen der Warenträger von der Transportladehilfe und Beladen des Zielladehilfsmittels mit Warenträger) ein ergonomisches Arbeiten möglich.

Das Verfahren zum Lagern und Kommissionieren von Waren kann die folgenden Schritte umfassen
- Transport von leeren Zielladehilfsmitteln durch die autonom verfahrbaren, fahrerlosen Transportfahrzeuge zur Entladestation und Bereitstellung genannter leerer Zielladehilfsmittel entweder an einer oder mehreren teilautomatisiert betriebenen Entladevorrichtung(en) oder auf einer Pufferfläche nahe der Entladevorrichtung(en) durch ein oder mehrere autonom verfahrbare(s), fahrerlose(s) Transportfahrzeug(e),
- manuelle Zusammenstellung der Warenträger auf einem oder mehreren leeren Zielladehilfsmitteln zum genannten Kommissionierauftrag, wenn das oder die leere(n) Zielladehilfsmitteln an der oder die teilautomatisiert betriebenen Entladevorrichtungen) bereitgestellt wird (werden).

In diesem Fall werden verschiedene Warenträger (Waren) zu einem Kommissionierauftrag auf einem Zielladehilfsmittel zusammengestellt.

Das Verfahren zum Lagern und Kommissionieren von Waren kann die folgenden Schritte umfassen
- Transport von teilbeladenen Zielladehilfsmitteln durch die autonom verfahrbaren, fahrerlosen Transportfahrzeuge von der automatisiert betriebenen Entladevorrichtung zu der teilautomatisiert betriebenen Entladevorrichtung oder zu einer Pufferfläche nahe der teilautomatisiert betriebenen Entladevorrichtung(en), nachdem an der automatisiert betriebenen Entladevorrichtung die Warenträger auf dem teilbeladenen Zielladehilfsmittel zusammengestellt wurden und sofern zum genannten Kommissionierauftrag noch Warenträger benötigt werden, welche über die Transportladehilfen an der teilautomatisiert betriebenen Entladevorrichtung(en) bereitgestellt werden,
- manuelle Zusammenstellung der Warenträger auf einem oder mehreren teilbeladenen Zielladehilfsmitteln zum genannten Kommissionierauftrag, wenn das oder die teilbeladene(n) Zielladehilfsmitteln an der oder die teilautomatisiert betriebenen Entladevorrichtung(en) bereitgestellt wird (werden).

Der Kommissionierauftrag umfasst Warenträger (Waren), welche an einer automatisiert betriebenen Entladevorrichtung automatisch kommissioniert werden können, und Warenträger, welche an einer teilautomatisiert betriebenen Entladevorrichtung manuell kommissioniert werden müssen. Zuerst werden auf dem Zielladehilfsmittel die Warenträger (Waren) an der automatisiert betriebenen Entladevorrichtung kommissioniert. Danach wird das Zielladehilfsmittel mit dem "begonnenen" Auftragsstapel durch ein autonom verfahrbares, fahrerloses Transportfahrzeug zu der teilautomatisiert betriebenen Entladevorrichtung transportiert. Sodann wird dort der Auftragsstapel manuell fertig kommissioniert.

Von Vorteil sind auch die verfahrensgemäßen Schritte
- Transport von Stapelladehilfen durch die autonom verfahrbaren, fahrerlosen Transportfahrzeuge zur Entladestation und Bereitstellung von einer oder mehreren Stapelladehilfe(n) entweder an einer oder mehreren teilautomatisiert betriebenen Entladevorrichtung(en) oder auf einer Pufferfläche nahe der Entladevorrichtung(en),
- Zusammenstellung der Warenträger gemäß dem genannten Kommissionierauftrag zum Auftragsstapel auf dem Zielladehilfsmittel in der ersten Stapelladehilfe oder auf einem Bodenwandteil der zweiten Stapelladehilfe, welche erste Stapelladehilfe oder zweite Stapelladehilfe an der teilautomatisiert betriebenen Entladevorrichtung(en) bereitgestellt wird.

Wie bereits oben beschrieben ist durch die erste Stapelladehilfe / zweite Stapelladehilfe ein zuverlässiger Transport des Auftragsstapels möglich, unabhängig davon welche Warenträger gestapelt wurden. Auch beim manuellen Kommissionieren wird eine Stapellage ausgehend von der Ecke von hinten nach vorne und von links nach rechts oder von rechts nach links aufgefüllt. Andererseits kann eine Stapellage ausgehend von der Ecke von links nach rechts oder von rechts nach links und hinten nach vorne aufgefüllt werden. Es kann ein Warenträger durch die Kommissionierperson exakt in der Ecke positioniert und gestapelt werden. Der Auftragsstapel bekommt auf diese Weise eine hohe Stabilität.

Es erweist sich auch von Vorteil, wenn das Verfahren die Schritte umfasst
- Bereitstellung einer Auftragsstapel-Ladungssicherungsstation entweder mit einer oder mehreren automatisiert betriebenen Ladungssicherungsvorrichtung(en) oder mit einer oder mehreren automatisiert betriebenen Ladungssicherungsvorrichtung(en) und einer Pufferfläche nahe der Ladungssicherungsvorrichtung(en), welche Ladungssicherungsvorrichtung zur Transportsicherung eines Auftragsstapels mit einem Sicherungsmittel ausgebildet ist,
- Transport von jeweils mit einem Auftragsstapel beladenen Stapelladehilfen durch die autonom verfahrbaren, fahrerlosen Transportfahrzeuge zu genannter Auftragsstapel-Ladungssicherungsstation und Bereitstellung von einer oder mehreren Stapelladehilfe(n) entweder an einer oder mehreren automatisiert betriebenen Ladungssicherungsvorrichtung(en) oder auf einer Pufferfläche nahe der Ladungssicherungsvorrichtung(en),
- Entfernen des Auftragsstapels von der Stapelladehilfe durch eine Hebevorrichtung, mit welcher das Zielladehilfsmittel mit dem Auftragsstapel von der ersten Stapelladehilfe abgehoben wird, wenn das Kommissionierlager die erste Stapelladehilfe umfasst, oder mit welcher der Auftragsstapel von der zweiten Stapelladehilfe abgehoben wird, wenn das Kommissionierlager die zweite Stapelladehilfe umfasst,
- Sicherung des Auftragsstapels mit dem Sicherungsmittel durch die automatisiert betriebene Ladungssicherungsvorrichtung, indem das Sicherungsmittel um den Auftragsstapel umfänglich angebracht wird,
- Transport des gesicherten Auftragsstapels, insbesondere durch die autonom verfahrbaren, fahrerlosen Transportfahrzeuge, von der Ladungssicherungsstation zu einem Auslieferbereich,

Transport der entladenen Stapelladehilfen durch die autonom verfahrbaren, fahrerlosen Transportfahrzeuge, umfassend
- Transport der ersten Stapelladehilfe von der Ladungssicherungsstation zur Bestückungsstation mit einer oder mehreren automatisiert betriebenen Bestückungsvorrichtung(en), sofern im Kommissionierlager eine erste Stapelladehilfe verwendet wird, und/oder
- Transport der zweiten Stapelladehilfe von der Ladungssicherungsstation zur Entladestation und Bereitstellung der zweiten Stapelladehilfe(n) entweder an einer automatisiert betriebenen Entladevorrichtung oder auf einer Pufferfläche nahe der Entladevorrichtung, sofern im Kommissionierlager eine zweite Stapelladehilfe verwendet wird.

Es wird eine "zentrale" Ladungssicherungsstation bereitgestellt, zu welcher die Auftragsstapel mit einer ersten Stapelladehilfe / zweiten Stapelladehilfe durch die autonom verfahrbaren, fahrerlosen Transportfahrzeuge transportiert werden. Dort wird der Auftragsstapel mit einem Sicherungsmittel, beispielweise einer Wickelfolie oder einem Verschlussband gesichert. Die "gesicherten" Auftragsstapel können bevorzugt durch die autonom verfahrbaren, fahrerlosen Transportfahrzeuge abtransportiert werden.

Die Aufgabe der Erfindung wird auch durch ein Kommissionierlager zum Lagern und Kommissionieren von Waren enthaltenden und stapelbaren Warenträgern gemäß Anspruch 8 gelöst.

Es ist vorgesehen, dass die Transportladehilfe ein Transportgestell und einen Boden umfasst, wobei das Transportgestell einen Transportrahmen ausbildet, gegen welchen eine Ladeplattform des Transportfahrzeuges angestellt werden kann, und wobei der Boden einen Bodenwandteil ausbildet, auf welchem die Warenträgerstapelgruppe abgestellt werden kann.

Nach einer Ausführung der Erfindung ist vorgesehen, dass die Transportladehilfe zusätzlich Seitenwände aufweist, welche die Transportsicherung zur Lagestabilisierung der Warenträgerstapelgruppe bilden, wenn diese auf dem Bodenwandteil abgestellt ist, und eine erste Seitenwand und eine zweite Seitenwand umfassen, wobei die erste Seitenwand und zweite Seitenwand einen Winkel, insbesondere rechten Winkel, einschließen.

Nach einer Ausführung der Erfindung ist vorgesehen, dass wenigstens einige der autonom verfahrbaren, fahrerlosen Transportfahrzeuge jeweils die Ladeplattform und zu dieser benachbart angeordnete Seitenwände aufweist, und dass die Seitenwände die Transportsicherung zur Lagestabilisierung der Warenträgerstapelgruppe bilden, wenn eines der Transportfahrzeugs und eine der Transportladehilfe zueinander positioniert sind und die Warenträgerstapelgruppe mit der Transportladehilfe auf der Ladeplattform abgestellt ist, und eine erste Seitenwand und eine zweite Seitenwand umfassen, wobei die erste Seitenwand und zweite Seitenwand einen Winkel, insbesondere rechten Winkel, einschließen.

Bevorzugt wird das Transportfahrzeug unterhalb der Transportladehilfe und derart gegenüber der Transportladehilfe positioniert, dass die Ladeplattform des Transportfahrzeuges gegen den Transportrahmen angestellt werden kann.

Es ist vorgesehen, dass der Bodenwandteil sowohl um einen ersten Neigungswinkel (α₁) gegenüber einer zwischen der ersten Seitenwand und zweiten Seitenwand aufgespannten Horizontalebene in Richtung zur ersten Seitenwand nach unten geneigt verläuft, als auch um einen zweiten Neigungswinkel (α₂) gegenüber einer zwischen der ersten Seitenwand und zweiten Seitenwand aufgespannten Horizontalebene in Richtung zur zweiten Seitenwand nach unten geneigt verläuft, wobei die erste Seitenwand und die zweite Seitenwand normal auf den Bodenwandteil ausgerichtet sind.

Die Warenträgerstapelgruppe respektive der Auftragsstapel können nach dieser Ausführung besonders zuverlässig mit der Transportladehilfe respektive Stapelladehilfe transportiert werden.

Eine vorteilhafte Ausgestaltung ergibt sich, wenn das Kommissionierlager eine Vorrichtung zur Erfassung von Daten zu der Warenträgerstapelgruppe und/oder Erfassung von Daten zu dem Warenträger und/oder Erfassung von Daten zu der Ware umfasst, welche durch eine Datenleitung mit dem Steuerungssystem verbunden ist, um dieser die Daten zu der Warenträgerstapelgruppe und/oder die Daten zu dem Warenträger und/oder die Daten zu der Ware zu übermitteln, wobei das Steuerungssystem eine Steuerungslogik umfasst und die Daten zu der Warenträgerstapelgruppe und/oder die Daten zu dem Warenträger und/oder die Daten zu der Ware entsprechend der Steuerungslogik verarbeitet und Steuerbefehle erzeugt, anhand der die Entladevorrichtung(en), insbesondere eine Greifereinheit der Entladevorrichtung, angesteuert wird (werden) und/oder Transportbefehle erzeugt werden, anhand der das/die autonom verfahrbaren, fahrerlosen Transportfahrzeuge angesteuert wird (werden).

Die Daten zu der Warenträgerstapelgruppe können Daten ausgewählt aus der Gruppe umfassend ein Lagenschema der Warenträger in den Stapellagen, ein Lagenbild in der obersten Stapellage und eine Höhe der Warenträgerstapelgruppe enthalten. Die Warenträger innerhalb einer Stapellage können entweder gleich oder verschieden ausgerichtet sein. Auch können die übereinander angeordneten Stapellagen gleich oder verschieden zusammengesetzt werden. Basierend auf diesen Daten ergeben sich Steuerbefehle zu unterschiedlichen Greifposen zum Greifen von Warenträgern durch das Greifersystem der Entladevorrichtung.

Basierend auf diesen Daten können andererseits auch Transportbefehle für unterschiedliche Transportbewegungen zum Transport der Transportladehilfe mit der Warenträgerstapelgruppe durch das autonom verfahrbare, fahrerlose Transportfahrzeug erzeugt werden. Beispielweise kann es sich von Vorteil erweisen, wenn die Warenträger innerhalb einer Stapellage verschieden ausgerichtet sind, dass das Transportfahrzeug die Transportladehilfe an der Entladevorrichtung vorerst in einer ersten Andienungsstellung bereitstellt, um Warenträger einer ersten Ausrichtung zu entnehmen, und danach in einer zweiten Andienungsstellung bereitstellt, um Warenträger einer zweiten Ausrichtung zu entnehmen. Die erste Andienungsstellung und zweite Andienungsstellung sind beispielweise um einen Drehwinkel zueinander um 90° verdreht.

Die Daten zu dem Warenträger können Daten ausgewählt aus der Gruppe umfassend eine Abmessung (Länge, Breite, Höhe) der Warenträger, Material des Warenträgers, Bauform des Warenträgers und eine Qualität des Warenträgers enthalten. Beispielweise können die Warenträger unterschiedliche Abmessungen aufweisen, welche ermittelt werden können, um basierend auf diesen Daten Steuerbefehle zu unterschiedlichen Greifposen zum Greifen von Warenträgern durch das Greifersystem der Entladevorrichtung zu erzeugen. Die Bauform des Warenträgers kann zu Restriktionen in den Greifposen führen, wenn der Auftragsstapel gebildet wird. Während eine erste Bauform eines Warenträgers beispielsweise Stapelnasen / Stapelausnehmungen an Längsseiten umfassen kann, kann eine zweite Bauform eines Warenträgers beispielsweise Stapelnasen / Stapelausnehmungen an Breitseiten umfassen. Eine dritte Bauform eines Warenträgers kann beispielsweise überhaupt keine Stapelnasen / Stapelausnehmungen aufweisen. Gleiches gilt für Warenträger mit oder ohne Tragegriffen, Belüftungslöcher, Zusatzeinlagekarton, Zusatzauskleidung mit Kunststofffolie und dgl.. Die Daten über eine Qualität des Warenträgers können eine unzulässige Verformung, Beschädigung und dgl. betreffen.

Die Daten zu den Waren können Daten ausgewählt aus der Gruppe umfassend Qualitätsmerkmale zu den Waren, Anzahl der Waren in einem Warenträger und eine Lage der Waren beispielweise in einem Blister enthalten. Die Qualitätsmerkmale können beispielweise Daten zu einer Prüfung der Ware über den Befall durch Schimmelpilze, Daten zu einer Prüfung der Ware auf Beschädigungen enthalten, wie zu der Überprüfstation beschrieben wird.

Eine vorteilhafte Ausgestaltung ergibt sich, wenn das Kommissionierlager im Anlieferbereich eine Überprüfstation umfasst, mit
- einer oder mehreren Prüfvorrichtung(en) zum Überprüfen von Qualitätsmerkmalen der Waren in den Warenträgern,
- einer Fördertechnik zum Antransport einer Warenträgerstapelgruppe und zum Abtransport einer Warenträgerstapelgruppe,
- einer Erfassungsvorrichtung zur Identifizierung der Warenträgerstapelgruppe, welche mit dem Steuerungssystem über eine Datenleitung verbunden ist, und
- einer Eingabe- und/oder Ausgabevorrichtung zur Eingabe von Daten aus der Prüfung der Qualitätsmerkmale, welche mit dem Steuerungssystem über eine Datenleitung verbunden ist.

Wird das Kommissionierlager und Verfahren zum Lagern und Kommissionieren im Frischebereich von Lebensmitteln, wo verderbliche Waren, wie beispielsweise Obst und Gemüse, eingesetzt, können an der Prüfvorrichtung Qualitätsmerkmale wie Schimmelpilze, Beschädigungen und dgl. optisch erfasst werden. An der Eingabe- und/oder Ausgabevorrichtung wird das Ergebnis der Prüfung der Qualitätsmerkmale erfasst, beispielweise kann der Lagerarbeiter durch Eingabe "Qualität in Ordnung" oder "Qualität mangelhaft" das Qualitätsmerkmal elektronisch erfassen. Auch ist eine Eingabe der Anzahl entnommener Warenträger möglich, wenn einzelne Warenträger aus der Warenträgerstapelgruppe entfernt werden, weil diese beispielweise verdorbene Waren enthalten.

Gemäß einer Ausgestaltung der Erfindung kann die Überprüfstation entlang der Fördertechnik zum Antransport einer Warenträgerstapelgruppe und zum Abtransport einer Warenträgerstapelgruppe eine automatisiert betriebene Klemm- und Hebevorrichtung umfassen, durch welche die Warenträgerstapelgruppe in einen oberen Warenträgerstapel und einen unteren Warenträgerstapel auftrennbar ist und zwischen dem oberen Warenträgerstapel und dem unteren Warenträgerstapel ein Zugangsbereich entsteht, welcher die Entnahme zumindest eines Warenträgers vom unteren Warenträgerstapel oder einer Ware aus einem Warenträger aus dem unteren Warenträgerstapel ermöglicht.

Dadurch kann eine Überprüfung der Qualität der Waren nicht nur in der obersten Stapellage, sondern auch in einer darunterliegenden Stapellage erfolgen. Dies ist insbesondere beim Kommissionieren im Frischebereich von Lebensmitteln von Vorteil. Üblicherweise ist nämlich die Belüftung in den unteren Stapellagen schlechter, weshalb dort die Ware eher eine schlechtere Qualität aufweist, wie in oberen Stapellagen.

Um sicherheitstechnische Aspekte zu berücksichtigen, können in den Zugangsbereich zwischen dem oberen Warenträgerstapel und dem unteren Warenträgerstapel automatisiert betriebene Schutzplatten hineinverstellt werden, um während einer manuellen Entnahme von Waren oder Warenträgern eine Gefährdung für einen Lagerarbeiter auszuschließen.

Von Vorteil ist auch, wenn die Klemmvorrichtung durch zumindest eine Antriebsvorrichtung relativ zueinander zwischen einer Öffnungsstellung und einer Klemmstellung bewegbare Klemmbacken aufweist, welche in der Klemmstellung die Warenträgerstapelgruppe entlang des Umfangs zumindest einer Warenträgerlage (Stapellage) und auf zumindest zwei Seiten klemmen, und die Hebevorrichtung einen durch zumindest eine Antriebsvorrichtung in vertikaler Richtung relativ gegenüber der Fördertechnik zum Antransport einer Warenträgerstapelgruppe und zum Abtransport einer Warenträgerstapelgruppe bewegbaren Hubrahmen aufweist, an welchem die Klemmbacken gelagert sind und durch welchen die Klemmbacken von einer unteren Höhenstellung in eine obere Höhenstellung bewegbar sind, in welcher der obere Warenträgerstapel der Warenträgerstapelgruppe von dem unteren Warenträgerstapel der Warenträgerstapelgruppe abgehoben ist.

Zum besseren Verständnis der Erfindung wird diese anhand der nachfolgenden Figuren näher erläutert.

Es zeigen jeweils in stark vereinfachter, schematischer Darstellung:
- Fig.1a, 1b: eine mögliche Ausführung eines Kommissionierlagers zum Lagern und Kommissionieren von Waren, in perspektivischer Ansicht;
- Fig. 2a: eine Überprüfstation mit einer Prüfvorrichtung zum Überprüfen von Qualitätsmerkmalen der Waren in den Warenträgern, in perspektivischer Ansicht;
- Fig. 2b: eine Ausschnittsvergrößerung aus dem Kommissionierlager zum Lagern und Kommissionieren von Waren mit einer Beladestation, einer Bestückungsstation und einer Ladungssicherungsstation, in perspektivischer Ansicht;
- Fig. 2c: eine mögliche Ausführung einer automatisiert betriebenen Beladevorrichtung der Beladestation, in perspektivischer Ansicht;
- Fig. 2d: eine mögliche Ausführung einer automatisiert betriebenen Entladevorrichtung einer Entladestation des Kommissionierlagers, in perspektivischer Ansicht;
- Fig. 2e: eine mögliche Ausführung einer teilautomatisiert betriebenen Entladevorrichtung einer Entladestation des Kommissionierlagers, in perspektivischer Ansicht;
- Fig. 3a: eine erste Ausführung eines Transportfahrzeugs (automated guided vehicle bzw. autonomous mobile robot), in perspektivischer Ansicht;
- Fig. 3b: eine zweite Ausführung eines Transportfahrzeugs (automated guided vehicle bzw. autonomous mobile robot), in perspektivischer Ansicht;
- Fig. 4a, 4b, 4c: eine erste Ausführung einer Transportladehilfe, in unterschiedlichen Ansichten;
- Fig. 5: eine zweite Ausführung einer Transportladehilfe, in perspektivischer Ansicht;
- Fig. 6: eine dritte Ausführung einer Transportladehilfe und das Transportfahrzeug nach Fig. 3b, in perspektivischer Ansicht;
- Fig. 7a, 7b, 7c: eine erste Ausführung einer Stapelladehilfe, in unterschiedlichen Ansichten;
- Fig. 8a, 8b: eine zweite Ausführung einer Stapelladehilfe ohne Auftragsstapel und mit einem "begonnenen" Auftragsstapel, in perspektivischer Ansicht;
- Fig. 9: eine dritte Ausführung einer Stapelladehilfe und das Transportfahrzeug nach Fig. 3b, in perspektivischer Ansicht;
- Fig. 10: eine vierte Ausführung einer Stapelladehilfe, in perspektivischer Ansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

Es sei an dieser Stelle hingewiesen, dass in den Figuren die Waren 2 aus Gründen der besseren Übersicht nicht eingetragen sind. Tatsächlich sind aber die Warenträger 3 mit Waren 2 befüllt.

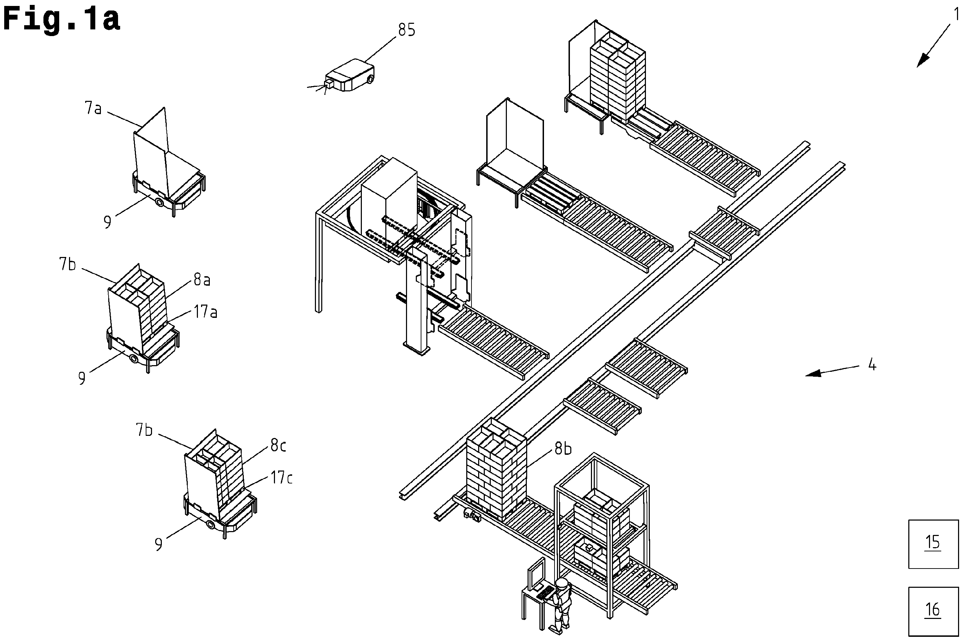

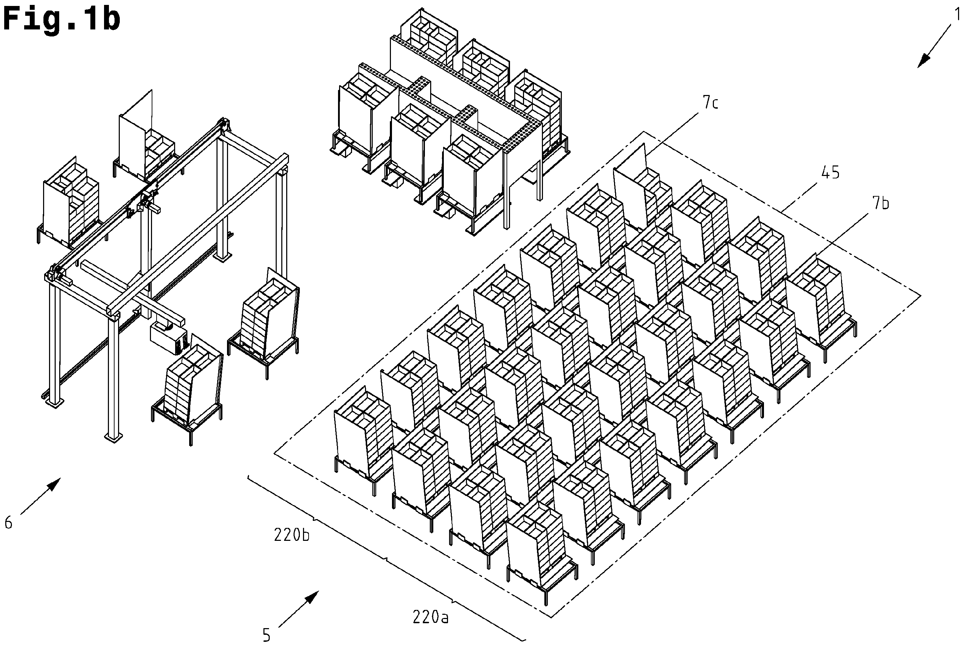

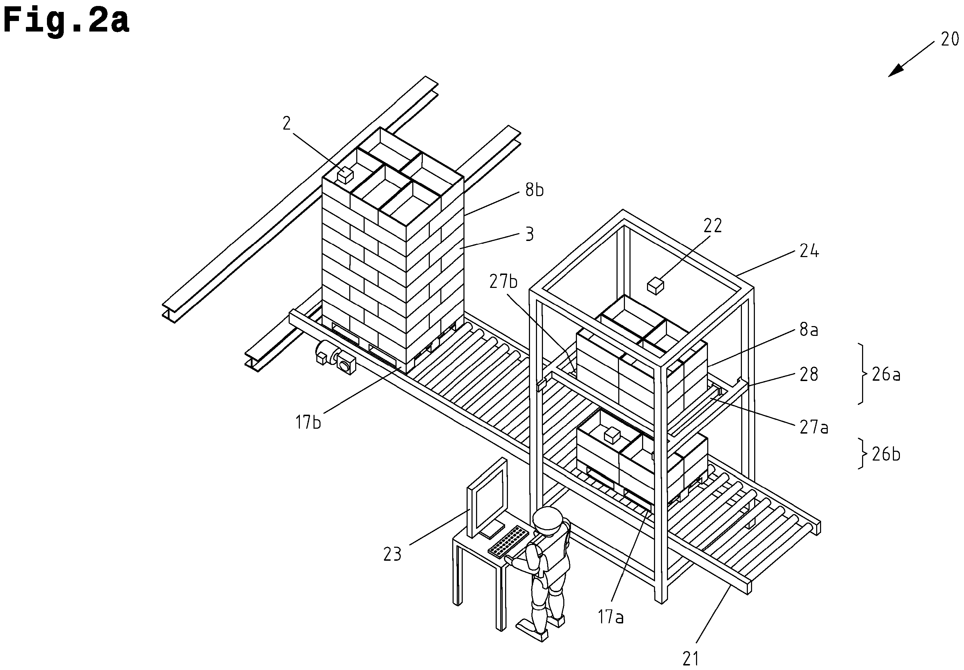

In den Fig. 1a und 1b ist eine Ausführung eines Kommissionierlagers 1 zum Lagern und Kommissionieren von Waren 2 (wie aus Gründen der besseren Übersicht ausschließlich in Fig. 2a eingetragen) enthaltenden und stapelbaren Warenträgern 3 gezeigt. Die Fig. 2a bis 2e zeigen einzelne Ausschnitte aus dem Kommissionierlager 1.

Das Kommissionierlager 1 umfasst einen Anlieferbereich 4, einen Lagerbereich 5, einen Auftragsbearbeitungsbereich 6, eine Vielzahl an Transportladehilfen 7a, 7b, 7c jeweils zur Aufnahme einer Warenträgerstapelgruppe 8a, 8b, 8c und eine Vielzahl an autonom verfahrbaren, fahrerlosen Transportfahrzeugen 9 zum Transport von Transportladehilfen 7a, 7b, 7c, eine Beladestation zumindest mit einer oder mehreren automatisiert betriebenen Beladevorrichtung(en) 10 zum Beladen der Transportladehilfen 7a und eine Entladestation zumindest mit einer oder mehreren automatisiert betriebenen Entladevorrichtung(en) 11 zum Entladen der Transportladehilfe(n) 7b, 7c.

Die Warenträgerstapelgruppe 8a, 8b, 8c bildet eine Wareneingangseinheit und kann einen Anlieferladungsträger 17a, 17b, 17c umfassen.

Die Transportladehilfen 7a sind beispielsweise leere (unbeladene) Transportladehilfen. Die Transportladehilfen 7b sind beispielsweise vollständig beladene Transportladehilfen. Die Transportladehilfen 7c sind beispielsweise teilweise beladene Transportladehilfen.

Wie in Fig. 1a schematisch eingetragen, umfasst das Kommissionierlager 1 einen Auftragsrechner 15 zum Erfassen von Kommissionieraufträgen und zum Bestimmen von Waren 2, welche für den Kommissionierauftrag benötigt werden. Dabei umfasst ein Kommissionierauftrag eine Auftragszeile (beispielweise sechs Warenträger 3 mit einer ersten Ware 2) oder mehrere Auftragszeilen (beispielweise drei Warenträger 3 mit einer ersten Ware 2 und drei Warenträger 3 mit einer zweiten Ware 2). Eine Kundenbestellung umfasst zumindest einen Kommissionierauftrag. Die Kommissionieraufträge liegen als Datensätze vor und werden an dem Auftragsrechner 15 elektronisch erfasst und einem Steuerungssystem 16 übermittelt. Jeder Kommissionierauftrag umfasst eine oder mehrere Auftragszeilen. Spezifiziert der Kommissionierauftrag mehrere Auftragszeilen, so werden unterschiedliche Waren 2 benötigt. Jede Auftragszeile weist zumindest Angaben über eine Stückzahl einer bestellten Ware 2 und über einen Warentyp auf.

Im Anlieferbereich 4 ist die Bereitstellung von Warenträgerstapelgruppen 8a, 8b, 8c (Wareneingangseinheiten) vorgesehen. Solche Warenträgerstapelgruppen 8a, 8b, 8c sind zumeist aus sortenreinen Warenträgern 3 zusammengestellt. Die Warenträgerstapelgruppen 8a, 8b umfassen übereinander angeordnete (gestapelte) Warenträger 3. Insbesondere umfassen die Warenträgerstapelgruppen 8a, 8b, 8c übereinander liegende Stapellagen, welche jeweils mehrere nebeneinander angeordnete Warenträger 3 umfassen. Die Warenträger 3 sind innerhalb einer Stapellage entweder gleich oder verschieden ausgerichtet. Die Stapellagen können wiederum gleich oder verschieden zusammengesetzt werden.

Die in Fig. 1a, 2a beispielhaft gezeigte Warenträgerstapelgruppe 8a umfasst nebeneinander angeordnete Warenträgerstapel jeweils aus mehreren übereinander angeordneten Warenträgern 3. Die Warenträger 3 sind nach dieser Ausführung je Stapellage gleich ausgerichtet. Der Warenträgerstapel entspricht einem säulenartigen Warenträgerstapel.

Die in Fig. 1a, 2a beispielhaft gezeigte Warenträgerstapelgruppe 8b umfasst je Stapellage unterschiedlich ausgerichtete Warenträger 3 und unterschiedlich ausgerichtete Stapellagen. Nach dieser Ausführung sind die Warenträger 3 in einer unteren Stapellage und die Warenträger 3 in einer oberen Stapellage verschieden ausgerichtet, sodass keine säulenartigen Warenträgerstapel vorhanden sind. Dadurch wird auch bei kleineren Warenträgern 3 ein stabiler Warenträgerstapel erreicht.

Nach einer in Fig. 1a gezeigten Ausführung umfasst die Warenträgerstapelgruppe 8c je Stapellage unterschiedlich ausgerichtete Warenträger 3, jedoch gleich ausgerichtete Stapellagen. Nach dieser Ausführung sind die Warenträger 3 in einer unteren Stapellage und die Warenträger 3 in einer oberen Stapellage gleich ausgerichtet, sodass wiederum säulenartigen Warenträgerstapel vorhanden sind.

Üblicherweise werden die Warenträger 3 als Warenträgerstapelgruppe 8a, 8b, 8c auf Anlieferladungsträger 17a, 17b, 17c in den Anlieferbereich 4 angeliefert. Gemäß den obigen Ausführungen kann die Warenträgerstapelgruppe 8a, 8b, 8c demnach den Anlieferladungsträger 17a, 17b, 17c umfassen. Selbst wenn die Warenträgerstapelgruppen 8a, 8b auf Anlieferladungsträgern 17a, 17b, 17c bereitgestellt werden, ist eine Vereinzelung in Warenträger 3 oder Warenträgerstapel an einer Depalettierstation nicht vorgesehen. Die Warenträgerstapelgruppe 8a, 8b, 8c wird im Wesentlichen unverändert der Beladestation zugeführt. Im Wesentlichen unverändert bedeutet also in diesem Zusammenhang, dass vor der Beladung einer leeren Transportladehilfe 7a eine Depalettierung nicht stattfindet.

Die Anlieferladungsträger 17a, 17b, 17c sind vorwiegend Paletten, welche in unterschiedlichen Ausführungen und Abmessungen in der Praxis verwendet werden. Beispielweise handelt es sich um Europaletten, Industriepaletten, Düsseldorfer Paletten. Es versteht sich, dass auch andere Paletten im Rahmen der Erfindung eingesetzt werden können. Die Europalette hat eine Außenabmessung von 1.200mm x 800mm. Die Industriepalette hat eine Außenabmessung von 1.200mm x 1.000mm. Die Düsseldorfer Palette hat eine Außenabmessung von 800mm x 600mm oder 600mm x 400mm.

In Fig. 2a ist die Warenträgerstapelgruppe 8a auf einer Europalette und die Warenträgerstapelgruppe 8b auf einer Industriepalette gezeigt.

Grundsätzlich ist es aber auch möglich, dass die Warenträger 3 als Warenträgerstapelgruppe 8a, 8b, 8c ohne zusätzlichem Anlieferladungsträger 17a, 17b, 17c im Anlieferbereich 4 bereitgestellt werden. Gemäß dieser Ausführung umfasst die Warenträgerstapelgruppe 8a, 8b, 8c keinen zusätzlichen Anlieferladungsträger 17a, 17b, 17c. Auch eine solche Warenträgerstapelgruppe 8a, 8b, 8c wird im Wesentlichen unverändert der Beladestation zugeführt. Im Wesentlichen unverändert bedeutet also in diesem Zusammenhang, dass vor der Beladung einer leeren Transportladehilfe 7a eine Depalettierung nicht stattfindet.

Fig. 1a und 2a zeigen eine mögliche Ausführung, bei der im Anlieferbereich 4 eine Überprüfstation angeordnet, umfassend
- eine oder mehrere Prüfvorrichtung(en) 20 zum Überprüfen von Qualitätsmerkmalen der Waren 2 in den Warenträgern 3,
- eine (automatisiert betriebene) mit der 21 bezeichnete Fördertechnik zum Antransport einer Warenträgerstapelgruppe 8a, 8b, 8c (mit oder ohne Anlieferladungsträger) und zum Abtransport Warenträgerstapelgruppe (mit oder ohne Anlieferladungsträger),
- eine Erfassungsvorrichtung 22 zur Identifizierung der Warenträgerstapelgruppe 8a, 8b, 8c, welche mit dem Steuerungssystem 16 (Fig. 1a) über eine nicht näher dargestellte Datenleitung verbunden ist, und
- einer Eingabe- und/oder Ausgabevorrichtung 23 zur Eingabe von Daten aus der Prüfung der Qualitätsmerkmale, welche mit dem Steuerungssystem 16 (Fig. 1a) über eine nicht näher dargestellte Datenleitung verbunden ist.

Nach gezeigter Ausführung wird die Warenträgerstapelgruppe 8a, 8b, 8c auf der mit 21 bezeichneten Fördertechnik zum Antransport einer Warenträgerstapelgruppe 8a, 8b, 8c und zum Abtransport einer Warenträgerstapelgruppe 8a, 8b, 8c auf einem Anlieferladungsträger 17a, 17b, 17c gefördert. Die Fördertechnik kann einen Rollenförderer, Bandförderer, Kettenförderer und dgl. umfassen.

Wie in den Fig. 1a und 2a eingetragen, kann an der Prüfvorrichtung 20 zum Überprüfen von Qualitätsmerkmalen der Waren 2 in den Warenträgern 3 ein Lagerarbeiter vorgesehen werden. Die Prüfvorrichtung 20 wird nach gezeigter Ausführung teilautomatisiert betrieben.

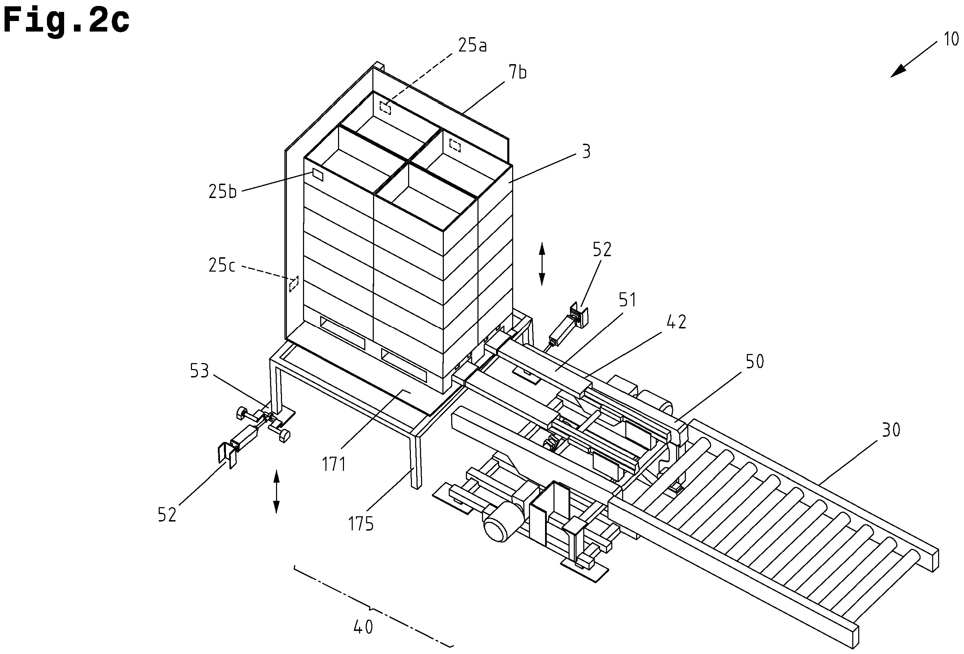

Die Erfassungsvorrichtung 22 zur Identifizierung der Warenträgerstapelgruppe 8a, 8b, 8c kann durch einen mobilen oder ortsfesten Scanner gebildet sein. Wie beispielsweise in Fig. 2c dargestellt, können an den Warenträgern 3 der Warenträgerstapelgruppe 8a, 8b, 8c Datenträger 25a (RFID, Barcode) und/oder an der Warenträgerstapelgruppe 8a, 8b, 8c ein Datenträger 25b (RFID, Barcode) angebracht sein.

Nach gezeigter Ausführung erfolgt die Identifizierung der Warenträgerstapelgruppe 8a, 8b, 8c an der Prüfvorrichtung 20, wenngleich dies auch vor der Prüfvorrichtung 20 geschehen kann. Dies kann der Fall sein, wenn vor der Prüfvorrichtung 20 die Warenträgerstapelgruppe 8a, 8b, 8c einer Auspackstation zugeführt wird, wo beispielweise eine Verpackungsfolie (Stretchfolie oder Schrumpffolie), mit welcher die Warenträgerstapelgruppe 8a, 8b, 8c verpackt ist, oder ein Umreifungsband, mit welchem die Warenträgerstapelgruppe 8a, 8b, 8c umreift ist, entfernt wird. Beispielweise kann auf der Verpackungsfolie ein Datenträger (RFID, Barcode) angebracht sein, über welchen die Ware 2 oder der Warenträger 3 oder die Warenträgerstapelgruppe 8a, 8b, 8c identifiziert wird.

Wird das Kommissionierlager und Verfahren zum Lagern und Kommissionieren im Frischebereich von Lebensmitteln, wo verderbliche Waren 2, wie beispielsweise Obst und Gemüse, eingesetzt, können an der Prüfvorrichtung 20 Qualitätsmerkmale wie Schimmelpilze, Beschädigungen und dgl. optisch erfasst werden.

An der Eingabe- und/oder Ausgabevorrichtung 23 wird das Ergebnis der Prüfung der Qualitätsmerkmale erfasst, beispielweise kann der Lagerarbeiter durch Eingabe "Qualität in Ordnung" oder "Qualität mangelhaft" das Qualitätsmerkmal elektronisch erfassen.

Auch ist eine Eingabe der Anzahl entnommener Warenträger 3 möglich, wenn einzelne Warenträger 3 aus der Warenträgerstapelgruppe 8a, 8b, 8c entfernt werden, weil diese beispielweise verdorbene Waren 2 enthalten.

Nach dieser Ausführung erfolgt die Eingabe von Daten aus der Prüfung der Qualitätsmerkmale manuell durch den Lagerarbeiter.

Es ist aber auch möglich, dass die Prüfung der Qualitätsmerkmale automatisiert erfolgt, beispielweise durch ein Bildverarbeitungssystem, durch welches von einem Kamerasystem Bilder der Waren 2 erfasst und durch ein Bildverarbeitungsprogramm die Bilder mit in einem Rechnersystem hinterlegten Normwerten der Waren 2 verglichen werden, um aus dem Vergleich eine Auswertung zu dem Qualitätsmerkmal durchzuführen. Nach dieser Ausführung bildet das Kamerasystem eine Eingabevorrichtung und das Bildverarbeitungsprogramm eine Ausgabevorrichtung.

Die Überprüfstation umfasst entlang der Fördertechnik zum Antransport einer Warenträgerstapelgruppe 8a, 8b, 8c und zum Abtransport einer Warenträgerstapelgruppe 8a, 8b, 8c eine automatisiert betriebene Hebe- und Klemmvorrichtung 24, durch welche die Warenträgerstapelgruppe 8a, 8b, 8c in einen oberen Warenträgerstapel 26a und einen unteren Warenträgerstapel 26b auftrennbar ist und zwischen dem oberen Warenträgerstapel 26a und dem unteren Warenträgerstapel 26b ein Zugangsbereich entsteht, welcher die Entnahme zumindest eines Warenträgers 3 vom unteren Warenträgerstapel 26b oder einer Ware 2 aus einem Warenträger 3 aus dem unteren Warenträgerstapel 266b ermöglicht.

Die Klemmvorrichtung umfasst durch zumindest eine (nicht näher dargestellte) Antriebsvorrichtung relativ zueinander zwischen einer Öffnungsstellung und einer Klemmstellung bewegbare Klemmbacken 27a, 27b. Die Klemmbacken 27a, 27b klemmen in der Klemmstellung die Warenträgerstapelgruppe 8a, 8b, 8c entlang des Umfangs zumindest einer Stapellage bzw. Warenträgerlage und auf zumindest zwei Seiten. Die Hebevorrichtung umfasst einen durch zumindest eine (nicht näher dargestellte) Antriebsvorrichtung in vertikaler Richtung relativ gegenüber der Fördertechnik 21 bewegbaren Hubrahmen 28, auf welchem die Klemmbacken 27a, 27b gelagert sind und durch welchen die Klemmbacken 27a, 27b von einer unteren Höhenstellung in eine obere Höhenstellung bewegbar sind. In der oberen Höhenstellung ist der obere Warenträgerstapel 26a der Warenträgerstapelgruppe 8a, 8b, 8c von dem unteren Warenträgerstapel 26b der Warenträgerstapelgruppe 8a, 8b, 8c abgehoben.

Es sei an dieser Stelle ausdrücklich hingewiesen, dass die Überprüfstation in obiger Ausführung nicht zwingend notwendig ist. Ist die Überprüfstation nicht vorgesehen, so ist dennoch eine Erfassungsvorrichtung 22 zur Identifizierung der Warenträgerstapelgruppe 8a, 8b, 8c vorgesehen, welche mit dem Steuerungssystem 16 (Fig. 1a) über eine nicht näher dargestellte Datenleitung verbunden ist. Die Erfassungsvorrichtung 22 ist in diesem Fall beispielsweise in der oben beschriebenen Auspackstation vorgesehen.

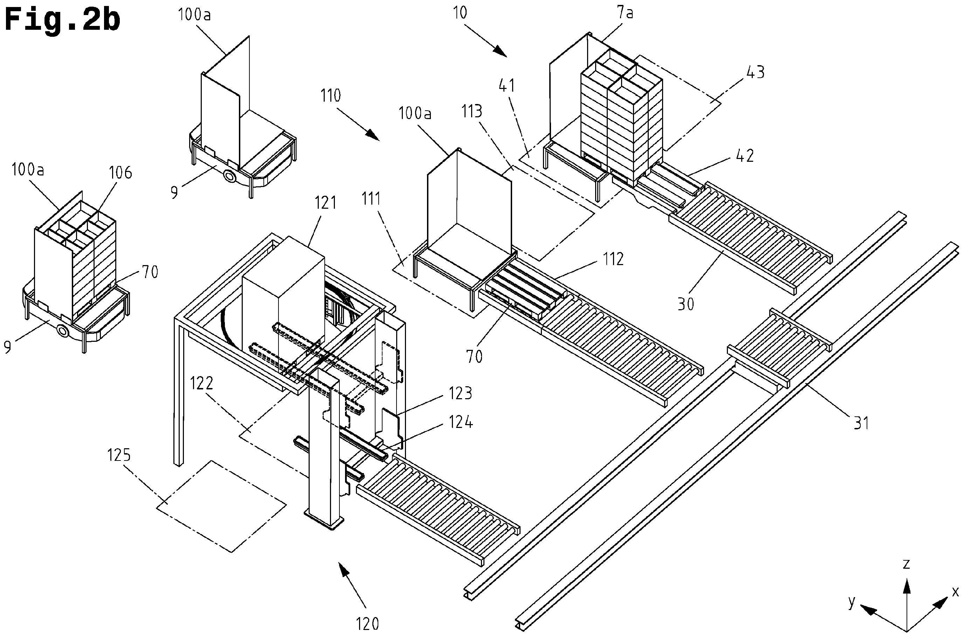

Fig. 1a, 2b und 2c zeigen eine mögliche Ausführung, bei der im Anlieferbereich 4 eine Beladestation mit einer oder mehreren automatisiert betriebenen (schematisch angedeuteten) Beladevorrichtung(en) 10 angeordnet ist / sind.

Die Beladevorrichtung(en) 10 ist / sind vorzugsweise an eine mit 30 bezeichnete automatisiert betriebenen Fördertechnik zum Antransport von Warenträgerstapelgruppen 8a, 8b, 8c angeschlossen. Die Fördertechnik kann einen Rollenförderer, Bandförderer, Kettenförderer und dgl. umfassen.

Ist die optionale Überprüfstation vorgesehen, sind die Beladevorrichtung(en) 10 und die Prüfvorrichtungen) zusätzlich über eine mit 31 bezeichnete Fördertechnik zum Antransport von Warenträgerstapelgruppen 8a, 8b, 8c (Wareneingangseinheiten) fördertechnisch verbunden. In gezeigter Ausführung umfasst die Fördertechnik einen entlang einer Führungsbahn in x-Richtung bewegbaren Transportwagen. Die Fördertechnik 31 kann aber auch einen Rollenförderer, Bandförderer, Kettenförderer und dgl. umfassen.

Wie im Nachfolgenden beschrieben, umfasst die Beladestation eine oder mehrere automatisiert betriebene (schematisch angedeutete) Beladevorrichtung(en) 10 zum Beladen von leeren Transportladehilfsmitteln 7a mit jeweils einer (bevorzugt unverpackten) Warenträgerstapelgruppe 8a.

Die Beladevorrichtung 10 umfasst einen Andienungsplatz 40 für eine Warenträgerstapelgruppe 8a, 8b, 8c, einen Andienungsplatz 41 für ein leeres Transportladehilfsmittel 7a und eine Transfervorrichtung 42 zur Übergabe der Warenträgerstapelgruppe 8a, 8b, 8c vom Andienungsplatz 40 auf ein leeres Transportladehilfsmittel 7a, welches am Andienungsplatz 41 bereitgestellt wird.

Konkret umfasst die automatisiert betriebene Beladevorrichtung 10 eine relativ gegenüber dem Andienungsplatz 40 bewegbare Transfervorrichtung 42, um eine in einer Übergabeposition auf dem Andienungsplatz 40 bereitgestellte Warenträgerstapelgruppe 8a, 8b, 8c "unverändert" auf die Transportladehilfe 7a zu bewegen.

Auch wenn in der gezeigten Ausführung aus Gründen der besseren Übersicht die Beladestation mit einer einzigen Beladevorrichtung 10 dargestellt ist, so kann die Anzahl an Beladevorrichtungen 10 abhängig von der geforderten Kommissionierleistung variieren. Beispielweise kann die Beladestation bzw. das Kommissionierlager 1 eine zweite Beladevorrichtung 10, dritte Beladevorrichtung 10 usw. aufweisen. Vorzugsweise sind diese Beladevorrichtungen 10 identisch aufgebaut.

Es erweist sich auch von Vorteil, wenn die Beladestation nahe der einen oder nahe der mehreren Beladevorrichtung(en) 10 eine separate Pufferfläche 43 aufweist. Grundsätzlich kann die Beladestation aber auch nur eine Pufferfläche 43 umfassen. Die Pufferfläche 43 ist vorzugsweise auf einem Boden des Kommissionierlagers 1 ausgebildet.

Auf diese Weise ist es möglich, dass die leere(n) Transportladehilfe(n) 7a nahe zur Beladevorrichtungen) 10 auf der Pufferfläche 43 gepuffert und nach Bedarf von den Transportfahrzeugen 9 zu dem jeweiligen Andienungsplatz 41 der Beladevorrichtung (en) 10 auf kurzem Wege transportiert werden.

Gemäß der Erfindung umfasst demnach die Beladestation i) entweder eine oder mehrere automatisiert betriebene Beladevorrichtung(en) 10 oder ii) eine oder mehrere automatisiert betriebene Beladevorrichtung(en) 10 und eine Pufferfläche 43 nahe der Beladevorrichtung(en) 10. Die Beladevorrichtung 10 ist zum Beladen einer der leeren Transportladehilfen 7a mit einer Warenträgerstapelgruppe 8a, 8b, 8c (mit oder ohne Anlieferladungsträger 17a, 17b, 17c) ausgebildet. Die leere Transportladehilfe 7a wird zum Beladen mit einer im Wesentlichen unveränderten Warenträgerstapelgruppe 8a, 8b, 8c (mit oder ohne Anlieferladungsträger 17a, 17b, 17c) an der automatisiert betriebenen Beladevorrichtung 10 bereitgestellt.

Wie in Fig. 1a eingetragen, kann eine leere Transportladehilfe 7a durch ein autonom verfahrbares, fahrerloses Transportfahrzeug 9 zum Andienungsplatz 41 transportiert und dort abgestellt werden. Während der Beladung der leeren Transportladehilfe 7a kann dieses Transportfahrzeug 9 zu anderen Transportzwecken genutzt werden.

Grundsätzlich ist es aber auch möglich, dass das autonom verfahrbare, fahrerlose Transportfahrzeug 9 eine leere Transportladehilfe 7a zum Andienungsplatz 41 transportiert und dort abstellt, jedoch während der Beladung der leeren Transportladehilfe 7a am Andienungsplatz 41 verweilt. Ist an dem Andienungsplatz 41 bereits eine leere Transportladehilfe 7a abgestellt oder wird die leere Transportladehilfe 7a gerade beladen, so kann die leere Transportladehilfe 7a auf der nahe der Beladevorrichtung 10 vorgesehenen Pufferfläche 43 gepuffert werden.

Die (nunmehr beladene) Transportladehilfe 7b wird nach deren Beladung mit der Warenträgerstapelgruppe 8a, 8b, 8c durch das autonom verfahrbare, fahrerlose Transportfahrzeug 9 von der Beladestation, insbesondere von der Beladevorrichtung 10 oder von den Beladevorrichtungen 10 zu dem Lagerbereich 5 transportiert und im Lagerbereich 5 auf einer Lagerfläche 45 abgestellt. Die Lagerfläche 45 ist vorzugsweise auf einem Boden des Kommissionierlagers 1 ausgebildet. Wie im Nachfolgenden noch beschrieben wird, werden durch die autonom verfahrbaren, fahrerlosen Transportfahrzeuge 9 auch an der Entladestation nicht vollständig entladene (teilbeladene) "angebrochene" Transportladehilfen 7c von der Entladestation zurück in den Lagerbereich 5 transportiert und im Lagerbereich 5 auf der Lagerfläche 45 abgestellt.

In Fig. 2c ist eine mögliche Ausführung einer automatisiert betriebenen Beladevorrichtung 10 gezeigt. Die Beladevorrichtung 10 ist vorzugsweise an die mit 30 bezeichnete automatisiert betriebenen Fördertechnik zum Antransport von Warenträgerstapelgruppen 8a, 8b, 8c (Wareneingangseinheiten) angeschlossen.

Die Beladevorrichtung 10 umfasst den Andienungsplatz 40 für eine Warenträgerstapelgruppe 8a, 8b, 8c, den Andienungsplatz 41 für ein leeres Transportladehilfsmittel 7a (bzw. nach dem Beladen für ein beladenes Transportladehilfsmittel 7b) und die Transfervorrichtung 42 zur Übergabe der Warenträgerstapelgruppe 8a, 8b, 8c vom Andienungsplatz 40 auf ein leeres Transportladehilfsmittel 7a, welches am Andienungsplatz 41 bereitgestellt wird.

Konkret ist der Andienungsplatz 40 für eine Warenträgerstapelgruppe 8a, 8b, 8c auf einer mit 50 bezeichneten Fördertechnik, beispielweise einem Mehrfachspurförderer, ausgebildet, welche an die mit 30 bezeichnete Fördertechnik anschließt und die Warenträgerstapelgruppe 8a, 8b, 8c auf dem Andienungsplatz 40 in der Übergabeposition bereitstellt.

Die Transfervorrichtung 42 umfasst in vertikaler Richtung relativ zum Andienungsplatz 40 zwischen einer abgesenkten Ausgangsstellung und einer angehobenen Übernahmestellung sowie in horizontaler Richtung relativ zum Andienungsplatz 40 zwischen einer zurückgezogenen Ausgangsstellung und einer vorragenden Übergabestellung bewegbare Teleskopgabeln 51, siehe Fig. 2c.

In Fig. 2b wird gerade eine zuvor auf die Teleskopgabel 51 übernommene Warenträgerstapelgruppe 8a, 8b, 8c auf die leere Transportladehilfe 7a übergeben. In Fig. 2c befinden sich die Transportgabeln 51 in der vorragenden Übergabestellung und befindet sich die Warenträgerstapelgruppe 8a, 8b, 8c auf dem Transportladehilfe 7a.

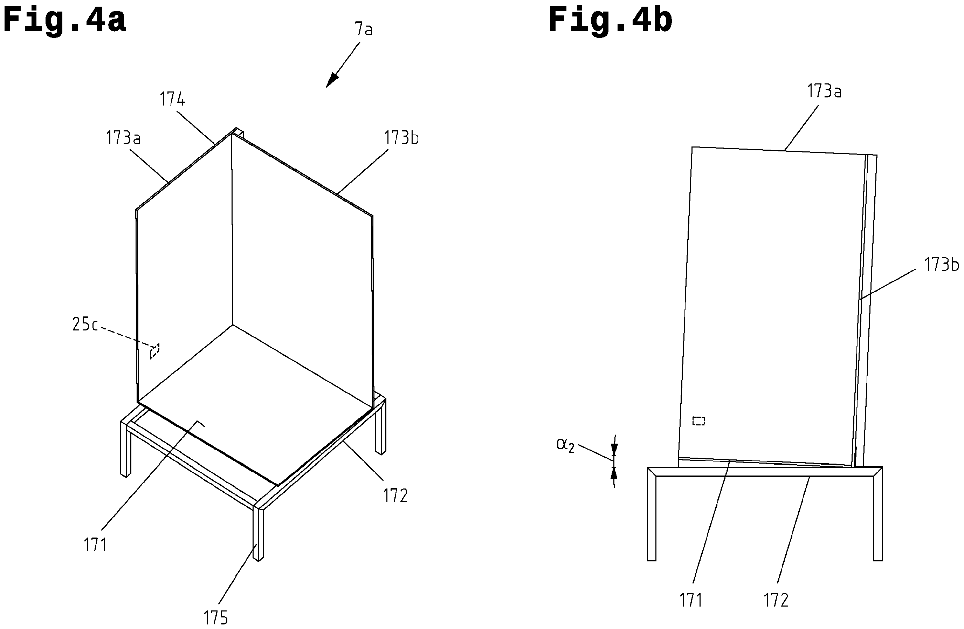

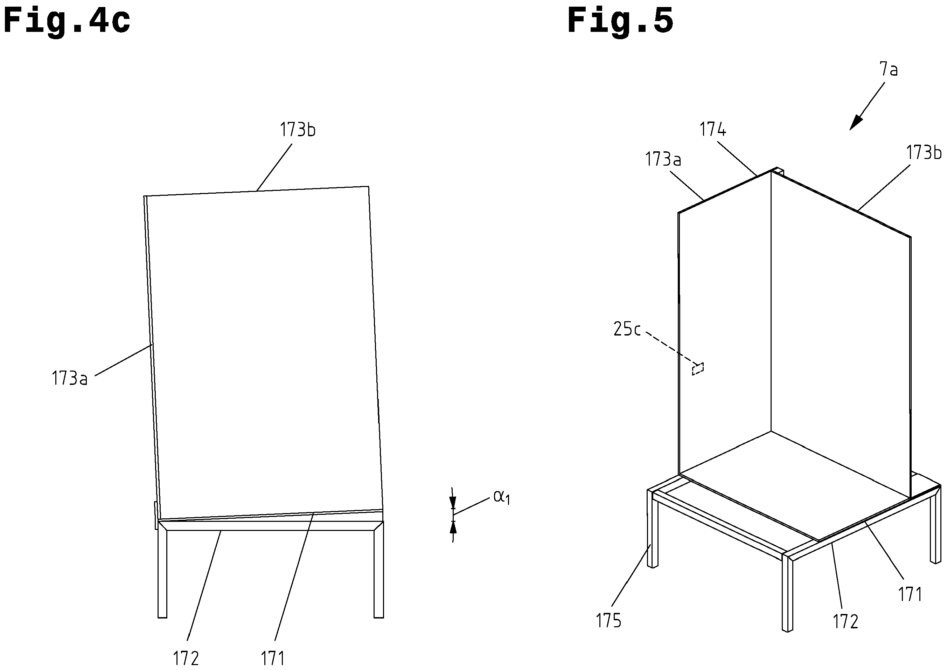

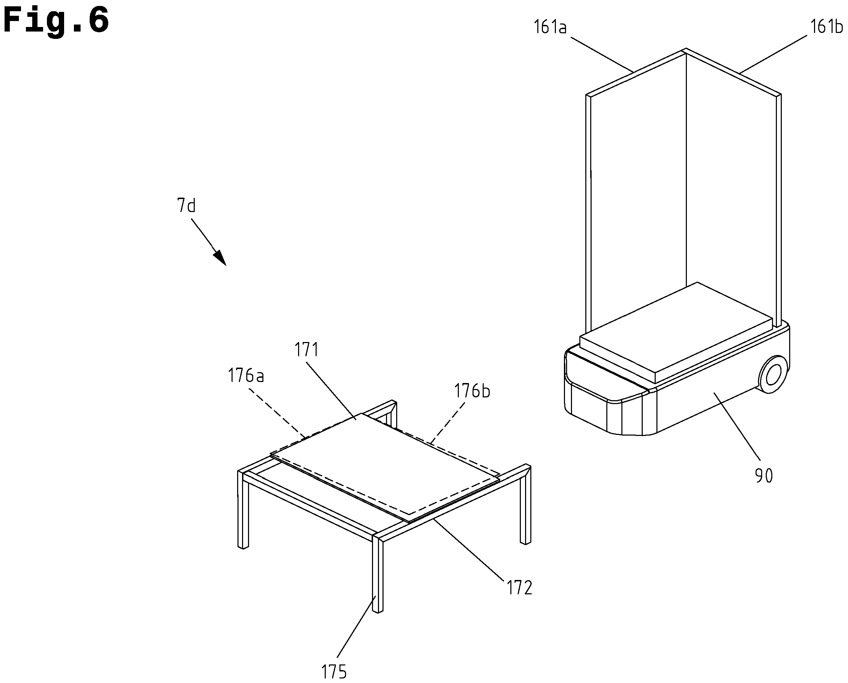

Unabhängig davon, wie die Beladevorrichtung 10 gestaltet ist, kann es sich von Vorteil erweisen, wenn der Andienungsplatz 41 Ankipp- und Rückkippvorrichtungen 52 aufweist, durch welche die leere Transportladehilfe 7a vor deren Beladung derart angekippt wird, dass ein Bodenwandteil 171 in eine im Wesentliche horizontale Transportebene (Übernahmeebene) bewegt wird. Eine solche Ausführung kann Anwendung finden, wenn die Transportladehilfe 7a, 7b, 7c gemäß Fig. 4a bis 4c, 6 gestaltet ist und keinen horizontalen Bodenwandteil 171 aufweist. Die Ankipp- und Rückkippvorrichtungen 52 können jeweils eine Abstellplatte 53 umfassen, auf welchen Stellfüße 175 (drei oder vier Stellfüße 175) der Transportladehilfe 7a, 7b, 7c abgestellt werden. Es sind drei oder vier Ankipp- und Rückkippvorrichtungen 52 vorgesehen. Damit lässt sich die Beladung der Transportladehilfe 7a, 7b, 7c vereinfachen, wenn diese gemäß Fig. 4a bis 4c, 6 gestaltet ist.

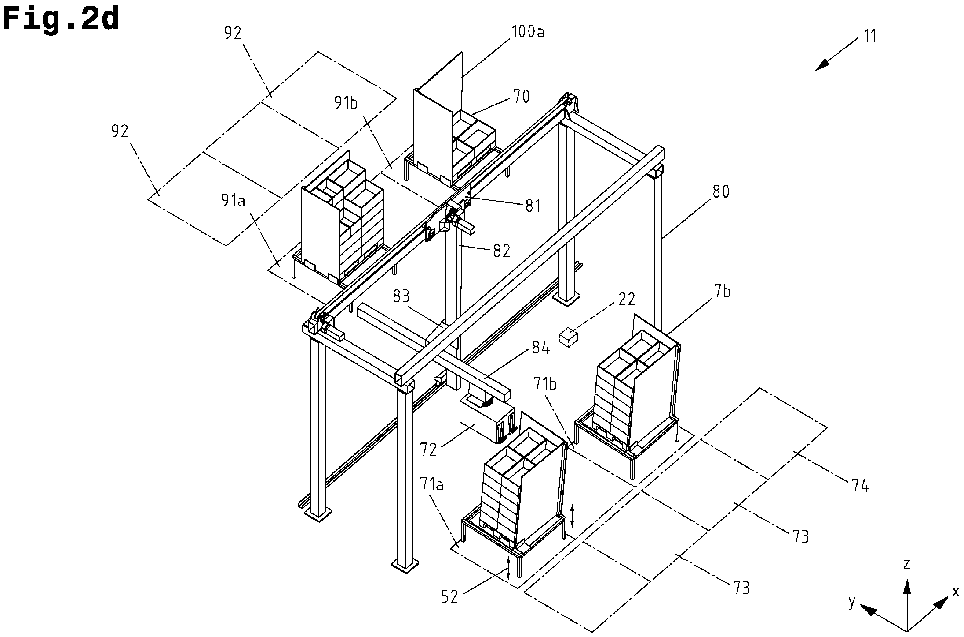

Wie in den Fig. 1b und 2d ersichtlich, ist im Auftragsbearbeitungsbereich 6 eine Entladestation mit einer oder mehreren automatisiert betriebenen Entladevorrichtung(en) 11 angeordnet, mittels welcher Entladevorrichtung 11 einzelne Warenträger 3 oder Warenträgerstapel von der Transportladehilfe 7b, 7c auf ein Zielladehilfsmittel 70 umgeladen werden. Nach gezeigter Ausführung bildet die eine oder mehreren automatisiert betriebenen Entladevorrichtung(en) 11 gleichzeitig eine oder mehrere automatisiert betriebene Umladevorrichtung(en) bzw. Kommissioniervorrichtung(en) zur Zusammenstellung der Warenträger 3 auf dem oder den Zielladehilfsmittel(n) 70 gemäß Kommissionierauftrag.

Wie im Nachfolgenden beschrieben, umfasst die Entladestation die zumindest eine automatisiert betriebene (schematisch angedeutete) Entladevorrichtung 11. Auch wenn in der gezeigten Ausführung aus Gründen der besseren Übersicht die Entladestation mit einer einzigen Entladevorrichtung 11 dargestellt ist, so kann die Anzahl an Entladevorrichtungen 11 abhängig von der geforderten Kommissionierleistung variieren. Beispielweise kann die Entladestation bzw. das Kommissionierlager 1 eine zweite Entladevorrichtung 11, dritte Entladevorrichtung 11 usw. aufweisen. Vorzugsweise sind diese Entladevorrichtungen 11 identisch aufgebaut.

Die schematisch gezeigte Ausführung der automatisiert betriebenen Entladevorrichtung 11 umfasst einen ersten Andienungsplatz 71a für die beladene erste Transportladehilfe 7b, 7c, (optional) einen zweiten Andienungsplatz 71b für die beladene zweite Transportladehilfe 7b, 7c und eine relativ gegenüber dem Andienungsplatz 71a, 71b bewegbare Transfervorrichtung 72 zum Entladen der auf dem Andienungsplatz 71a, 71b bereitgestellten Transportladehilfe 7a, 7b. Weist die Entladestation mehr als eine automatisiert betriebene Entladevorrichtungen 11 auf, so umfasst jede Entladevorrichtung 11 einen ersten Andienungsplatz 71a für die beladene erste Transportladehilfe 7b, 7c, (optional) einen zweiten Andienungsplatz 71b für die beladene zweite Transportladehilfe 7b, 7c und eine relativ gegenüber dem Andienungsplatz 71a, 71b bewegbare Transfervorrichtung 72 zum Entladen der auf dem Andienungsplatz 71a, 71b bereitgestellten Transportladehilfe 7b, 7c.

Es erweist sich auch von Vorteil, wenn die Entladestation nahe der Entladevorrichtung 11 oder nahe jeder Entladevorrichtung 11 zumindest eine separate Pufferfläche 73 aufweist. In gezeigter Ausführung ist der Entladevorrichtung 11 je Andienungsplatz 71a, 71b eine Pufferfläche 73 zugeordnet. Grundsätzlich kann die Entladestation aber auch nur eine Pufferfläche 73 umfassen. Die Pufferfläche 73 ist vorzugsweise auf einem Boden des Kommissionierlagers 1 ausgebildet. Auf diese Weise ist es möglich, dass die beladene(n) Transportladehilfe(n) 7b, 7c nahe zur Entladevorrichtung(en) 11 auf der Pufferfläche 73 gepuffert und nach Bedarf von den Transportfahrzeugen 9 zu dem jeweiligen Andienungsplatz 71a, 71b der Entladevorrichtung(en) 11 auf kurzem Wege transportiert werden.

Auch kann die Entladestation eine oder mehrere (in Fig. 2d eingetragene) Wartezone(n) 74 aufweisen. An der Wartezone 74 oder an den Wartezonen 74 kann eine Transportladehilfe 7c nach der Entnahme von zumindest einem Warenträger 3 abgestellt werden, sollten nicht alle Warenträger 3 aus der genannten Transportladehilfe 7c entnommen worden sein und sollten diese Warenträger 3 zu einem bereits avisierten Kommissionierauftrag an der genannten Entladevorrichtung 11 oder einer der Entladevorrichtungen 11 benötigt werden. Grundsätzlich kann die Beladestation zu diesem Zweck aber auch nur eine Wartezone 74 umfassen. Auf diese Weise ist es möglich, dass die teilentladene(n) Transportladehilfe(n) 7c nahe zur Entladevorrichtung(en) 11 in der Wartezone 74 gepuffert und nach Bedarf von den Transportfahrzeugen 9 zu dem jeweiligen Andienungsplatz 71a, 71b der Entladevorrichtung(en) 11 auf kurzem Wege transportiert werden.

Die in der Fig. 2d näher dargestellte Entladevorrichtung 11 umfasst nach einer ersten Ausführung einen Portalroboter. Unter Portalroboter versteht man Industrieroboter, die in ihren Grundachsen aus Linearachsen aufgebaut sind. Bei der Beladung wird ein Flächenportal verwendet.

Der Portalroboter umfasst
i) Vertikalsteher, Längsträger und Querträger, die zu einer Tragkonstruktion 80 miteinander verbunden sind,
ii) einen an der Tragkonstruktion 80 gelagerten und über eine erste Antriebsvorrichtung entlang einer Führungsanordnung (welche an einem der Längsträger angeordnet ist) in einer ersten Richtung (x-Richtung) horizontal bewegbaren ersten Portalschlitten 81,
iii) einen an dem ersten Portalschlitten 81 befestigten und mit diesem in der ersten Richtung (x-Richtung) bewegbaren Portalarm 82, und
iv) einen an dem Portalarm 82 gelagerten und über eine zweite Antriebsvorrichtung entlang einer Führungsanordnung in einer zweiten Richtung (z-Richtung) vertikal bewegbaren zweiten Portalschlitten 83, und
v) einen an dem zweiten Portalschlitten 83 angeordneten und über eine dritte Antriebsvorrichtung entlang einer Führungsanordnung in einer dritten Richtung (y-Richtung) horizontal bewegbaren dritten Portalschlitten 84, und
vi) die Transfervorrichtung 72, welche am dritten Portalschlitten 84 angeordnet und um eine Vertikalachse drehbar am dritten Portalschlitten 84 gelagert ist.

Der gezeigte Portalroboter erweist sich von Vorteil, wenn die zur Verfügung stehende Raumhöhe gering ist.

Auf der Entladebewegung wird der Warenträger 3, Warenträgerteilstapel oder Warenträgerstapel von der Transportladehilfe 7b, 7c, welche am Andienungsplatz 71a, 71b bereitgestellt wird, von der Transfervorrichtung 72 aufgenommen und danach auf ein Zielladehilfsmittel 70, 170 umgeladen.

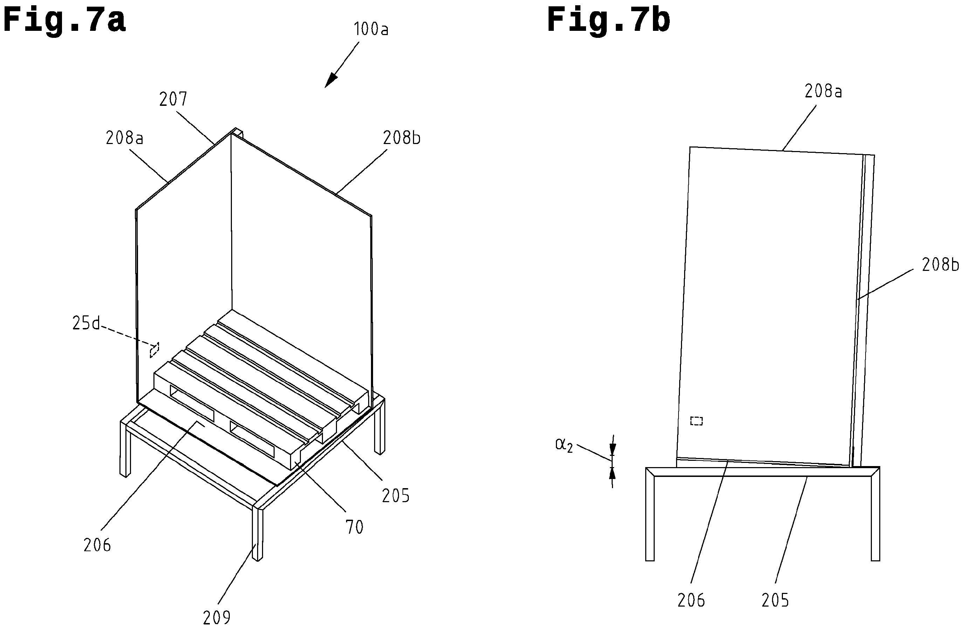

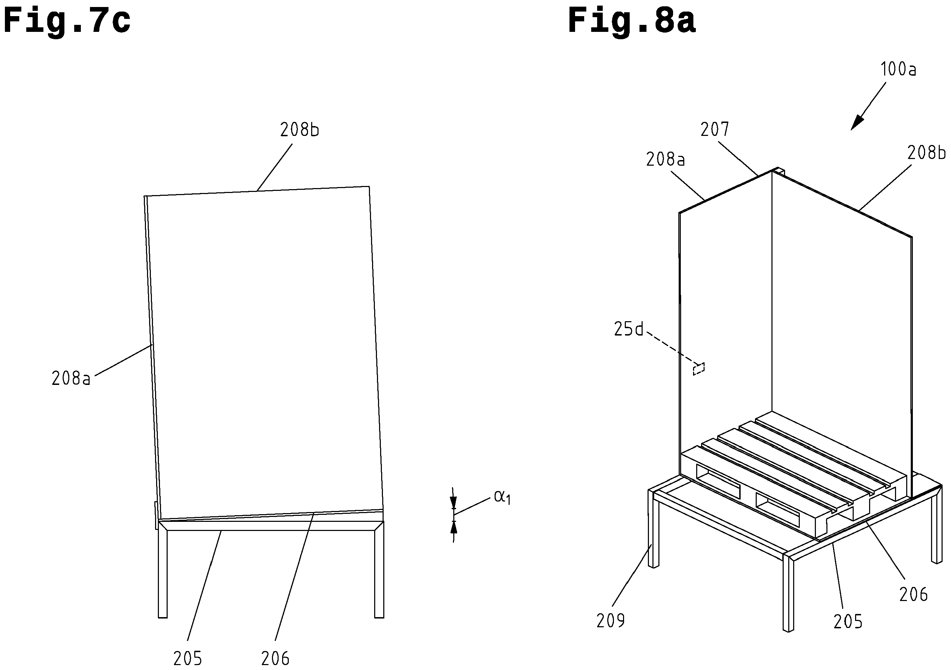

In diesem Zusammenhang kann es sich von Vorteil erweisen, wenn das Kommissionierlager 1 Stapelladehilfen verwendet, welche erste Stapelladehilfen 100a (siehe Fig. 7a bis 7c, 8a, 8b, 9) umfassen, welche mit dem Zielladehilfsmittel 70, beispielweise einer Palette, beladen werden.

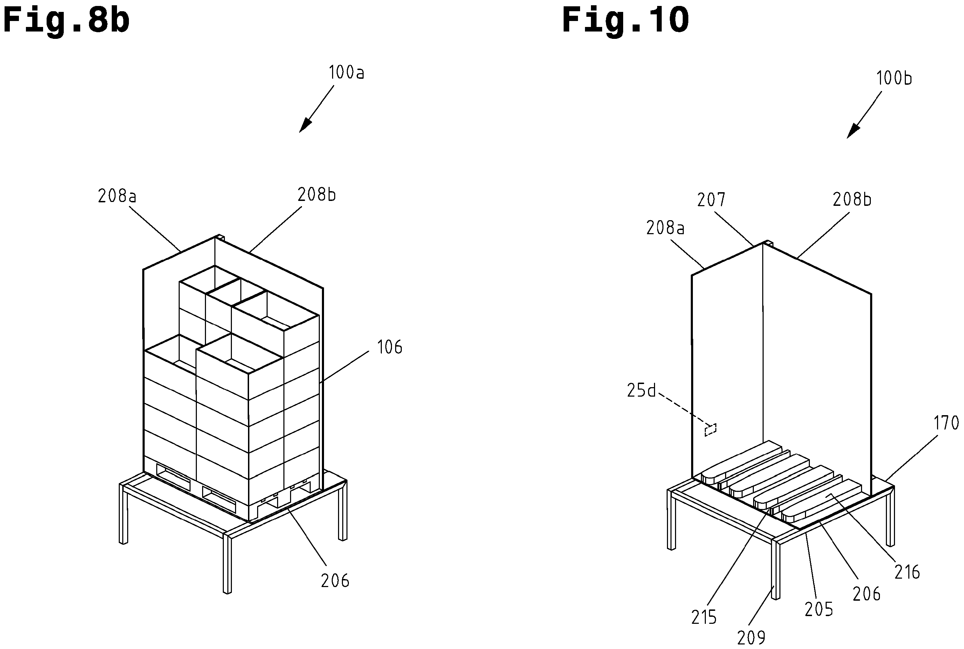

Werden anstatt der ersten Stapelladehilfen 100a im Kommissionierlager 1 zweite Stapelladehilfen 100b (siehe Fig. 10) eingesetzt, bildet die zweite Stapelladehilfe 100b das Zielladehilfsmittel 170. In diesem Fall kann eine nachfolgend beschriebene Bestückungsstation entfallen. Im Gegensatz zu oben genannter Ausführung, wo die erste Stapelladehilfe 100a mit dem Zielladehilfsmittel 70 ausgestattet wird, ist nach dieser Ausführung ein zusätzliches Zielladehilfsmittel 70 nicht vorgesehen.

Umfasst das Kommissionierlager 1 die ersten Stapelladehilfen 100a, so wird der Warenträger 3, Warenträgerteilstapel oder Warenträgerstapel von der Transportladehilfe 7b, 7c, welche am Andienungsplatz 71a, 71b bereitgestellt wird, von der Transfervorrichtung 72 aufgenommen und danach auf das Zielladehilfsmittel 70 umgeladen.

Umfasst das Kommissionierlager 1 die zweiten Stapelladehilfen 100b, so wird der Warenträger 3, Warenträgerteilstapel oder Warenträgerstapel von der Transportladehilfe 7b, 7c, welche am Andienungsplatz 71a, 71b bereitgestellt wird, von der Transfervorrichtung 72 aufgenommen und danach auf das Zielladehilfsmittel 170 umgeladen.

Die Transfervorrichtung 72 kann beispielweise durch ein Greifersystem gebildet sein. Das Greifersystem kann beispielweise einen Grundkörper, eine Vakuum-Saugeinheit mit zumindest einem Sauggreifer oder mehreren übereinander und/oder nebeneinander angeordneten Sauggreifern und einen am Grundkörper beweglich gelagerten Tragboden umfassen. Das Entladen der Transportladehilfe 7b, 7c mit diesem Greifersystem erfolgt derart, dass vorerst mit der Saugeinheit ein Warenträger 3 oder ein Warenträgerteilstapel einseitig angehoben wird, sodass sich ein Spalt zwischen dem oberen und dem darunter liegenden Warenträger 3 öffnet und danach der Tragboden unabhängig von der Saugeinheit in horizontaler Richtung unter den einseitig angehobenen Warenträger 3 oder einseitig angehobenen Warenträgerteilstapel eingeschoben wird, um diesen Warenträger 3 oder Warenträgerteilstapel aufzunehmen. Ein derartiges Greifersystem ermöglicht somit das Entladen eines einzelnen Warenträgers 3 oder aber auch Warenträgerteilstapel. Grundsätzlich ist es auch denkbar, dass die Anzahl der übereinander angeordneten Sauggreifer so gewählt wird, dass ein gesamter Warenträgerstapel einseitig angehoben werden kann und der Tragboden den gesamten Warenträgerstapel aufnehmen kann.

Andererseits kann das Greifersystem auch derart ausgelegt werden, dass eine Greifereinheit nach dem Formschlussprinzip und/oder Reibschlussprinzip wirkt und diese einen einzelnen Warenträger 3, Warenträgerteilstapel oder Warenträgerstapel formschlüssig und/oder reibschlüssig greift.

Nach einer nicht gezeigten zweiten Ausführung kann die Entladevorrichtung 11 einen Gelenkarmroboter umfassen. Der Gelenkarmroboter weist ein relativ gegenüber einer Roboterbasis bewegbares Greifersystem auf, mittels welcher ein einzelner Warenträger 3, ein Warenträgerteilstapel oder Warenträgerstapel 8 von der Transportladehilfe 7b, 7c entnommen und danach auf ein Zielladehilfsmittel 70, 170 umgeladen wird.

Die schematisch gezeigte Ausführung der automatisiert betriebenen Entladevorrichtung 11 umfasst einen Andienungsplatz 91a für eine erste Stapelladehilfe 100a (oder zweite Stapelladehilfe 100b) oder mehrere Andienungsplätze 91a, 91b für erste Stapelladehilfen 100a (oder zweite Stapelladehilfen 100b) und die relativ gegenüber dem Andienungsplatz 91a, 91b bewegbare Transfervorrichtung 72 zum Beladen des auf dem Andienungsplatz 91a, 91b bereitgestellten Zielladehilfsmittels 70, 170.

Weist die Entladestation mehr als eine automatisiert betriebene Entladevorrichtung 11 auf, so umfasst jede Entladevorrichtung 11 einen Andienungsplatz 91a für ein Zielladehilfsmittel 70, 170 oder mehrere Andienungsplätze 91a, 91b für Zielladehilfsmittel 70, 170 und die relativ gegenüber dem Andienungsplatz 91a, 91b bewegbare Transfervorrichtung 72 zum Beladen des auf dem Andienungsplatz 91a, 91b bereitgestellten Zielladehilfsmittels 70, 170.

Wie oben beschrieben, kann das (zusätzliche) Zielladehilfsmittel 70 am Andienungsplatz 91a, 91b mit der ersten Stapelladehilfe 100a oder das Zielladehilfsmittel 170 (welche durch die zweite Stapelladehilfe 100b gebildet ist) am Andienungsplatz 91a, 91b bereitgestellt werden.

Es erweist sich auch von Vorteil, wenn die Entladestation nahe der Entladevorrichtung 11 oder nahe jeder Entladevorrichtung 11 zumindest eine separate Pufferfläche 92 aufweist. In gezeigter Ausführung ist der Entladevorrichtung 11 je Andienungsplatz 91a, 91b eine Pufferfläche 92 zugeordnet. Grundsätzlich kann die Entladestation aber auch nur eine Pufferfläche 92 umfassen. Die Pufferfläche 92 ist vorzugsweise auf einem Boden des Kommissionierlagers 1 ausgebildet. Auf diese Weise ist es möglich, dass die leeren Zielladehilfsmittel 70 mit der ersten Stapelladehilfe 100a und das Zielladehilfsmittel 170 mit der zweiten Stapelladehilfe 100b nahe zur Entladevorrichtung(en) 11 auf der Pufferfläche 92 gepuffert und nach Bedarf von den Transportfahrzeugen 9 zu dem jeweiligen Andienungsplatz 91a, 91b der Entladevorrichtung(en) 11 auf kurzem Wege transportiert werden.

Nach gezeigter Ausführung, werden die Zielladehilfsmittel 70 mit der ersten Stapelladehilfe 100a und das Zielladehilfsmittel 170 mit der zweiten Stapelladehilfe 100b mit den Transportfahrzeugen 9 zu dem jeweiligen Andienungsplatz 91a, 91b der Entladevorrichtung(en) 11 antransportiert und von dem jeweiligen Andienungsplatz 91a, 91b der Entladevorrichtung(en) 11 abtransportiert.

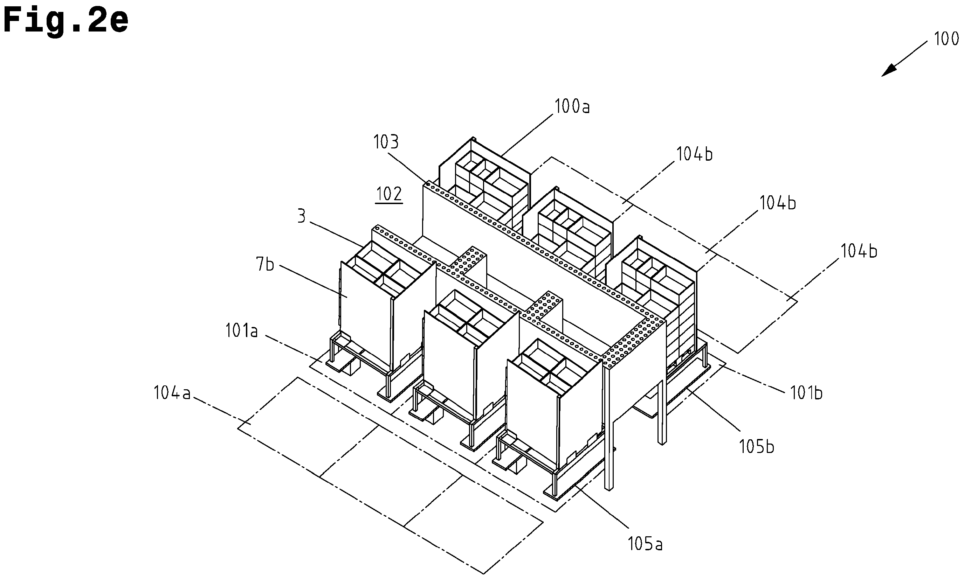

Wie in den Fig. 1b und 2e ersichtlich, kann die Entladestation zusätzlich eine oder mehrere teilautomatisiert betriebene (schematisch angedeutete) Entladevorrichtung(en) 100 umfassen, an welcher die Warenträger 3 oder Warenträgerstapel von einer Transportladehilfe 7b, 7c auf ein oder mehrere Zielladehilfsmittel 70, 170 umgeladen werden. Es kann eine einzige Entladevorrichtung 100 vorgesehen werden, an welcher die Warenträger 3 oder Warenträgerstapel von einer Transportladehilfe 7b, 7c auf ein oder mehrere Zielladehilfsmittel 70, 170 umgeladen werden. Die Anzahl an Entladevorrichtungen 100 kann abhängig von der geforderten Kommissionierleistung variieren. Vorzugsweise sind diese Entladevorrichtungen 100 identisch aufgebaut.

Nach gezeigter Ausführung bildet die eine oder mehreren teilautomatisiert betriebenen Entladevorrichtung(en) 100 gleichzeitig eine oder mehrere Umladevorrichtung(en) bzw. Kommissioniervorrichtung(en) zur Zusammenstellung der Warenträger 3 auf dem oder den Zielladehilfsmittel(n) 70 gemäß Kommissionierauftrag.

An der(n) Entladevorrichtung(en) 100 werden Warenträger 3 kommissioniert, welche nicht an der(n) Entladevorrichtung(en) 11 automatisch kommissioniert werden können, weil die Warenträger 3 eine Grundfläche von kleiner als 300mm x 400mm oder die Warenträger 3 eine zu geringe Formstabilität aufweisen, um automatisch manipuliert werden zu können.

Die teilautomatisiert betriebene(n) Entladevorrichtung(en) 100 umfassen jeweils einen ersten Andienungsplatz 101a für eine Transportladehilfe 7b, 7c, einen zweiten Andienungsplatz 101b für eine erste Stapelladehilfe 100a (oder zweite Stapelladehilfe 100b) und einen Arbeitsplatz 102 für eine Kommissionierperson / einen Lagerarbeiter (aus Gründen der besseren Übersicht nicht dargestellt). Der Arbeitsplatz 102 kann auch eine Arbeitsfläche 103 mit Rollen und dgl. umfassen, um eine ergonomische Manipulation der Warenträger 3 zu ermöglichen. Der erste Andienungsplatz 101a und der zweite Andienungsplatz 101b sind einander gegenüberliegend angeordnet. Zusätzlich kann die Entladevorrichtung 100 eine (nicht dargestellte) Eingabe- und/oder Ausgabevorrichtung umfassen, mittels welcher Kommissionieranweisungen für die Kommissionierperson ausgegebenen und an welcher Kommissionierbefehle (Quittierung) durch die Kommissionierperson eingegeben werden.

Wie oben beschrieben, kann das (zusätzliche) Zielladehilfsmittel 70 am Andienungsplatz 101b mit der ersten Stapelladehilfe 100a oder das Zielladehilfsmittel 170 (welche durch die zweite Stapelladehilfe 100b gebildet ist) am Andienungsplatz 101b bereitgestellt werden.

Während nach der oben beschrieben Ausführung an der(den) Entladevorrichtung(en) 11 ein automatischer Kommissioniervorgang durchgeführt wird, wird an der(den) Entladevorrichtung(en) 100 ein manueller Kommissioniervorgang durchgeführt.

"Teilautomatisiert" bedeutet in genanntem Zusammenhang, dass der Antransport von Transportladehilfen 7b, 7c zur Entladevorrichtung 100, Abtransport von Transportladehilfen 7a, 7c von der Entladevorrichtung 100, der Antransport von ersten Stapelladehilfen 100a (oder zweiten Stapelladehilfe 100b) zur Entladevorrichtung 100, der Abtransport von ersten Stapelladehilfen 100a (oder zweiten Stapelladehilfe 100b) von der Entladevorrichtung 100 automatisch und die Kommissionierung durch eine Kommissionierperson manuell erfolgt.

Die Transportladehilfe 7b, 7c wird vom Transportfahrzeug 9 zu dem ersten Andienungsplatz 101a antransportiert und auf diesen übergeben, um die Transportladehilfe 7b, 7c am Andienungsplatz 101a bereitzustellen, oder vom ersten Andienungsplatz 101a auf das Transportfahrzeug 9 übergeben, um die Transportladehilfe 7a, 7c vom Andienungsplatz 101a abzutransportieren.

Ebenso wird die erste Stapelladehilfe 100a (oder zweite Stapelladehilfe 100b) vom Transportfahrzeug 9 zu dem zweiten Andienungsplatz 101b antransportiert und auf diesen übergeben, um die erste Stapelladehilfe 100a (oder zweite Stapelladehilfe 100b) am Andienungsplatz 101b bereitzustellen, oder vom zweiten Andienungsplatz 101b auf das Transportfahrzeug 9 übergeben, um die erste Stapelladehilfe 100a (oder zweite Stapelladehilfe 100b) vom Andienungsplatz 101b abzutransportieren.

Es erweist sich auch von Vorteil, wenn die Entladestation nahe der Entladevorrichtung 100 oder nahe jeder Entladevorrichtung 100 zumindest eine separate Pufferfläche 104a für die Transportladehilfe 7b, 7c und zumindest eine separate Pufferfläche 104b für die erste Stapelladehilfe 100a (oder zweite Stapelladehilfe 100b) aufweist. In gezeigter Ausführung ist der Entladevorrichtung 100 je Andienungsplatz 101a eine Pufferfläche 104a und je Andienungsplatz 101b eine Pufferfläche 104b zugeordnet. Grundsätzlich kann die Entladestation aber auch nur eine Pufferfläche 104a oder Pufferfläche 104b umfassen. Die Pufferfläche 104a, 104b ist vorzugsweise auf einem Boden des Kommissionierlagers 1 ausgebildet. Auf diese Weise ist es möglich, dass die beladene(n) Transportladehilfe(n) 7b, 7c und die erste Stapelladehilfe 100a (die zweite Stapelladehilfe 100b) nahe zur Entladevorrichtung(en) 100 auf der Pufferfläche 104a, 104b gepuffert und nach Bedarf von den Transportfahrzeugen 9 zu dem jeweiligen Andienungsplatz 101a, 101b der Entladevorrichtung(en) 100 auf kurzem Wege transportiert werden.

Nach gezeigter Ausführung ist der erste Andienungsplatz 101a auf einer Hubplattform 105a ausgebildet, auf welcher die Transportladehilfe 7b, 7c abgestellt und die Warenträgerstapelgruppe 8a, 8b, 8c auf ein Andienungsniveau angehoben werden kann, um ein ergonomisches Arbeiten zu ermöglichen, und der zweite Andienungsplatz 101b auf einer Hubplattform 105b ausgebildet, auf welcher die erste Stapelladehilfe 100a (oder zweite Stapelladehilfe 100b) abgestellt und das Zielladehilfsmittel 70, 170 (wenn das Zielladehilfsmittel 70, 170 noch unbeladen ist) oder einen Auftragsstapel 106 (wenn das Zielladehilfsmittel 70, 170 an der Entladestation mit einer oder mehreren automatisiert betriebene(n) Beladevorrichtung(en) 11 bereits beladen wurde) auf ein Andienungsniveau angehoben werden kann, um ein ergonomisches Arbeiten zu ermöglichen.

Es sei an dieser Stelle hingewiesen, dass unabhängig davon wie die Entladevorrichtung 11, 100 gestaltet ist, es sich von Vorteil erweisen kann, wenn der Andienungsplatz 71a, 71b, 101a ebenso die oben beschriebenen Ankipp- und Rückkippvorrichtungen 52 aufweisen kann, durch welche die Transportladehilfe 7a, 7b, 7c vor deren Entladung derart angekippt, dass der Bodenwandteil 171 in eine im Wesentliche horizontale Transportebene (Übergabeebene) bewegt wird. Eine solche Ausführung kann Anwendung finden, wenn die Transportladehilfe 7b, 7c gemäß Fig. 4a bis 4c, 6 gestaltet ist und keinen horizontalen Bodenwandteil 171 aufweist. Die Ankipp- und Rückkippvorrichtungen 52 können jeweils eine Abstellplatte 53 umfassen, auf welchen die Stellfüße 175 (drei oder vier Stellfüße 174) der Transportladehilfe 7b, 7c abgestellt werden. Es sind drei oder vier Ankipp- und Rückkippvorrichtungen 52 vorgesehen. Damit lässt sich auch die Entladung der Transportladehilfe 7b, 7c vereinfachen, wenn diese gemäß Fig. 4a bis 4c, 6 gestaltet ist.

Ebenso kann es sich von Vorteil erweisen, wenn der Andienungsplatz 91a, 91b, 101b ebenso die oben beschriebenen Ankipp- und Rückkippvorrichtungen 52 aufweisen kann, durch welche das erste Zielladehilfsmittel 70 oder zweite Zielladehilfsmittel 170 (respektive erste Stapelladehilfe 100a oder zweite Stapelladehilfe 100b) vor deren Beladung derart angekippt, dass der Bodenwandteil 206 in eine im Wesentliche horizontale Transportebene (Übernahmeebene) bewegt wird.

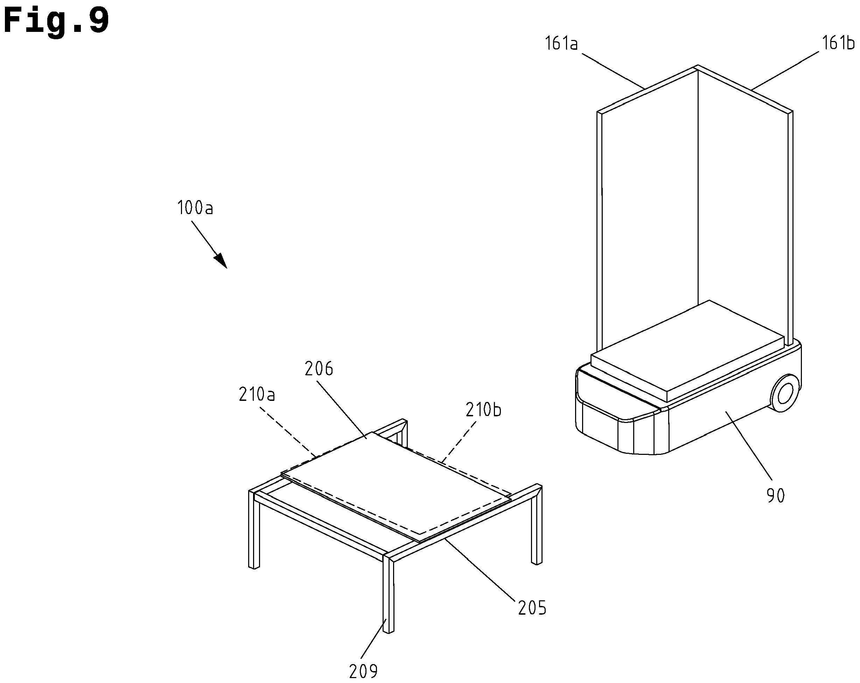

Eine solche Ausführung kann Anwendung finden, wenn erste Zielladehilfsmittel 70 oder zweite Zielladehilfsmittel 170 gemäß Fig. 7a bis 7c, 9 gestaltet ist und keinen horizontalen Bodenwandteil 206 aufweist. Die Ankipp- und Rückkippvorrichtungen 52 können jeweils eine Abstellplatte 53 umfassen, auf welchen die Stellfüße 209 (drei oder vier Stellfüße 209) des ersten Zielladehilfsmittel 70 oder zweiten Zielladehilfsmittel 170 abgestellt werden. Es sind drei oder vier Ankipp- und Rückkippvorrichtungen 52 vorgesehen. Damit lässt sich die Beladung des ersten Zielladehilfsmittel 70 oder zweiten Zielladehilfsmittel 170 vereinfachen, wenn diese gemäß Fig. 7a bis 7c, 9 gestaltet ist.

In Fig. 1a und 2b ist eine Bestückungsstation mit einer oder mehreren automatisiert betriebenen Bestückungsvorrichtung(en) 110 gezeigt, welche das Kommissionierlager 1 umfassen kann, durch welche ein Bestücken der ersten Stapelladehilfe 100a mit einem Zielladehilfsmittel 70 möglich ist, sofern eine erste Stapelladehilfe 100a im Kommissionierlager 1 verwendet wird. Das Zielladehilfsmittel 70 wird auf dem Boden (Fig. 7a bis 7c, 8a, 9) der ersten Stapelladehilfe 100a abgestellt.

Die Bestückungsvorrichtung(en) 110 umfassen jeweils einen Andienungsplatz 111 für eine leere erste Stapelladehilfe 100a und eine relativ gegenüber dem Andienungsplatz 111 bewegbare Transfervorrichtung 112 zum Beladen der auf dem Andienungsplatz 111 bereitgestellten ersten Stapelladehilfe 100a.

Es erweist sich auch von Vorteil, wenn die Bestückungsstation nahe der Bestückungsvorrichtung 110 oder nahe jeder Bestückungsvorrichtung 110 zumindest eine separate Pufferfläche 113 aufweist. In gezeigter Ausführung ist der Bestückungsvorrichtung 110 je Andienungsplatz 111 eine Pufferfläche 113 zugeordnet. Grundsätzlich kann die Bestückungsstation aber auch nur eine Pufferfläche 113 umfassen. Die Pufferfläche 113 ist vorzugsweise auf einem Boden des Kommissionierlagers 1 ausgebildet.

Eine leere erste Stapelladehilfe 100a wird durch ein autonom verfahrbares, fahrerloses Transportfahrzeug 9 zur Bestückungsstation transportiert und an der Bestückungsvorrichtung 110 oder auf einer Pufferfläche 113 bereitgestellt. Die Stapelladehilfe 100a wird nach deren Bestückung mit einem Zielladehilfsmittel 70 durch ein autonom verfahrbares, fahrerloses Transportfahrzeug 9 von der Bestückungsstation, insbesondere von der Bestückungsvorrichtung 110 zu der Entladestation transportiert.

In Fig. 1a und 2b ist auch eine Auftragsstapel-Ladungssicherungsstation mit einer oder mehreren automatisiert betriebenen Ladungssicherungsvorrichtung(en) 120 gezeigt, welche das Kommissionierlager 1 umfassen kann, durch welche eine Ladungssicherung eines Auftragsstapels 106 mit einem Sicherungsmittel 121 möglich ist.

Die Ladungssicherungsvorrichtung(en) 120 umfassen jeweils einen Andienungsplatz 122 für eine beladene erste Stapelladehilfe 100a (oder eine beladene zweite Stapelladehilfe 100b), eine Zielladehilfsmittel-Hebevorrichtung und ein Sicherungsmittel-Umwicklungsgerät oder Sicherungsmittel-Umreifungsgerät. Die Zielladehilfsmittel-Hebevorrichtung umfasst einen vertikal verstellbaren Hubrahmen 123 und auf diesem gelagerte Teleskopgabeln 124, letztere zwischen einer zurückgezogenen Ausgangsstellung und einer vorragenden Aufnahmestellung bewegbar sind.

Es sei erwähnt, dass die Teleskopgabeln 124 in der Aufnahmestellung einerseits ein Zielladehilfsmittel 70 gemeinsam mit dem Auftragsstapel 106, wenn keine Stapelladehilfen eingesetzt werden, oder wenn erste Stapelladehilfe 100a (mit zusätzlichen Zielladehilfsmittel 70) eingesetzt werden, und andererseits ausschließlich den Auftragsstapel 106, wenn zweite Stapelladehilfe 100b (ohne zusätzlichen Zielladehilfsmittel 70) eingesetzt werden, aufnehmen, wobei das Zielladehilfsmittel 70 gemeinsam mit dem Auftragsstapel 106 oder der Auftragsstapel 106 durch eine Hubbewegung des Hubrahmens 123 angehoben/abgesenkt werden kann.

Es erweist sich auch von Vorteil, wenn die Auftragsstapel-Ladungssicherungsstation nahe der Ladungssicherungsvorrichtung 120 oder nahe jeder Ladungssicherungsvorrichtung 120 zumindest eine separate Pufferfläche 125 aufweist. In gezeigter Ausführung ist der Ladungssicherungsvorrichtung 120 je Andienungsplatz 122 eine Pufferfläche 125 zugeordnet. Grundsätzlich kann die Auftragsstapel-Ladungssicherungsstation aber auch nur eine Pufferfläche 125 umfassen. Die Pufferfläche 125 ist vorzugsweise auf einem Boden des Kommissionierlagers 1 ausgebildet.

Die Ladungssicherungsvorrichtung 120 umfasst nach gezeigter Ausführung ein Umwicklungsgerät, welches eine thermoplastische Folie kraftschlüssig in Umfangsrichtung um den Auftragsstapel 106 wickelt, während der Auftragsstapel 106 durch die Zielladehilfsmittel-Hebevorrichtung aus der ersten Stapelladehilfe 100a oder zweiten Stapelladehilfe 100b herausgehoben wird. Die thermoplastische Folie bildet das Sicherungsmittel 121.

Die Ladungssicherungsvorrichtung 120 kann alternativ auch ein Umreifungsgerät verwendet werden, welches dazu eingerichtet ist, zumindest ein Verschlussband in einer im Wesentlichen horizontalen Richtung umfänglich am Auftragsstapel 106 zu befestigen, während sich der Auftragsstapel 106 in der Ladungssicherungsvorrichtung 120 befindet. Das Verschlussband bildet das Sicherungsmittel 121.

Eine mit dem (fertigen) Auftragsstapel 106 beladene erste Stapelladehilfe 100a (oder zweite Stapelladehilfe 100b) wird durch ein autonom verfahrbares, fahrerloses Transportfahrzeug 9 zur Auftragsstapel-Ladungssicherungsstation transportiert und an der Ladungssicherungsvorrichtung 120 oder auf einer Pufferfläche 125 bereitgestellt.

Nach dem Entfernen des Auftragsstapels 106 von der ersten Stapelladehilfe 100a kann die leere erste Stapelladehilfe 100a durch ein autonom verfahrbares, fahrerloses Transportfahrzeug 9 von der Auftragsstapel-Ladungssicherungsstation, insbesondere von der Ladungssicherungsvorrichtung 120 zu der Bestückungsstation transportiert werden.

Umfassen die Stapelladehilfen die zweite Stapelladehilfe 100b, kann nach dem Entfernen des Auftragsstapels 106 von der zweiten Stapelladehilfe 100b, die leere zweite Stapelladehilfe 100b durch ein autonom verfahrbares, fahrerloses Transportfahrzeug 9 von der Auftragsstapel-Ladungssicherungsstation, insbesondere von der Ladungssicherungsvorrichtung 120 zu der Entladestation transportiert werden.

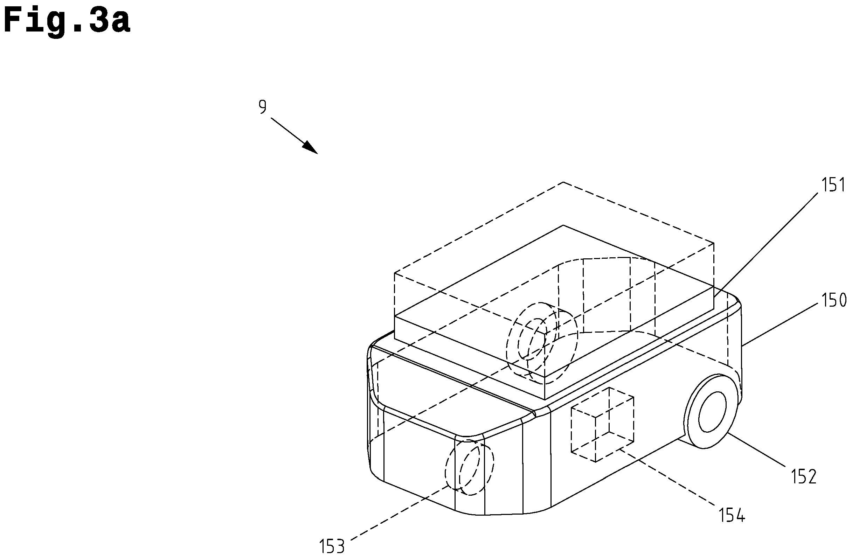

Fig. 3a zeigt eine erste Ausführung eines der autonom verfahrbaren, lenkbaren Transportfahrzeuge 9 eines fahrerlosen Transportsystems. Die Transportfahrzeuge 9 werden zum Transport von Transportladehilfen 7a, 7b, 7c von einem übergeordneten Leitrechner angesteuert, um beispielweise
- leere Transportladehilfen 7a zur Beladestation zu transportieren und eine der leeren Transportladehilfen 7a entweder an der automatisiert betriebenen Beladevorrichtung 10 oder auf der Pufferfläche 43 nahe der Beladevorrichtung 10 bereitzustellen, und
- die mit der Warenträgerstapelgruppe 8a, 8b, 8c beladene Transportladehilfe 7b von der Beladestation zu dem Lagerbereich 5 zu transportieren, und
- eine oder mehrere die zu einem Kommissionierauftrag benötigten Warenträger 3 enthaltende(n) Transportladehilfe(n) 7b, 7c vom Lagerbereich 5 zu einer Entladestation zu transportieren und genannte Transportladehilfe(n) 7b, 7c entweder an einer oder mehreren automatisiert betriebenen Entladevorrichtung(en) 11 oder auf einer Pufferfläche 73 nahe der Entladevorrichtung(en) 11 bereitzustellen.

Das Steuerungssystem 16 kann diesen Leitrechner umfassen.

Das Transportfahrzeug 9 (Flurförderfahrzeug) umfasst ein Fahrgestell 150 mit einer Antriebseinheit und eine auf dem Fahrgestell 150 angeordnete Ladeplattform 151 zur Aufnahme / Abgabe / Transport einer mobilen (ortsungebundenen) Transportladehilfe 7a, 7b, 7c und/oder einer mobilen (ortsungebundenen) Stapelladehilfe 100a und/oder einer mobilen (ortsungebundenen) Stapelladehilfe 100b. Die Antriebseinheit umfasst an dem Fahrgestell 150 drehbar gelagerte Räder 152, 153, wovon zumindest eines der Räder 152 mit einem (nicht dargestellten) Antrieb gekuppelt ist, und zumindest eines der Räder 153 lenkbar ist. Es können auch beide Räder 152 mit dem Antrieb gekuppelt und durch diesen angetrieben werden. Das Transportfahrzeug 9 kann aber auch vier Räder umfassen, wovon zwei Räder lenkbar sind.

Nach gezeigter Ausführung ist die Ladeplattform 151 zwischen einer (in festen Linien eingetragenen) Ausgangsstellung und einer (in strichlierte Linien eingetragenen) Transportstellung verstellbar am Fahrgestell 150 gelagert. In der Ausgangsstellung kann eine auf dem Boden des Kommissionierlagers 1, insbesondere auf der Pufferfläche, der Lagerfläche, in der Wartezone oder auf dem Andienungsplatz abgestellte Transportladehilfe 7a, 7b, 7c oder der Pufferfläche oder auf dem Andienungsplatz abgestellte Stapelladehilfe 100a, 100b unterfahren werden, um diese Transportladehilfe 7a, 7b, 7b oder diese Stapelladehilfe 100a, 100b auf der Ladeplattform 151 aufzunehmen. Wird die Ladeplattform 151 aus der Ausgangsstellung in Richtung der Transportstellung verstellt, kann eine auf dem Boden abgestellte Transportladehilfe 7a, 7b, 7b oder Stapelladehilfe 100a, 100b angehoben und danach transportiert werden. In der Transportstellung ist die Transportladehilfe 7a, 7b, 7b oder Stapelladehilfe 100a, 100b von dem Boden des Kommissionierlagers 1 abgehoben und kann diese zwischen dem Anlieferbereich 4, Lagerbereich 5 und dem Auftragsbearbeitungsbereich 6 transportiert werden. Wird die Ladeplattform 151 aus der Transportstellung in Richtung der Ausgangsstellung verstellt, kann die Transportladehilfe 7a, 7b, 7b oder Stapelladehilfe 100a, 100b auf dem Boden abgestellt werden.

Das Transportfahrzeug 9 umfasst ferner eine schematisch in strichlierte Linien dargestellte Fahrsteuerung 154 zum Empfang von Befehlen von dem übergeordneten Leitrechner und zum Steuern/Regeln der Bewegungen des autonomen Transportfahrzeuges 9. Die Fahrsteuerung 154 kann auch Mittel zur (drahtlosen) Datenübertragung an und von dem Transportfahrzeug 9 umfassen. Schließlich umfasst das Transportfahrzeug 9 nicht dargestellte Sensoren zum Erfassen der Umgebung des autonomen Transportfahrzeuges 9 und zur Orientierung im Raum. Der Antrieb der Antriebseinheit und die Sensoren sind mit der Fahrsteuerung 154 verbunden.

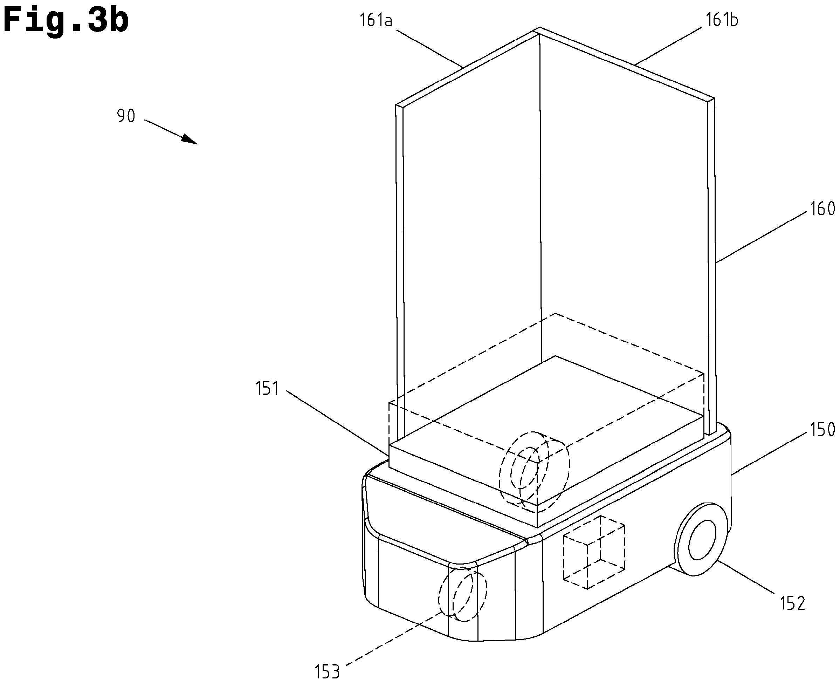

Fig. 3b zeigt eine zweite Ausführung eines der autonom verfahrbaren, lenkbaren Transportfahrzeuge 90 eines fahrerlosen Transportsystems. Das Transportfahrzeug 90 unterscheidet sich gegenüber der ersten Ausführung nach Fig. 3a dadurch, dass zusätzlich eine Transportsicherung 160 vorgesehen ist. Die Transportsicherung 160 kann der Lagestabilisierung einer Warenträgerstapelgruppe 8a, 8b, 8c dienen, wenn diese auf der mobilen Transportladehilfe 7a, 7b, 7c aufgenommen, transportiert und/oder entladen wird. Die Transportsicherung 160 kann der Lagestabilisierung eines Auftragsstapels 106 dienen, wenn dieser auf der mobilen Stapelladehilfe 100a, 100b aufgenommen, transportiert und/oder beladen wird.

Konkret umfasst das Transportfahrzeug 90 die oben beschriebene Ladeplattform 151 und zu dieser benachbart angeordnete Seitenwände. Die Seitenwände bilden die Transportsicherung 160 und umfassen eine erste Seitenwand 161a und eine zweite Seitenwand 161b. Vorzugsweise umfasst die Transportsicherung 160 ausschließlich die erste Seitenwand 161a und zweite Seitenwand 161b. Die erste Seitenwand 161a und zweite Seitenwand 161b schließen einen Winkel, insbesondere rechten Winkel ein.

Nach einer in den Fig. 3b und 6 respektive Fig. 3b und 9 gezeigten ersten Ausführung können die erste Seitenwand 161a und zweite Seitenwand 161b jeweils an einer die Ladeplattform 151 aufnehmende Ladeebene in einem rechten Winkel vertikal vorragen.

Nach einer nicht gezeigten zweiten Ausführung können die erste Seitenwand 161a und zweite Seitenwand 161b jeweils an einer die Ladeplattform 151 aufnehmende Ladeebene in einem Winkel größer 90° vertikal vorragen. Eine solche Ausführung kann von Vorteil sein, wenn die Transportladehilfe (ohne Seitenwände) oder die Stapelladehilfe (ohne Seitenwände) einen Bodenwandteil aufweisen, der sowohl um einen ersten Neigungswinkel (α₁) gegenüber einer Horizontalebene (respektive Ladeebene) in Richtung zur ersten Seitenwand 161a nach unten geneigt verläuft als auch um einen zweiten Neigungswinkel (α₂) gegenüber einer Horizontalebene (respektive Ladeebene) in Richtung zur zweiten Seitenwand 161b nach unten geneigt verläuft. Sobald die Transportladehilfe (ohne Seitenwände) oder die Stapelladehilfe (ohne Seitenwände) auf der Ladeplattform 151 übernommen wurde, sind die erste Seitenwand 161a und die zweite Seitenwand 161b jeweils normal auf den Bodenwandteil ausgerichtet.

Die Fig. 4a bis 4c zeigen eine erste Ausführung einer Transportladehilfe 7a, 7b, 7c, wie sie in dem gezeigten Kommissionierlager 1 eingesetzt werden können, konkret die leere Transportladehilfe 7a.

Die Transportladehilfe 7a, 7b, 7c umfasst ein Transportgestell und einen Boden, wobei das Transportgestell einen Transportrahmen 172 ausbildet, gegen welchen die Ladeplattform 151 des Transportfahrzeuges 9 angestellt werden kann, und wobei der Boden einen Bodenwandteil 171 ausbildet, auf welchem die Warenträgerstapelgruppe 8a, 8b, 8c (mit oder ohne Anlieferladungsträger 17a, 17b, 17c) abgestellt werden kann.

Die Transportladehilfe 7a, 7b, 7c umfasst nach gezeigter Ausführung zusätzlich Seitenwände, welche eine Transportsicherung 174 zur Lagestabilisierung der Warenträgerstapelgruppe 8a, 8b, 8c bilden, wenn diese auf dem Bodenwandteil 171 abgestellt ist, und eine erste Seitenwand 173a und eine zweite Seitenwand 173b umfassen. Die erste Seitenwand 173a und zweite Seitenwand 173b sind mit dem Bodenwandteil 171 verbunden. Vorzugsweise umfasst die Transportsicherung 174 ausschließlich die erste Seitenwand 173a und zweite Seitenwand 173b. Bevorzugt schließen die erste Seitenwand 173a und eine zweite Seitenwand 173b einen Winkel, insbesondere rechten Winkel ein.

Zusätzlich kann die Transportladehilfe 7a, 7b, 7c Stellfüße 175 umfassen, welche am Transportgestell befestigt sind. Die Transportladehilfe 7a, 7b, 7c wird über die Stellfüße 175 am Boden oder einer Fördertechnik (wie im Nachfolgenden beschrieben wird) des Kommissionierlagers 1 abgestellt. In einer nicht gezeigten Ausführung können anstatt der Stellfüße 175 auch Räder am Transportgestell vorgesehen werden.

Es kann sich von Vorteil erweisen, wenn der Bodenwandteil 171 sowohl um einen ersten Neigungswinkel (α₁) gegenüber einer zwischen der ersten Seitenwand 173a und zweiten Seitenwand 173b aufgespannten Horizontalebene in Richtung zur ersten Seitenwand 173a nach unten geneigt verläuft als auch um einen zweiten Neigungswinkel (α₂) gegenüber einer zwischen der ersten Seitenwand 173a und zweiten Seitenwand 173b aufgespannten Horizontalebene in Richtung zur zweiten Seitenwand 173b nach unten geneigt verläuft. Die erste Seitenwand 173a und zweite Seitenwand 173b sind normal auf den Bodenwandteil 171 ausgerichtet. Die Neigungswinkel α₁, α₂ betragen bevorzugt jeweils zwischen 3° und 6°.

Der Bodenwandteil 171 ist bevorzugt in der Grundfläche an die Abmessungen der Warenträgerstapelgruppe 8a, 8b, 8c respektive der oben beschriebenen Anlieferladungsträger 17a, 17b, 17c angepasst. Um die Flexibilität in der Verwendung der Transportladehilfe 7a, 7b, 7c zu erhöhen kann die Grundfläche an die Abmessung der größten Warenträgerstapelgruppe 8a, 8b, 8c respektive des größten Anlieferladungsträger 17a, 17b, 17c angepasst werden. Die Transportladehilfe 7a, 7b, 7c kann aber auch an die Abmessung einer einzigen Warenträgerstapelgruppe 8a, 8b, 8c respektive eines einzigen Anlieferladungsträger 17a, 17b, 17c angepasst werden.

Fig. 5 zeigt ein zweite Ausführung einer Transportladehilfe 7a, 7b, 7c, wie sie in dem gezeigten Kommissionierlager 1 eingesetzt werden können, konkret die leere Transportladehilfe 7a.

Die Transportladehilfe 7a, 7b, 7c umfasst ein Transportgestell und einen Boden, wobei das Transportgestell einen Transportrahmen 172 ausbildet, gegen welchen die Ladeplattform 151 des Transportfahrzeuges 9 angestellt werden kann, und wobei der Boden einen Bodenwandteil 171 ausbildet, auf welchem die Warenträgerstapelgruppe 8a, 8b, 8c (mit oder ohne Anlieferladungsträger 17a, 17b, 17c) abgestellt werden kann.

Die Transportladehilfe 7a, 7b, 7c umfasst nach gezeigter Ausführung zusätzlich Seitenwände, welche eine Transportsicherung 174 zur Lagestabilisierung der Warenträgerstapelgruppe 8a, 8b, 8c bilden, wenn diese auf dem Bodenwandteil 171 abgestellt ist, und eine erste Seitenwand 173a und eine zweite Seitenwand 173b umfassen. Die erste Seitenwand 173a und zweite Seitenwand 173b sind mit dem Bodenwandteil 171 verbunden. Vorzugsweise umfasst die Transportsicherung 174 ausschließlich die erste Seitenwand 173a und zweite Seitenwand 173b. Bevorzugt schließen die erste Seitenwand 173a und eine zweite Seitenwand 173b einen Winkel, insbesondere rechten Winkel ein.

Zusätzlich kann die Transportladehilfe 7a, 7b, 7c Stellfüße 175 umfassen, welche am Transportgestell befestigt sind. Die Transportladehilfe 7a, 7b, 7c wird über die Stellfüße 175 am Boden des Kommissionierlagers 1 abgestellt. In einer nicht gezeigten Ausführung können anstatt der Stellfüße 175 auch Räder am Transportgestell vorgesehen werden.

Im Unterschied zur ersten Ausführung ist jedoch der oben näher beschriebene Bodenwandteil 171 horizontal ausgerichtet und verläuft in einer zwischen der ersten Seitenwand 173a und zweiten Seitenwand 173b aufgespannten Horizontalebene. Die erste Seitenwand 173a und zweite Seitenwand 173b sind normal auf den Bodenwandteil 171 ausgerichtet und mit dem Bodenwandteil 171 verbunden.

Fig. 6 zeigt ein dritte Ausführung einer Transportladehilfe 7d, wie sie in dem gezeigten Kommissionierlager 1 eingesetzt werden können, konkret eine leere Transportladehilfe 7d.

Die Transportladehilfe 7d umfasst ein Transportgestell und einen Boden, wobei das Transportgestell einen Transportrahmen 172 ausbildet, gegen welchen die Ladeplattform 151 des Transportfahrzeuges 9 angestellt werden kann, und wobei der Boden einen Bodenwandteil 171 ausbildet, auf welchem die Warenträgerstapelgruppe 8a, 8b, 8c (mit oder ohne Anlieferladungsträger 17a, 17b, 17c) abgestellt werden kann. Die Transportladehilfe 7d umfasst nach gezeigter Ausführung keine zusätzlichen Seitenwände, diese werden durch das Transportfahrzeug 90 bereitgestellt, wie oben in Fig. 3b beschrieben.

Zusätzlich kann die Transportladehilfe 7d Stellfüße 175 umfassen, welche am Transportgestell befestigt sind. Die Transportladehilfe 7d wird über die Stellfüße 175 am Boden oder einer Fördertechnik (wie im Nachfolgenden beschrieben wird) des Kommissionierlagers 1 abgestellt. In einer nicht gezeigten Ausführung können anstatt der Stellfüße 175 auch Räder am Transportgestell vorgesehen werden.

In der gezeigten Ausführung ist der oben näher beschriebene Bodenwandteil 171 horizontal ausgerichtet, wenngleich es auch möglich ist, dass der besagte Bodenwandteil 171 sowohl um einen ersten Neigungswinkel (α₁) gegenüber einer Horizontalebene in Richtung zu einer ersten Längskante 176a des Bodenwandteils 171 nach unten geneigt verläuft als auch um einen zweiten Neigungswinkel (α₂) gegenüber einer Horizontalebene in Richtung zu einer zweiten Längskante 176b des Bodenwandteils 171 nach unten geneigt verläuft, wie in Fig. 6 in strichlierte Linien eingetragen. Die Neigungswinkel α₁, α₂ betragen bevorzugt jeweils zwischen 3° und 6°.

Die Fig. 7a bis 7c, 8a, 8b und 9 zeigen unterschiedliche Ausführungen einer ersten Stapelladehilfe 100a, wie sie in dem gezeigten Kommissionierlager 1 eingesetzt werden kann. Das Zielladehilfsmittel 70 ist aus Gründen der besseren Übersicht ausschließlich in Fig. 7a eingetragen.

Die erste Stapelladehilfe 100a umfasst ein Transportgestell und einen Boden, wobei das Transportgestell einen Transportrahmen 205 ausbildet, gegen welchen die Ladeplattform 151 des Transportfahrzeuges 9 angestellt werden kann, und wobei der Boden einen Bodenwandteil 206 ausbildet, auf welchem das Zielladehilfsmittel 70 mit dem Auftragsstapel 106 abgestellt werden kann.

Die erste Stapelladehilfe 100a umfasst nach gezeigter Ausführung zusätzlich Seitenwände, welche eine Transportsicherung 207 zur Lagestabilisierung des Auftragsstapels 106 bilden, wenn dieser auf dem Bodenwandteil 206 abgestellt ist, und eine erste Seitenwand 208a und eine zweite Seitenwand 208b umfassen. Die erste Seitenwand 208a und zweite Seitenwand 208b ragen am Bodenwandteil 171 vor. Vorzugsweise umfasst die Transportsicherung 207 ausschließlich die erste Seitenwand 208a und zweite Seitenwand 208b. Bevorzugt schließen die erste Seitenwand 208a und zweite Seitenwand 208b einen Winkel, insbesondere rechten Winkel ein.

Zusätzlich kann die erste Stapelladehilfe 100a Stellfüße 209 umfassen, welche am Transportgestell befestigt sind. Die erste Stapelladehilfe 100a wird über die Stellfüße 209 am Boden des Kommissionierlagers 1 abgestellt. In einer nicht gezeigten Ausführung können anstatt der Stellfüße 209 auch Räder am Transportgestell vorgesehen werden.

Es kann sich von Vorteil erweisen, wie in den Fig. 7a, 7b dargestellt, wenn der Bodenwandteil 206 sowohl um einen ersten Neigungswinkel (α₁) gegenüber einer zwischen der ersten Seitenwand 208a und zweiten Seitenwand 208b aufgespannten Horizontalebene in Richtung zur ersten Seitenwand 208a nach unten geneigt verläuft als auch um einen zweiten Neigungswinkel (α₂) gegenüber einer zwischen der ersten Seitenwand 208a und zweiten Seitenwand 208b aufgespannten Horizontalebene in Richtung zur zweiten Seitenwand 208b nach unten geneigt verläuft. Die erste Seitenwand 208a und zweite Seitenwand 208b sind normal auf den Bodenwandteil 206 ausgerichtet. Die Neigungswinkel α₁, α₂ betragen bevorzugt jeweils zwischen 3° und 6°.

Der Bodenwandteil 171 ist bevorzugt in der Grundfläche an die Abmessungen des Zielladehilfsmittels 70, insbesondere eine Palette, beispielweise eine Europalette, Industriepalette oder Düsseldorfer-Palette, angepasst. Um die Flexibilität in der Verwendung der ersten Stapelladehilfe 100a zu erhöhen kann die Grundfläche an die Abmessung des größten Zielladehilfsmittels 70 angepasst werden. Die erste Stapelladehilfe 100a kann aber auch an die Abmessung eines einzigen Zielladehilfsmittels 70 angepasst werden.

Nach der in den Fig. 8a, 8b gezeigten Ausführung, ist im Unterschied zur Ausführung gemäß den Fig. 7a bis 7c der oben näher beschriebene Bodenwandteil 206 horizontal ausgerichtet und verläuft in einer zwischen der ersten Seitenwand 208a und zweiten Seitenwand 208b aufgespannten Horizontalebene. Die erste Seitenwand 208a und zweite Seitenwand 208b sind normal auf den Bodenwandteil 206 ausgerichtet und mit dem Bodenwandteil 206 verbunden.

Die erste Stapelladehilfe 100a umfasst nach gezeigter Ausführung zusätzlich Seitenwände, welche eine Transportsicherung 207 zur Lagestabilisierung des Auftragsstapels 106 bilden, wenn dieser auf dem Bodenwandteil 206 abgestellt ist, und eine erste Seitenwand 208a und eine zweite Seitenwand 208b umfassen. Vorzugsweise umfasst die Transportsicherung 207 ausschließlich die erste Seitenwand 208a und zweite Seitenwand 208b. Bevorzugt schließen die erste Seitenwand 208a und zweite Seitenwand 208b einen Winkel, insbesondere rechten Winkel ein.

Die Fig. 9 zeigt eine Ausführung einer ersten Stapelladehilfe 100a, wie sie in dem gezeigten Kommissionierlager 1 eingesetzt werden kann.

Die erste Stapelladehilfe 100a umfasst ein Transportgestell und einen Boden, wobei das Transportgestell einen Transportrahmen 205 ausbildet, gegen welchen die Ladeplattform 151 des Transportfahrzeuges 9 angestellt werden kann, und wobei der Boden einen Bodenwandteil 206 ausbildet, auf welchem der Auftragsstapel 106 mit dem Zielladehilfsmittel 70 abgestellt werden kann. Die erste Stapelladehilfe 100a umfasst nach gezeigter Ausführung keine zusätzlichen Seitenwände, diese werden durch das Transportfahrzeug 90 bereitgestellt, wie oben in Fig. 3b beschrieben.

Zusätzlich kann die erste Stapelladehilfe 100a Stellfüße 209 umfassen, welche am Transportgestell befestigt sind. Die erste Stapelladehilfe 100a wird über die Stellfüße 209 am Boden oder einer Fördertechnik (wie im Nachfolgenden beschrieben wird) des Kommissionierlagers 1 abgestellt. In einer nicht gezeigten Ausführung können anstatt der Stellfüße 209 auch Räder am Transportgestell vorgesehen werden.

Nach dieser Ausführung ist der Bodenwandteil 206 horizontal ausgerichtet, wenngleich es auch möglich ist, dass der besagte Bodenwandteil 206 sowohl um einen ersten Neigungswinkel (α₁) gegenüber einer Horizontalebene in Richtung zu einer ersten Längskante 210a des Bodenwandteils 206 nach unten geneigt verläuft als auch um einen zweiten Neigungswinkel (α₂) gegenüber einer Horizontalebene in Richtung zu einer zweiten Längskante 210b des Bodenwandteils 206 nach unten geneigt verläuft, wie in Fig. 9 in strichlierte Linien eingetragen. Die Neigungswinkel α₁, α₂ betragen bevorzugt jeweils zwischen 3° und 6°.

Die Fig. 10 zeigt eine Ausführung einer zweiten Stapelladehilfe 100b, wie sie in dem gezeigten Kommissionierlager 1 eingesetzt werden kann.

Die zweite Stapelladehilfe 100b kann entsprechend den Ausführungen der ersten Stapelladehilfe 100a gemäß den Fig. 7a bis 7c, 8, 9 gestaltet sein, lediglich mit dem Unterschied, dass der Bodenwandteil 206 auf seiner oberen Seite vorragende und durch Aufnahmekanäle 215 voneinander getrennte Abstellklötze 216 ausbildet, auf welcher die Warenträger 3 des Auftragsstapels 106 (nicht dargestellt) abgestellt werden können, sodass die zweite Stapelladehilfe 100b das Zielladehilfsmittel 170 bildet.

Selbst wenn nur die erste Seitenwand 173a, 208a und zweite Seitenwand 173b, 208b vorgesehen sind, wird mit der Transportladehilfe 7a, 7b, 7c eine ausreichende Lagestabilisierung und ein sicherer Transport der Warenträgerstapelgruppe 8a, 8b, 8c respektive mit der ersten Stapelladehilfe 100a und zweiten Stapelladehilfe 100b eine ausreichende Lagestabilisierung und ein sicherer Transport des Auftragsstapels 106 ermöglicht. Von Vorteil ist auch, dass an der Entladevorrichtung 11 ein Greifersystem die Warenträger 3 auf der Transportladehilfe 7a, 7b, 7c von zwei Seiten greifen kann, was den Entladevorgang wesentlich vereinfacht. Von Vorteil ist auch, dass die Ladungssicherungsvorrichtung 120 mit hoher Leistung betrieben werden kann, da die erste / zweite Stapelladehilfe 100a, 100b bereits wieder von der Ladungssicherungsvorrichtung 120 abtransportiert werden kann, sobald das Zielladehilfsmittel 70 mit dem Auftragsstapel 106 geringfügig vom Bodenwandteil 206 der ersten Stapelladehilfe 100a oder der Auftragsstapel 106 geringfügig vom Bodenwandteil 206 der zweiten Stapelladehilfe 100b abgehoben wurde. Es ist also nicht notwendig, den Auftragsstapel 106 vollständig und über die gesamte Höhe der ersten / zweiten Stapelladehilfe 100a, 100b anzuheben, ehe der Abtransport der ersten / zweiten Stapelladehilfe 100a, 100b erfolgen kann.

Wie ausschließlich in den Fig. 2c, 4a, 4b, 5 schematisch dargestellt, kann die Transportladehilfe 7a, 7b, 7c mit einem Datenträger 25c versehen werden. Ebenso kann die erste Stapelladehilfe 100a / zweite Stapelladehilfe 100b mit einem Datenträger 25d versehen werden, um eine Identifizierung der ersten Stapelladehilfe 100a / zweiten Stapelladehilfe 100b mittels einer Erfassungsvorrichtung durch Lesen eines Datenträgers durchzuführen, wie ausschließlich in den Fig. 7a, 7b, 8, 10 schematisch eingetragen.

Es kann sich auch von Vorteil erweisen, wenn das Kommissionierlager 1 eine Vorrichtung zur Erfassung von Daten zu der Warenträgerstapelgruppe 8a, 8b, 8c und/oder Erfassung von Daten zu dem Warenträger 3 und/oder Erfassung von Daten zu der Ware 2 in dem Warenträger 3 umfasst. Diese kann nach gezeigter Ausführung im Anlieferbereich 4, insbesondere der Überprüfstation, beispielweise der einen oder mehreren Prüfvorrichtung(en) 20, und/oder insbesondere der Beladungsstation, beispielweise der einen oder den mehreren Beladevorrichtung(en) 10, vorgesehen werden. In Fig. 2a ist die Vorrichtung zur Erfassung der Daten mit 22 bezeichnet.

Eine solche Vorrichtung zur Erfassung von Daten zu der Warenträgerstapelgruppe 8a, 8b, 8c und/oder Erfassung von Daten zu dem Warenträger 3 und/oder Erfassung von Daten zu der Ware 2 in dem Warenträger 3 kann aber auch im Auftragsbearbeitungsbereich 6, insbesondere der Entladestation, beispielweise der einen oder den mehreren automatisiert betriebenen Entladevorrichtung(en) 11 oder der einen und/oder den mehreren teilautomatisiert betriebenen Entladevorrichtung(en) 11 vorgesehen werden. In Fig. 2d ist die Vorrichtung zur Erfassung der Daten mit 22 bezeichnet und in strichlierte Linien eingetragen.

Die Vorrichtung zur Erfassung der Daten kann ein Kamerasystem mit einer oder mehreren Kameras oder ein oder mehrere Barcodelesegräte umfassen.

Die Vorrichtung zur Erfassung der Daten ist über eine Datenleitung mit dem Steuerungssystem 16 verbunden, um dieser die Daten zu der Warenträgerstapelgruppe 8a, 8b, 8c und/oder die Daten zu dem Warenträger(3 und/oder die Daten zu der Ware 2 in dem Warenträger 3 zu übermitteln.

Das Steuerungssystem 16 umfasst eine Steuerungslogik durch welche die Daten zu der Warenträgerstapelgruppe 8a, 8b, 8c und/oder die Daten zu dem Warenträger 3 und/oder die Daten zu der Ware 2 in dem Warenträger 3 verarbeitet und Steuerbefehle erzeugt werden, anhand der die Entladevorrichtung(en) 11 angesteuert wird (werden) und/oder Transportbefehle erzeugt werden, anhand der das/die autonom verfahrbaren, fahrerlosen Transportfahrzeuge 9; 90 angesteuert wird (werden). Konkret kann eine Transfervorrichtung 72 (Greifereinheit) der Entladevorrichtung(en) 11 angesteuert werden und/oder eine Antriebseinheit der Transportfahrzeuge 9; 90 angesteuert werden.

Es können basierend auf diesen Daten Transportbefehle erzeugt werden, anhand der das/die autonom verfahrbaren, fahrerlosen Transportfahrzeuge 9; 90 angesteuert wird (werden). Beispielweise kann ein Transportfahrzeuge 9; 90 einen Transportbefehl erhalten, mit welchem eine Warenstapelgruppe 8a, 8b, 8c, welche beschädigte Waren 2 enthält, zu einem Klärplatz (vorzugsweise in der Überprüfstation) transportiert wird, um dort die Warenträger 3 mit der beschädigten Ware 2 zu entfernen (sofern dies nicht bereits an der Prüfvorrichtung geschehen ist).

Im Nachfolgenden wird das Verfahren zum Lagern und Kommissionieren von Waren 2 enthaltenden und stapelbaren Warenträgern 3 im Kommissionierlager 1 beschrieben.

Das Verfahren umfasst die Schritte:
i) Bereitstellung von autonom verfahrbaren, fahrerlosen Transportfahrzeugen 9; 90,
ii) Bereitstellung von mobilen Transportladehilfen 7a, 7b, 7c, 7d jeweils zur Aufnahme einer (bevorzugt einzigen) Warenträgerstapelgruppe 8a, 8b, 8c, wobei die mobilen Transportladehilfen leere Transportladehilfen 7a und beladene Transportladehilfen 7b, 7c, 7d umfassen,
iii) Bereitstellung einer Transportsicherung 160; 174 an wenigstens einigen der autonom verfahrbaren, fahrerlosen Transportfahrzeugen 90 oder an wenigstens einigen der mobilen Transportladehilfen 7a, 7b, 7c, 7d, welche der Lagestabilisierung einer Warenträgerstapelgruppe 8a, 8b, 8c dient, wenn diese auf der mobilen Transportladehilfe 7b, 7c, 7d aufgenommen ist,
iv) Bereitstellung von Warenträgerstapelgruppen 8a, 8b, 8c umfassend mehrere nebeneinander und übereinander angeordneten Warenträger 3 in einem Anlieferbereich 4 des Kommissionierlagers 1,
v) Transport von leeren Transportladehilfen 7a durch die autonom verfahrbaren, fahrerlosen Transportfahrzeuge 9; 90 zu einer Beladestation und Bereitstellung einer oder von mehreren leeren Transportladehilfe(n) 7a entweder an einer oder mehreren automatisiert betriebenen Beladevorrichtung(en) 10 oder auf einer Pufferfläche 43 nahe der Beladevorrichtung(en) 10,
vi) Beladen einer der leeren Transportladehilfen 7a, welche an der automatisiert betriebenen Beladevorrichtung 10 bereitgestellt wird, mit der Warenträgerstapelgruppe 8a, 8b, 8c, welche im Anlieferbereich 4 bereitgestellt und im Wesentlichen unverändert auf der leeren Transportladehilfe 7a übernommen wird, durch die automatisiert betriebene Beladevorrichtung 10,
vii) Transport der mit der Warenträgerstapelgruppe 8a, 8b, 8c beladenen Transportladehilfe 7b, 7c, 7d mit dem autonom verfahrbaren, fahrerlosen Transportfahrzeug 9; 90 von der Beladestation zu einem Lagerbereich 5 und Lagestabilisierung der Warenträgerstapelgruppe 8a, 8b, 8c durch die Transportsicherung 160; 174 während der Transportbewegung der beladenen Transportladehilfe 7b, 7c, 7d,
viii) Abstellen der mit der Warenträgerstapelgruppe 8a, 8b, 8c beladenen Transportladehilfe 7b, 7c, 7d auf einer Lagerfläche 45 im Lagerbereich 5,
ix) Lagerung der mit den Warenträgerstapelgruppen 8a, 8b, 8c beladenen Transportladehilfen 7b, 7c, 7d im Lagerbereich 5 (und gegebenenfalls Lagestabilisierung der Warenträgerstapelgruppe 8a, 8b, 8c durch die Transportsicherung 160; 174 während der Lagerung der beladenen Transportladehilfe 7b, 7c, 7d),
x) Bearbeitung eines Kommissionierauftrags umfassend die Schritte
   - Transport von einer oder mehreren die zu einem Kommissionierauftrag benötigten Warenträger 3 enthaltenden Transportladehilfe(n) 7b, 7c, 7d vom Lagerbereich 5 zu einer Entladestation und Bereitstellung genannter Transportladehilfe(n) 7b, 7c, 7d entweder an einer oder mehreren automatisiert betriebenen Entladevorrichtung(en) 11 oder auf einer Pufferfläche 73 nahe der Entladevorrichtung(en) 11 durch ein oder mehrere autonom verfahrbare(s), fahrerlose(s) Transportfahrzeug(e) 9; 90 und Lagestabilisierung der Warenträgerstapelgruppe 8a, 8b, 8c durch die Transportsicherung 160; 174 während der Transportbewegung der beladenen Transportladehilfe 7b, 7c, 7d
   - Entladen einer oder mehrerer der Transportladehilfe(n) 7b, 7c, 7d, welche an der oder den automatisiert betriebenen Entladevorrichtung(en) 11 bereitgestellt wird (werden), durch Entnahme der für die Bearbeitung des genannten Kommissionierauftrags benötigten Warenträger 3 und gegebenenfalls Lagestabilisierung der Warenträgerstapelgruppe 8a, 8b, 8c durch die Transportsicherung 160; 174 während der automatischen Entladebewegungen der oder den automatisiert betriebenen Entladevorrichtung(en) 11, und
   - Zusammenstellung der Warenträger 3 auf einem oder mehreren Zielladehilfsmitteln 70; 170 zum genannten Kommissionierauftrag in einem Auftragsbearbeitungsbereich 6.

Die Bereitstellung von autonom verfahrbaren, fahrerlosen Transportfahrzeugen 9; 90 gemäß Schritt i) kann die Bereitstellung von Transportfahrzeugen 9; 90 umfassen, welche ausschließlich zum Transport der Transportladehilfe(n) 7a, 7b, 7c, 7d zwischen dem Anlieferbereich 4 (Beladestation) und dem Lagerbereich 5 verwendet werden, und die Bereitstellung von Transportfahrzeugen 9; 90 umfassen, welche ausschließlich zum Transport der Transportladehilfe(n) 7a, 7b, 7c, 7d zwischen dem Lagerbereich 5 und dem Auftragsbearbeitungsbereich 6 (Entnahmestation - automatisiert betriebene Entladevorrichtung 11 und/oder teilautomatisiert betriebene Entladevorrichtung 100) verwendet werden.

Die Bereitstellung von autonom verfahrbaren, fahrerlosen Transportfahrzeugen 9; 90 gemäß Schritt i) kann die Bereitstellung von Transportfahrzeugen 9; 90 umfassen, welche in der Entnahmestation und ausschließlich zum Transport der ersten Stapeladehilfe(n) 100a und/oder zweiten Stapelladehilfe(n) 100b zwischen der automatisiert betriebene Entladevorrichtung 11 und teilautomatisiert betriebene Entladevorrichtung 100 verwendet werden.

Genauso gut kann Schritt i) aber auch die Bereitstellung von Transportfahrzeugen 9; 90 umfassen, welche sowohl zum Transport der Transportladehilfe(n) 7a, 7b, 7c, 7d zwischen dem Anlieferbereich 4 (Beladestation) und dem Lagerbereich 5 und zum Transport der Transportladehilfe(n) 7a, 7b, 7c, 7d zwischen dem Lagerbereich 5 und dem Auftragsbearbeitungsbereich (Entnahmestation) als auch zum Transport der ersten Stapeladehilfe(n) 100a und/oder zweiten Stapelladehilfe(n) 100b zwischen der automatisiert betriebene Entladevorrichtung 11 und teilautomatisiert betriebene Entladevorrichtung 100 verwendet werden.

Die Bereitstellung von mobilen Transportladehilfen 7a, 7b, 7c, 7d gemäß Schritt ii) kann die Bereitstellung von baugleichen Transportladehilfen 7a, 7b, 7c, 7d oder baulich unterschiedlichen Transportladehilfen 7a, 7b, 7c, 7d umfassen.

Die Bereitstellung einer Transportsicherung 160 gemäß Schritt iii) kann nach einer ersten Ausführung die Bereitstellung einer Transportsicherung 160 an wenigstens einigen oder sämtlichen der autonom verfahrbaren, fahrerlosen Transportfahrzeugen 90 umfassen. Die Bereitstellung einer Transportsicherung 174 gemäß Schritt iii) kann nach einer zweiten Ausführung die Bereitstellung einer Transportsicherung 174 an wenigstens einigen oder sämtlichen der mobilen Transportladehilfen 7a, 7b, 7c umfassen. Nach beiden Ausführungen dient die Transportsicherung 160, 174 der Lagestabilisierung einer Warenträgerstapelgruppe 8a, 8b, 8c, wenn diese auf einem Bodenwandteil 171 der mobilen Transportladehilfe 7b, 7c, 7d aufgenommen und die mobile Transportladehilfe 7b, 7c, 7d transportiert oder entladen wird.

Die "Lagestabilisierung einer Warenträgerstapelgruppe" gemäß Schritt iii), vii) und x) bedeutet in diesem Zusammenhang, dass ein seitliches Verrutschen einzelner Warenträger 3 in der Warenträgerstapelgruppe 8a, 8b, 8c oder ein seitliches Verrutschen der Warenträgerstapelgruppe 8a, 8b, 8c gegenüber der Transportladehilfen 7b, 7c, 7d durch die Transportsicherung 160, 174 vermieden oder zumindest begrenzt wird.

Werden die Warenträger 3 der Warenträgerstapelgruppe 8a, 8b, 8c gegen die Transportsicherung 160, 174 abgestützt, beispielweise gegen Seitenwände der Transportsicherung 160, 174, wird ein seitliches Verrutschen einzelner Warenträger 3 in der Warenträgerstapelgruppe 8a, 8b, 8c oder ein seitliches Verrutschen der Warenträgerstapelgruppe 8a, 8b, 8c gegenüber der Transportladehilfe 7b, 7c, 7d von vorhinein vermieden. Die Warenträgerstapelgruppe 8a, 8b, 8c kann durch die Transportsicherung 160, 174 zuverlässig transportiert werden, selbst wenn die mobile Transportladehilfe 7b, 7c, 7d mit dem Transportfahrzeug 9; 90 hochdynamisch bewegt wird.

Auch kann eine Lagestabilisierung der Warenträgerstapelgruppe 8a, 8b, 8c durch die Transportsicherung 160; 174 während der Lagerung der beladenen Transportladehilfe 7b, 7c, 7d vorgesehen werden. Dies insbesondere dann, wenn die Transportsicherung 174 an der mobilen Transportladehilfe 7b, 7c ausgebildet ist.

Die mobilen Transportladehilfen 7b, 7c, 7d können an der Entladevorrichtung 11 auch zuverlässig (automatisch) entladen werden. Während des Entladevorganges einzelner Warenträger 3 oder eines Warenträgerstapels wird durch die Transportsicherung 160; 174 ein seitliches Verrutschen einzelner Warenträger 3 in der Warenträgerstapelgruppe 8a, 8b, 8c oder ein seitliches Verrutschen der Warenträgerstapelgruppe 8a, 8b, 8c gegenüber der Transportladehilfe 7b, 7c, 7d vermieden oder zumindest begrenzt werden.

Auch wenn dies keineswegs zwingend ist, kann es sich von Vorteil erweisen, wenn die mobilen Transportladehilfen 7b, 7c, 7d derart beladen werden, dass einzelne Warenträger 3 oder die Warenträgerstapelgruppe 8a, 8b, 8c gegen die Transportsicherung 160, 174, beispielweise gegen die Seitenwände 161a, 161b des Transportfahrzeuges 90 oder die Seitenwände 173a, 173b der mobilen Transportladehilfen 7b, 7c, 7d abgestützt sind.

Der Schritt iv) kann einerseits die Bereitstellung von Warenträgerstapelgruppen 8a, 8b, 8c mit Anlieferladungsträger 17a, 17b, 17c oder die Bereitstellung von Warenträgerstapelgruppen 8a, 8b, 8c ohne Anlieferladungsträger 17a, 17b, 17c umfassen. Der Anlieferladungsträger 17a, 17b, 17c ist vorwiegend eine Palette.

Beispielsweise kann es sich um Warenträger 3 mit Obst oder Gemüse handeln, wobei beispielweise eine erste Warenträgerstapelgruppe 8a, 8b, 8c eine erste Gemüsesorte und eine zweite Warenträgerstapelgruppe 10 eine zweite Gemüsesorte enthält.

Der Schritt v) kann den Transport von leeren Transportladehilfen 7a durch die autonom verfahrbaren, fahrerlosen Transportfahrzeuge 9; 90 zu einer Beladestation und unmittelbar die Bereitstellung einer leeren / von leeren Transportladehilfe(n) 7a an einer oder mehreren automatisiert betriebenen Beladevorrichtung(en) 10 umfassen.

Der Schritt v) kann aber auch den Transport von leeren Transportladehilfen 7a durch die autonom verfahrbaren, fahrerlosen Transportfahrzeuge 9; 90 zu einer Beladestation auf eine Pufferfläche 43 nahe der Beladevorrichtung(en) 10 und den Transport genannter leerer Transportladehilfe(n) 7a durch die autonom verfahrbaren, fahrerlosen Transportfahrzeuge 9; 90 zu der / den Beladevorrichtung(en) 10 und Bereitstellung genannter leerer Transportladehilfe(n) 7a an einer oder mehreren automatisiert betriebenen Beladevorrichtung(en) 10 umfassen.

Die Bereitstellung einer leeren Transportladehilfe 7a an einer oder mehreren automatisiert betriebenen Beladevorrichtung(en) 10 gemäß Schritt v) kann die Schritte umfassen:
- Abstellen der leeren Transportladehilfe 7a auf einem die betreffende Beladevorrichtung 10 aufweisenden Andienungsplatz 41 und Verweilen des Transportfahrzeuges 9; 90 auf dem Andienungsplatz 41 während des Beladevorgangs der leeren Transportladehilfe 7a gemäß Schritt vi), oder
- Abstellen der leeren Transportladehilfe 7a auf einem die betreffende Beladevorrichtung 10 aufweisenden Andienungsplatz 41 und danach Weiterfahrt des Transportfahrzeuges 9; 90 vom Andienungsplatz 41, daher noch vor dem Beginn oder noch während des Beladevorgangs der leeren Transportladehilfe 7a gemäß Schritt vi).

Das Beladen der leeren Transportladehilfen 7a gemäß Schritt vi) kann das Beladen einer der leeren Transportladehilfen 7a mit einer (einzigen) Warenträgerstapelgruppe 8a, 8b, 8c umfassen. Die Warenträgerstapelgruppe 8a, 8b, 8c wird im Wesentlichen unverändert der Beladestation zugeführt. "Im Wesentlichen unverändert" bedeutet in diesem Zusammenhang, dass vor der Beladung einer leeren Transportladehilfe 7a eine Vereinzelung der Warenträgerstapelgruppe 8a, 8b, 8c in Warenträgerstapel oder einzelne Warenträger (Depalettierung) nicht stattfindet. "Im Wesentlichen unverändert" bedeutet auch, dass vor der Beladung einer leeren Transportladehilfe 7a ein Entfernen einer Verpackungsfolie (Stretchfolie oder Schrumpffolie) und/oder das Prüfen von Qualitätsmerkmalen in oben beschriebener Weise möglich ist, selbst wenn im Zuge der Qualitätsprüfung einzelne Warenträger 23 (beispielweise mit beschädigter Ware) von der Warenträgerstapelgruppe 8a, 8b, 8c entnommen werden.

Der Schritt ix) kann die Lagerung von Transportladehilfen 7b umfassen, welche nach der Beladung an der Beladestation mit einer unveränderten (vollständigen) Warenträgerstapelgruppe 8a, 8b, 8c beladen sind, und/oder Transportladehilfen 7c umfassen, welche nach der Bearbeitung eines Kommissionierauftrags mit einer veränderten (angebrochenen) Warenträgerstapelgruppe 8a, 8b, 8c beladen ist.

Der Schritt x) kann den Transport von beladenen Transportladehilfen 7b, 7c durch die autonom verfahrbaren, fahrerlosen Transportfahrzeuge 9; 90 vom Lagerbereich 5 (gegebenenfalls aber auch von der Beladestation im Anlieferbereich 4) zu einer Entladestation und unmittelbar die Bereitstellung einer beladenen / von beladenen Transportladehilfe(n) 7b, 7c an einer oder mehreren automatisiert betriebenen Entladevorrichtung(en) 11 umfassen.

Der Schritt x) kann aber auch den Transport von beladenen Transportladehilfen 7b, 7c durch die autonom verfahrbaren, fahrerlosen Transportfahrzeuge 9; 90 vom Lagerbereich 5 (gegebenenfalls aber auch von der Beladestation im Anlieferbereich 4) zu einer Entladestation auf eine Pufferfläche 73 nahe der Entladevorrichtung(en) 11 und den Transport genannter beladener Transportladehilfe(n) 7b, 7c durch die autonom verfahrbaren, fahrerlosen Transportfahrzeuge 9; 90 von der Pufferfläche 73 zu der / den Entladevorrichtung(en) 11 und Bereitstellung genannter beladener Transportladehilfe(n) 7b, 7c an einer oder mehreren Entladevorrichtung(en) 11 umfassen.

Die Transportfahrzeuge 9; 90 können vom Leitrechner derart angesteuert, dass diese an der Entladestation in einer durch die Packordnung der Warenträger 3 am Zielladehilfsmittel 70, 170 vorgesehenen Reihenfolge ankommen. Dadurch wird eine Sequenzierung der Transportladehilfen 7b, 7b erreicht.

Die Bereitstellung einer beladenen Transportladehilfe(n) 7b, 7c an einer oder mehreren automatisiert betriebenen Entladevorrichtung(en) 11 gemäß Schritt x) kann die Schritte umfassen:
- Abstellen der beladenen Transportladehilfe(n) 7b, 7c auf einem die betreffende Entladevorrichtung 11 aufweisenden Andienungsplatz 71a, 71b und Verweilen des Transportfahrzeuges 9; 90 auf dem Andienungsplatz 71a, 71b während des Entladungsvorgangs der beladenen Transportladehilfe(n) 7b, 7c gemäß Schritt x), oder
- Abstellen der beladenen Transportladehilfe(n) 7b, 7c auf einem die betreffende Entladevorrichtung 11 aufweisenden Andienungsplatz 71a, 71b und danach Weiterfahrt des Transportfahrzeuges 9; 90 vom Andienungsplatz 71a, 71b, daher noch vor dem Beginn oder noch während des Entladungsvorgangs der beladenen Transportladehilfe(n) 7b, 7c gemäß Schritt x).

Der Transport von beladenen Transportladehilfen 7b, 7c im Schritt x) umfasst während der Transportbewegung die Lagestabilisierung der Warenträgerstapelgruppe 8a, 8b, 8c durch die Transportsicherung 160; 174, wie oben beschrieben.

Der Endladevorgang von einer oder mehreren beladenen Transportladehilfen 7b, 7c im Schritt x) kann während der Entladebewegung die Lagestabilisierung der Warenträgerstapelgruppe 8a, 8b, 8c durch die Transportsicherung (160; 174) umfassen. Dies kann der Fall sein, wenn das Greifersystem initial entsprechend programmierte Entladebewegungen in Richtung auf die Transportsicherung 164, 170 durchführt, um vorerst einen oder gleichzeitig mehrerer Warenträger 3 gegen die Transportsicherung 164, 170 zu bewegen und dadurch eine sichere Aufnahme eines oder gleichzeitig mehrerer Warenträger(s) 3 zu ermöglichen. Ein solcher automatischer Entladevorgang kann beispielweise bei schwierig greifbaren Warenträgern 3 angewendet werden. Dies ist aber nicht zwingend zu verstehen, sondern kann der Endladevorgang auch derart gestaltet werden, dass das Greifersystem initial entsprechend programmierte Entladebewegungen entgegen der Richtung auf die Transportsicherung 164, 170 durchgeführt wird, um eine schnelle Aufnahme eines oder gleichzeitig mehrerer Warenträger(s) 3 zu ermöglichen. Ein solcher Entladevorgang kann beispielweise bei einfach greifbaren Warenträgern 3 angewendet werden.

Das Verfahren zum Lagern und Kommissionieren von Waren 2 kann die Schritte umfassen:
- Bereitstellung von Warenträgerstapelgruppen 8a, 8b, 8c auf Anlieferladungsträgern 17a, 17b, 17c und Beladen einer der leeren Transportladehilfen 7a mit einer der Warenträgerstapelgruppen 8a, 8b, 8c auf einem Anlieferladungsträger 17a, 17b, 17c.

Werden im Anlieferbereich 4 die Warenträgerstapelgruppen 8a, 8b, 8c auf Anlieferladungsträgern 17a, 17b, 17c bereitgestellt, so werden diese in oben beschriebener Weise im Wesentlichen "unverändert" an leere Transportladehilfen 7a übergeben, daher die Warenträgerstapelgruppe 8a, 8b, 8c mit einem Anlieferladungsträger 17a, 17b, 17c auf eine leere Transportladehilfe 7a durch die Beladevorrichtung 10 umgeladen.

Das Verfahren zum Lagern und Kommissionieren von Waren 2 kann die Schritte umfassen:
- Zusammenstellung der Warenträger 3 zum genannten Kommissionierauftrag durch die Entladevorrichtung 11, indem ein aus der Warenträgerstapelgruppe 8a, 8b, 8c entnommener einzelner Warenträger 3 oder ein aus der Warenträgerstapelgruppe 8a, 8b, 8c entnommener Warenträgerstapel auf ein Zielladehilfsmittel 70; 170 übergeben wird.

Nach dieser Ausführung bildet die eine oder mehreren automatisiert betriebenen Entladevorrichtung(en) 11 gleichzeitig eine oder mehrere Umladevorrichtung(en) bzw. Kommissionier-vorrichtung(en) zur Zusammenstellung der Warenträger 3 zu einem Kommissionierauftrag. Der Warenträgerstapel umfasst mehrere übereinander angeordnete Warenträger 3.

Das Verfahren zum Lagern und Kommissionieren von Waren 2 kann zusätzlich einen der Schritte x) umfassen:
i) Rücktransport einer Transportladehilfe 7b, 7c nach der Entnahme der Warenträger 3 von der Entladestation zurück in den Lagerbereich 5, sollten nicht alle Warenträger 3 aus der genannten Transportladehilfe 7b, 7c entnommen worden sein, oder
ii) Transport einer Transportladehilfe 7b, 7c nach der Entnahme der Warenträger 3 von einer ersten Entladevorrichtung 11 zu einer zweiten Entladevorrichtung 11, sollten nicht alle Warenträger 3 aus der genannten Transportladehilfe 7b, 7c entnommen worden sein und sollten diese Warenträger 3 zu einem Kommissionierauftrag an der zweiten Entladevorrichtung 11 benötigt werden, oder
iii) Transport einer Transportladehilfe 7b, 7c nach der Entnahme der Warenträger 3 von der Entladevorrichtung 11 zu einer Wartezone 74 in der Entladestation, sollten nicht alle Warenträger 3 aus der genannten Transportladehilfe 7b, 7c entnommen worden sein und sollten diese Warenträger 3 zu einem bereits avisierten Kommissionierauftrag an der genannten Entladevorrichtung 11 oder einer der Entladevorrichtungen 11 benötigt werden, oder
iv) Rücktransport einer Transportladehilfe 7b, 7c nach der Entnahme zu der Beladestation und Bereitstellung der Transportladehilfe 7b, 7c entweder an der automatisiert betriebenen Beladevorrichtung 10 oder auf der Pufferfläche 43, sollten alle Warenträger 3 von der genannten Transportladehilfe 7b, 7c entnommen worden sein,
iv) Lagestabilisierung einer veränderten (angebrochenen) Warenträgerstapelgruppe 8a, 8b, 8c, sollten nicht alle Warenträger 3 aus der genannten Transportladehilfe 7b, 7c entnommen worden sein, durch die Transportsicherung 160; 174 während der genannten Transportbewegung nach Fall i), ii) und iii).

Die "Lagestabilisierung einer "angebrochenen" Warenträgerstapelgruppe gemäß Schritt x) bedeutet in diesem Zusammenhang, dass ein seitliches Verrutschen einzelner Warenträger 3 in der "angebrochenen" Warenträgerstapelgruppe 8a, 8b, 8c oder ein seitliches Verrutschen der "angebrochenen" Warenträgerstapelgruppe 8a, 8b, 8c gegenüber der Transportladehilfen 7b, 7c durch die Transportsicherung 160, 174 vermieden oder zumindest begrenzt wird. Die "angebrochene" Warenträgerstapelgruppe 8a, 8b, 8c kann durch die Transportsicherung 160, 174 zuverlässig transportiert werden, selbst wenn die mobile Transportladehilfe 7b, 7c mit dem Transportfahrzeug 9; 90 hochdynamisch bewegt wird.

Eine "angebrochene" Warenträgerstapelgruppe 8a, 8b, 8c bedeutet in diesem Zusammenhang, dass aus der "unverändert bereitgestellten" Warenträgerstapelgruppe 8a, 8b, 8c zumindest ein Warenträger 3 entnommen wurde. Die Warenträgerstapelgruppe 8a, 8b, 8c wurde demnach (in der Anzahl an Warenträgern) verändert.

Wie ausschließlich in Fig. 1b eingetragen und am Beispiel des beschriebenen Kommissioniersystems erläutert, kann das Verfahren zum Lagern und Kommissionieren von Waren 2 kann zusätzlich die Schritte umfassen:
- Bereitstellung einer ersten Temperaturzone 220a im Lagerbereich 5, in welchem die Transportladehilfen 7b, 7c mit den Warenträgerstapelgruppen 8a, 8b, 8c umfassend nebeneinander und übereinander angeordnete Warenträger 3 enthaltend Waren 2 einer ersten Warengruppe,
- Bereitstellung einer zweiten Temperaturzone 220b im Lagerbereich 5, in welchem die Transportladehilfen 7b, 7c mit den Warenträgerstapelgruppen 8a, 8b, 8c umfassend nebeneinander und übereinander angeordnete Warenträger 3 enthaltend Waren 2 einer zweiten Warengruppe,
- Definition einer ersten Warengruppe und einer zweiten Warengruppe, welcher ersten Warengruppe Waren 2 einer ersten Lagertemperatur zugeordnet sind und welcher zweiten Warengruppe Waren 2 einer zweiten Lagertemperatur zugeordnet sind, und Erfassen von Daten enthaltend Daten über die erste Warengruppe, insbesondere eine erste Lagertemperatur für die Waren 2, und die zweite Warengruppe, insbesondere eine zweite Lagertemperatur für die Waren 2, an einem Rechner (welcher mit dem Steuerungssystem 16 verbunden ist),
- Identifizierung der Warenträgerstapelgruppe 8a, 8b, 8c und/oder Transportladehilfen 7b, 7c mittels einer im Anlieferbereich 4 vorgesehenen Erfassungsvorrichtung 22 durch Lesen eines Datenträgers 25a, 25b, 25c (RFID, Barcode), welcher Datenträger 25a, 25b, 25c jeweils auf den Warenträgerstapelgruppen 8a, 8b, 8c und/oder Transportladehilfen 7b, 7c angebracht ist,
- Selektiver Transport der jeweils an der Beladevorrichtung 10 mit der Warenträgerstapelgruppe 8a, 8b, 8c im Schritt vi) beladenen Transportladehilfen 7b, 7c mit den autonom verfahrbaren, fahrerlosen Transportfahrzeugen 9; 90 entweder in die erste Temperaturzone 220a oder zweite Temperaturzone 220b und Lagestabilisierung der Warenträgerstapelgruppe 8a, 8b, 8c durch die Transportsicherung 160; 174 während der Transportbewegung der beladenen Transportladehilfe 7b, 7c,
- Lagerung der Transportladehilfen 7b, 7c mit der Warenträgerstapelgruppe 8a, 8b, 8c umfassend nebeneinander und übereinander angeordnete Warenträger 3 enthaltend Waren 2 der ersten Warengruppe in der ersten Temperaturzone 220a (und gegebenenfalls Lagestabilisierung der Warenträgerstapelgruppe 8a, 8b, 8c durch die Transportsicherung 160; 174 während der Lagerung der beladenen ersten Transportladehilfe 7b, 7c),
- Lagerung der Transportladehilfen 7b, 7c mit der Warenträgerstapelgruppe 8a, 8b, 8c umfassend nebeneinander und übereinander angeordnete Warenträger 3 enthaltend Waren 2 der zweiten Warengruppe in der zweiten Temperaturzone 220b (und gegebenenfalls Lagestabilisierung der Warenträgerstapelgruppe 8a, 8b, 8c durch die Transportsicherung 160; 174 während der Lagerung der beladenen zweiten Transportladehilfe 7b, 7c).

Das Verfahren zum Lagern und Kommissionieren von Waren 2 kann zusätzlich die Schritte umfassen:
- Transport einer oder von mehreren die zu einem ersten Kommissionierauftrag benötigten Warenträger 3 enthaltenden Transportladehilfe(n) 7b, 7c von der ersten Temperaturzone 220a und Transport einer oder von mehreren die zu einem zweiten Kommissionierauftrag benötigten Warenträger 3 enthaltenden Transportladehilfe(n) 7b, 7c von der zweiten Temperaturzone 220b zur Entladestation mit einer gemeinsam genutzten, automatisiert betriebenen Entladevorrichtung 11 und Lagestabilisierung der Warenträgerstapelgruppe durch die Transportsicherung 160; 174 während der Transportbewegung der beladenen Transportladehilfe(n) 7b, 7c,
- Bereitstellung genannter Transportladehilfe(n) 7b, 7c zum ersten Kommissionierauftrag entweder an der automatisiert betriebenen Entladevorrichtung 11 oder auf einer Pufferfläche 73 nahe der Entladevorrichtung 11 durch das (die) autonom verfahrbare(n), fahrerlose(n) Transportfahrzeug(e) 9; 90,
- Bereitstellung genannter Transportladehilfe(n) 7b, 7c zum zweiten Kommissionierauftrag entweder an der automatisiert betriebenen Entladevorrichtung 11 oder auf einer Pufferfläche 73 nahe der Entladevorrichtung 11 durch das (die) autonom verfahrbare(n), fahrerlose(n) Transportfahrzeug(e) 9; 90,
- Sequentielle Zusammenstellung von Warenträgern 3 auf einem ersten Zielladehilfsmittel 70; 170 mit mehreren Warenträgern 3 enthaltend Waren 2 einer ersten Warengruppe, und Zusammenstellung von Warenträgern 3 auf einem zweiten Zielladehilfsmittel 70; 170 mit mehreren Warenträgern 3 enthaltend Waren 3 einer zweiten Warengruppe an der Entnahmestation mit einer gemeinsam genutzten, automatisiert betriebenen Entladevorrichtung 11.

Das oben beschriebene Verfahren zum Lagern und Kommissionieren von Waren 2 im Kommissionierlager 1 kann zusätzlich die Schritte umfassen:
- Bereitstellung von Stapelladehilfen 100a, 100b jeweils zur Aufnahme und Lagestabilisierung eines aus den Warenträgern 3 gemäß einem Kommissionierauftrag zusammengestellten Auftragsstapels 106.

Die Bereitstellung der Stapelladehilfen im Kommissionierlager 1 kann das Bereitstellen von einer oder mehreren ersten Stapelladehilfe(n) 100a und/oder einer oder mehreren zweiten Stapelladehilfe(n) 100b umfassen. Die erste Stapelladehilfe 100a und zweite Stapelladehilfe 100b umfassen jeweils einen Bodenwandteil 206 und an diesem vorragende Seitenwände 208a, 208b.

Einerseits bilden die Seitenwände 208a, 208b die Transportsicherung 207 zur Lagestabilisierung eines Auftragsstapels 106, wenn dieser mit dem Zielladehilfsmittel 70 auf dem Bodenwandteil 206 der ersten Stapelladehilfe 100a aufgenommen ist.

Andererseits bilden die Seitenwände 208a, 208b die Transportsicherung 207 zur Lagestabilisierung eines Auftragsstapels 106, wenn dieser auf dem Bodenwandteil 206 der zweiten Stapelladehilfe 100b aufgenommen ist.

Grundsätzlich wäre es auch denkbar, dass die erste(n) Stapelladehilfe(n) 100a und/oder zweite(n) Stapelladehilfe(n) 100b ohne der oben beschriebenen Seitenwände 208a, 208b ausgebildet sind. In diesem Fall wird die Transportsicherung 207 zur Lagestabilisierung eines Auftragsstapels 106, wenn dieser von der ersten Stapelladehilfe 100a oder zweiten Stapelladehilfen 100b, insbesondere auf dem Bodenwandteil 206, aufgenommen ist, von dem oder den oben in Fig. 3b beschriebenen Transportfahrzeug(en) 90 ausgebildet.

Die "Lagestabilisierung eines Auftragsstapels" bedeutet in diesem Zusammenhang, dass ein seitliches Verrutschen einzelner Warenträger 3 im Auftragsstapel 106 oder ein seitliches Verrutschen des Auftragsstapels 106 gegenüber der Stapelladehilfe 100a, 100b durch die Transportsicherung 207 vermieden oder zumindest begrenzt wird.

Der Auftragsstapel 106 kann durch die Transportsicherung 207 zuverlässig transportiert werden, selbst wenn die mobile Stapelladehilfe 100a, 100b mit dem Transportfahrzeug 9; 90 hochdynamisch bewegt wird.

Die mobilen Stapelladehilfen 100a, 100b können an der Entladevorrichtung 11 auch zuverlässig (automatisch) mit Warenträgern 3 beladen werden. Während des Beladevorganges (Kommissioniervorgangs) wird ein seitliches Verrutschen einzelner Warenträger 3 im Auftragsstapel 106 oder ein seitliches Verrutschen des Auftragsstapels 106 gegenüber der Stapelladehilfe 100a, 100b durch die Transportsicherung 207 vermieden oder zumindest begrenzt wird.

Auch wenn dies keineswegs zwingend ist, kann es sich von Vorteil erweisen, wenn die mobilen Stapelladehilfen 100a, 100b derart beladen werden, dass einzelne Warenträger 3 oder der Auftragsstapel 106 gegen die Transportsicherung 207, beispielweise gegen die Seitenwände 161a, 161b des Transportfahrzeuges 90 oder die Seitenwände 208a, 208b der mobilen Stapelladehilfen 100a, 100b abgestützt sind.

Werden im Kommissionierlager 1 die ersten Stapelladehilfen 100a eingesetzt, kann das Verfahren zusätzlich die Schritte umfassen:
- Bestücken der ersten Stapelladehilfe 100a mit einem Zielladehilfsmittel 70 an der Bestückungsstation mit einer oder mehreren automatisiert betriebenen Bestückungsvorrichtung(en) 110, indem das Zielladehilfsmittel 70 auf dem Bodenwandteil 205 abgestellt wird.

Werden im Kommissionierlager 1 die zweite Stapelladehilfen 100b eingesetzt, kann das Verfahren zusätzlich die Schritte umfassen:
- Definition der zweiten Stapelladehilfe 100b als Zielladehilfsmittel 170, indem die zweiten Stapelladehilfen 100b die Zielladehilfsmittel 170 bilden.

Werden im Kommissionierlager 1 die ersten Stapelladehilfen 100a und zweiten Stapelladehilfen 100b eingesetzt, kann das Verfahren zusätzlich die Schritte umfassen:
- Bestücken der ersten Stapelladehilfe 100a mit einem Zielladehilfsmittel 70 an der Bestückungsstation mit einer oder mehreren automatisiert betriebenen Bestückungsvorrichtung(en) 110, indem das Zielladehilfsmittel 70 auf dem Bodenwandteil 206 abgestellt wird, und
- Definition der zweiten Stapelladehilfe 100b als Zielladehilfsmittel 170.

Das Verfahren zum Lagern und Kommissionieren von Waren 2 kann zusätzlich die Schritte umfassen:
- Transport von ersten / zweiten Stapelladehilfen 100a, 100b durch die autonom verfahrbaren, fahrerlosen Transportfahrzeuge 9; 90 zur Entladestation und Bereitstellung von einer oder mehreren Stapelladehilfe(n) 100a, 100b entweder an einer oder mehreren automatisiert betriebenen Entladevorrichtung(en) 11 oder auf einer Pufferfläche 92 nahe der Entladevorrichtung(en) 11,
- Zusammenstellung der Warenträger 3 gemäß dem genannten Kommissionierauftrag zum Auftragsstapel 106 auf dem Zielladehilfsmittel 70 in der ersten Stapelladehilfe 100a oder auf dem Bodenwandteil 206 der zweiten Stapelladehilfe 100b, welche erste Stapelladehilfe 100a oder zweite Stapelladehilfe 100b an der automatisiert betriebenen Entladevorrichtung(en) 11 bereitgestellt wird.

Das oben beschriebene Verfahren zum Lagern und Kommissionieren von Waren 2 kann zur Bearbeitung eines Kommissionierauftrags an einer oder mehreren teilautomatisiert betriebenen Entladevorrichtung(en) 100 zusätzlich die Schritte umfassen:
- Transport einer oder von mehreren die zum Kommissionierauftrag benötigten Warenträger 3 enthaltenden Transportladehilfe(n) 7b, 7c von der Beladestation und/oder von dem Lagerbereich 5 zur Entladestation und Bereitstellung genannter Transportladehilfe(n) 7b, 7c entweder an einer oder mehreren teilautomatisiert betriebenen Entladevorrichtung(en) 100 oder auf einer Pufferfläche 104a nahe der Entladevorrichtung(en) 100 durch ein oder mehrere autonom verfahrbare(s), fahrerlose(s) Transportfahrzeug(e) 9; 90 und Lagestabilisierung der Warenträgerstapelgruppe 8a, 8b, 8c durch die Transportsicherung 160; 174 während der Transportbewegung der beladenen Transportladehilfe 7b, 7c,
- manuelles Entladen einer oder mehrerer der Transportladehilfe(n) 7b, 7c, welche an der oder den teilautomatisiert betriebenen Entladevorrichtung(en) 100 bereitgestellt wird (werden), durch Entnahme der für die Bearbeitung des genannten Kommissionierauftrags benötigten Warenträger 3 und gegebenenfalls Lagestabilisierung der Warenträgerstapelgruppe 8a, 8b, 8c durch die Transportsicherung 160; 174 während der manuellen Entladebewegungen eines Lagerarbeiter an der oder den teilautomatisiert betriebenen Entladevorrichtung(en) 11 und
- manuelle Zusammenstellung der Warenträger 3 auf einem oder mehreren Zielladehilfsmitteln 70; 170 zum genannten Kommissionierauftrag, wenn das oder die Zielladehilfsmitteln 70; 170 an der oder die teilautomatisiert betriebenen Entladevorrichtung(en) 100 bereitgestellt wird (werden).

Die "Lagestabilisierung einer Warenträgerstapelgruppe" bedeutet in diesem Zusammenhang, dass ein seitliches Verrutschen einzelner Warenträger 3 in der Warenträgerstapelgruppe 8a, 8b, 8c oder ein seitliches Verrutschen der Warenträgerstapelgruppe 8a, 8b, 8c gegenüber der Transportladehilfen 7b, 7c durch die Transportsicherung 160, 174 vermieden oder zumindest begrenzt wird. Die Warenträgerstapelgruppe 8a, 8b, 8c kann durch die Transportsicherung 160, 174 zuverlässig transportiert werden, selbst wenn die mobile Transportladehilfe 7b, 7c mit dem Transportfahrzeug 9; 90 hochdynamisch bewegt wird, wie oben beschrieben.

Die mobilen Transportladehilfen 7b, 7c können an der Entladevorrichtung 100 auch zuverlässig (manuell) entladen werden. Ist eine Lagestabilisierung der Warenträgerstapelgruppe 8a, 8b, 8c während der Entladebewegung einzelner Warenträger 3 oder eines Warenträgerstapels vorgesehen, kann durch die Transportsicherung 160; 174 ein seitliches Verrutschen einzelner Warenträger 3 in der Warenträgerstapelgruppe 8a, 8b, 8c oder ein seitliches Verrutschen der Warenträgerstapelgruppe 8a, 8b, 8c gegenüber der Transportladehilfe 7b, 7c vermieden oder zumindest begrenzt werden.

Dies kann sich von Vorteil erweisen, wenn der Lagerarbeiter einen oder gleichzeitig mehrere Warenträger 3 initial gegen die Transportsicherung 164, 170 bewegt, um dadurch eine sichere Aufnahme eines oder gleichzeitig mehrerer Warenträger(s) 3 zu ermöglichen. Ein solcher manueller Entladevorgang kann beispielweise bei schwierig greifbaren Warenträgern 3 angewendet werden. Dies ist aber nicht zwingend zu verstehen, sondern kann der Endladevorgang auch derart gestaltet werden, dass der Lagerarbeiter initial eine Entladebewegungen entgegen der Richtung auf die Transportsicherung 164, 170 durchführt, um eine schnelle Aufnahme eines oder gleichzeitig mehrerer Warenträger(s) 3 zu ermöglichen. Ein solcher Entladevorgang kann beispielweise bei einfach greifbaren Warenträgern 3 angewendet werden.

Ebenso gelten die oben genannten Vorteile zur "Lagestabilisierung eines Auftragsstapels" an der automatisiert betriebenen Beladevorrichtung(en) 11 auch für die Verwendung der mobilen Stapelladehilfen 100a, 100b an der teilautomatisiert betriebenen Beladevorrichtung 100.

Die Bereitstellung beladener Transportladehilfe(n) 7b, 7c an einer oder mehreren teilautomatisiert betriebenen Entladevorrichtung(en) 100 kann die Schritte umfassen:
- Übernahme einer Transportladehilfe 7b, 7c von einem autonom verfahrbaren, fahrerlosen Transportfahrzeug 9; 90 auf eine Hubplattform 105a der Entladevorrichtung(en) 100,
- Andienen der Warenträger 3 auf einem Andienungsniveau durch Anheben der Transportladehilfe 7b, 7c, welche auf der Hubplattform 105a abgestellt ist, um ein ergonomisches Entladen der Warenträger 3 durch eine Kommissionierperson zu ermöglichen.

Das Verfahren zum Lagern und Kommissionieren von Waren 2 kann zur Bearbeitung eines Kommissionierauftrags an einer oder mehreren teilautomatisiert betriebenen Entladevorrichtung(en) 100 zusätzlich die Schritte umfassen:
- Transport von leeren Zielladehilfsmitteln 70; 170 durch die autonom verfahrbaren, fahrerlosen Transportfahrzeuge 9; 90 zur Entladestation und Bereitstellung genannter leerer Zielladehilfsmittel 70; 170 entweder an einer oder mehreren teilautomatisiert betriebenen Entladevorrichtung(en) 100 oder auf einer Pufferfläche 104b nahe der Entladevorrichtung(en) 100 durch ein oder mehrere autonom verfahrbare(s), fahrerlose(s) Transportfahrzeug(e) 9; 90,
- manuelle Zusammenstellung der Warenträger 3 auf einem oder mehreren leeren Zielladehilfsmitteln 70; 170 zum genannten Kommissionierauftrag, wenn das oder die leere(n) Zielladehilfsmitteln 70; 170 an der oder die teilautomatisiert betriebenen Entladevorrichtung(en) 100 bereitgestellt wird (werden).

Das Verfahren zum Lagern und Kommissionieren von Waren 2 kann zur Bearbeitung eines Kommissionierauftrags an einer oder mehreren teilautomatisiert betriebenen Entladevorrichtung(en) 100 zusätzlich die Schritte umfassen:
- Transport von teilbeladenen Zielladehilfsmitteln 70; 170 durch die autonom verfahrbaren, fahrerlosen Transportfahrzeuge 9; 90 von der automatisiert betriebenen Entladevorrichtung 11 zu der teilautomatisiert betriebenen Entladevorrichtung 100 oder zu einer Pufferfläche 104b nahe der teilautomatisiert betriebenen Entladevorrichtung(en) 100, nachdem an der automatisiert betriebenen Entladevorrichtung 11 die Warenträger 3 auf dem teilbeladenen Zielladehilfsmittel 70; 170 zusammengestellt wurden und sofern zum genannten Kommissionierauftrag noch Warenträger 3 benötigt werden, welche über die Transportladehilfen 7b, 7c an der teilautomatisiert betriebenen Entladevorrichtung(en) 100 bereitgestellt werden,
- manuelle Zusammenstellung der Warenträger 3 auf einem oder mehreren teilbeladenen Zielladehilfsmitteln 70; 170 zum genannten Kommissionierauftrag, wenn das oder die teilbeladene(n) Zielladehilfsmitteln 70; 170 an der oder die teilautomatisiert betriebenen Entladevorrichtung(en) 100 bereitgestellt wird (werden).

Das Verfahren zum Lagern und Kommissionieren von Waren 2 kann zur Bearbeitung eines Kommissionierauftrags an einer oder mehreren teilautomatisiert betriebenen Entladevorrichtung(en) 100 zusätzlich die Schritte umfassen:
- Transport von Stapelladehilfen 100a, 100b durch die autonom verfahrbaren, fahrerlosen Transportfahrzeuge 9; 90 zur Entladestation und Bereitstellung von einer oder mehreren Stapelladehilfe(n) 100a, 100b entweder an einer oder mehreren teilautomatisiert betriebenen Entladevorrichtung(en) 100 oder auf einer Pufferfläche 104b nahe der Entladevorrichtung(en) 100,
- Zusammenstellung der Warenträger 3 gemäß dem genannten Kommissionierauftrag zum Auftragsstapel 106 auf dem Zielladehilfsmittel 70 in der ersten Stapelladehilfe 100a oder auf einem Bodenwandteil 206 der zweiten Stapelladehilfe 100b, welche erste Stapelladehilfe 100a oder zweite Stapelladehilfe 100b an der teilautomatisiert betriebenen Entladevorrichtung(en) 100 bereitgestellt wird.

Das Verfahren zum Lagern und Kommissionieren von Waren 2 kann zusätzlich die Schritte umfassen:
- Bereitstellung einer Auftragsstapel-Ladungssicherungsstation entweder mit einer oder mehreren automatisiert betriebenen Ladungssicherungsvorrichtung(en) 120 oder mit einer oder mehreren automatisiert betriebenen Ladungssicherungsvorrichtung(en) 120 und einer Pufferfläche 125 nahe der Ladungssicherungsvorrichtung(en) 120, welche Ladungssicherungsvorrichtung 120 zur Transportsicherung eines Auftragsstapels 106 mit einem Sicherungsmittel 121 ausgebildet ist,
- Transport von jeweils mit einem Auftragsstapel 106 beladenen Stapelladehilfen 100a, 100b durch die autonom verfahrbaren, fahrerlosen Transportfahrzeuge 9; 90 zu genannter Auftragsstapel-Ladungssicherungsstation und Bereitstellung von einer oder mehreren Stapelladehilfe(n) 100a, 100b entweder an einer oder mehreren automatisiert betriebenen Ladungssicherungsvorrichtung(en) 120 oder auf einer Pufferfläche 125 nahe der Ladungssicherungsvorrichtung(en) 120,
- Entfernen des Auftragsstapels 106 von der Stapelladehilfe 100a, 100b durch eine Hebevorrichtung 123, 124, mit welcher das Zielladehilfsmittel 70 mit dem Auftragsstapel 106 von der ersten Stapelladehilfe 100a abgehoben wird, wenn das Kommissionierlager 1 die erste Stapelladehilfe 100a umfasst, oder mit welcher der Auftragsstapel 106 von der zweiten Stapelladehilfe 100b abgehoben wird, wenn das Kommissionierlager 1 die zweite Stapelladehilfe 100b umfasst,
- Sicherung des Auftragsstapels 106 mit dem Sicherungsmittel 121 durch die automatisiert betriebene Ladungssicherungsvorrichtung 120, indem das Sicherungsmittel 121 um den Auftragsstapel 106 umfänglich angebracht wird,
- Transport des gesicherten Auftragsstapels 106 insbesondere durch die autonom verfahrbaren, fahrerlosen Transportfahrzeuge 9; 90, von der Ladungssicherungsstation zu einem Auslieferbereich.

Nach der ersten Ausführung wird das Zielladehilfsmittel 70 mit dem Auftragsstapel 106 relativ zur ersten Stapelladehilfe 100a angehoben und gleichzeitig der aus der ersten Stapelladehilfe 100a herausgehobene Auftragsstapel 106 zur Stabilisierung mit dem Sicherungsmittel 121 umwickelt. Danach wird der gesicherte Auftragsstapel 106 durch die Hebevorrichtung wieder abgesenkt und an eine (nicht gezeigte) stationäre Fördertechnik oder an ein autonom verfahrbares, fahrerloses Transportfahrzeug 9; 90 übergeben. Der nunmehr gesicherte Auftragsstapel 106 kann von der Ladungssicherungsstation zu einem Auslieferbereich (Konsolidierungsbereich bzw. Warenausgang) transportiert werden. In diesem Fall bildet das Zielladehilfsmittel 70 den Auslieferladungsträger.

Nach der zweiten Ausführung wird der Auftragsstapel 106 relativ zur zweiten Stapelladehilfe 100b angehoben und gleichzeitig der aus der zweiten Stapelladehilfe 100b herausgehobene Auftragsstapel 106 zur Stabilisierung mit dem Sicherungsmittel 121 umwickelt. Danach wird der gesicherte Auftragsstapel 106 durch die Hebevorrichtung wieder abgesenkt und auf einen Auslieferladungsträger, bevorzugt ein Rollcontainer, eine Palette und dgl. abgegeben. Der Auslieferladungsträger wird durch eine (nicht gezeigte) stationäre Fördertechnik oder ein autonom verfahrbares, fahrerloses Transportfahrzeug 9; 90 von der Ladungssicherungsstation zu einem Auslieferbereich (Konsolidierungsbereich bzw. Warenausgang) transportiert.

Der Transport der entladenen Stapelladehilfen 100a, 100b durch die autonom verfahrbaren, fahrerlosen Transportfahrzeuge 9; 90 kann die Schritte umfassen:
- Transport der ersten Stapelladehilfe 100a von der Ladungssicherungsstation zur Bestückungsstation mit einer oder mehreren automatisiert betriebenen Bestückungsvorrichtung(en) 110, sofern im Kommissionierlager 1 eine erste Stapelladehilfe 100a verwendet wird, und/oder
- Transport der zweiten Stapelladehilfe 100b von der Ladungssicherungsstation zur Entladestation und Bereitstellung der zweiten Stapelladehilfe(n) 100b entweder an einer automatisiert betriebenen Entladevorrichtung 11 oder auf einer Pufferfläche 92 nahe der Entladevorrichtung 11, sofern im Kommissionierlager 1 eine zweite Stapelladehilfe 100b verwendet wird, und/oder
- Transport der zweiten Stapelladehilfe 100b von der Ladungssicherungsstation zur Entladestation und Bereitstellung der zweiten Stapelladehilfe(n) 100b entweder an einer teilautomatisiert betriebenen Entladevorrichtung 100 oder auf einer Pufferfläche 104b nahe der Entladevorrichtung 100, sofern im Kommissionierlager 1 eine zweite Stapelladehilfe 100b verwendet wird.

Das Verfahren zum Lagern und Kommissionieren von Waren 2 im Kommissionierlager 1 kann zusätzlich die Schritte umfassen:
- Bereitstellung eines Reinigungssystems mit einem automatisiert betriebenen Reinigungsroboter 85 (wie schematisch in Fig. 1a eingetragen),
- Reinigung der Transportladehilfen 7a, 7b, 7c, 7d und/oder des Bodens in der Beladestation und/oder Entladestation (daher der Andienungsplätze, die Pufferfläche und gemäß der ersten Ausführung der Wartezone) und Lagerfläche 45 im Lagerbereich 5 mit dem Reinigungsroboter 85.

Es sei auch noch hingewiesen, dass die Andienungsplätze 41, 71a, 71b, 101a auch auf einer automatisiert betriebenen stationären Fördertechnik zum Antransport der Transportladehilfen 7a, 7b, 7c zu dem Andienungsplatz 41, 71a, 71b, 101a und Abtransport der Transportladehilfen 7a, 7b, 7c von dem Andienungsplatz 41, 71a, 71b, 101a ausgebildet sein können, wobei Transportabschnitte dieser stationären Fördertechnik die Andienungsplätze 41, 71a, 71b, 101a für die Bereitstellung der Transportladehilfen 7a, 7b, 7c bilden. Zusätzlich kann diese stationären Fördertechnik in einem Transportabschnitt einen Übernahmeplatz und in einem Transportabschnitt einen Übergabeplatz ausbilden.

Im Nachfolgenden wird dies an einem Beispiel beschrieben, wo eine Transportladehilfe 7a, 7b, 7c an einer automatisiert betriebenen Entladevorrichtung 11 bereitgestellt werden soll.

Eines der autonom verfahrbaren, fahrerlosen Transportfahrzeuge 9 transportiert eine Transportladehilfe 7b, 7c zur stationären Fördertechnik an, wo dann die Übergabe der Transportladehilfe 7b, 7c von dem Transportfahrzeug 9 auf den Übernahmeplatz erfolgt. Sodann wird die Transportladehilfe 7b, 7c von dem Übernahmeplatz zum Andienungsplatz 71a, 71b transportiert. Nach der Entnahme der Warenträger 3 von der Transportladehilfe 7b, 7c, wenn diese an der Entladevorrichtung 11, insbesondere auf einem Andienungsplatz 71a, 71b bereitgestellt wird, wird die Transportladehilfe 7b, 7c von dem Andienungsplatz 71a, 71b zu dem Übergabeplatz transportiert, wo dann die Übergabe der Transportladehilfe 7b, 7c von dem Übergabeplatz auf das Transportfahrzeug 9 erfolgt.

Gleichermaßen kann eine Transportladehilfe 7a, 7b, 7c an einer teilautomatisiert betriebenen Entladevorrichtung 100 bereitgestellt werden.

Ebenso können auch die Andienungsplätze 91a, 91b, 101b, 111, 122 auf einer automatisiert betriebenen stationären Fördertechnik zum Antransport der Stapelladehilfen 100a, 100b zu dem Andienungsplatz 91a, 91b, 101b, 111, 122 und Abtransport der Stapelladehilfen 100a, 100b von dem Andienungsplatz 91a, 91b, 101b, 111, 122 ausgebildet sein, wobei Transportabschnitte dieser stationären Fördertechnik die Andienungsplätze 91a, 91b, 101b, 111, 122 für die Bereitstellung der Stapelladehilfen 100a, 100b bilden. Zusätzlich kann diese stationären Fördertechnik in einem Transportabschnitt einen Übernahmeplatz und in einem Transportabschnitt einen Übergabeplatz ausbilden.

Im Nachfolgenden wird dies an einem Beispiel beschrieben, wo eine Stapelladehilfen 100a, 100b an einer automatisiert betriebenen Entladevorrichtung 11 bereitgestellt werden soll.

Eines der autonom verfahrbaren, fahrerlosen Transportfahrzeuge 9 transportiert eine Stapelladehilfe 100a, 100b zur stationären Fördertechnik an, wo dann die Übergabe der Stapelladehilfe 100a, 100b von dem Transportfahrzeug 9 auf den Übernahmeplatz erfolgt. Sodann wird die Stapelladehilfe 100a, 100b von dem Übemahmeplatz zum Andienungsplatz 91a, 91b transportiert. Nach dem Beladen der Stapelladehilfe 100a, 100b mit Warenträgern 3, wenn diese an der Entladevorrichtung 100, insbesondere auf einem Andienungsplatz 91a, 91b bereitgestellt wird, wird die Stapelladehilfe 100a, 100b von dem Andienungsplatz 91a, 91b zu dem Übergabeplatz transportiert, wo dann die Übergabe der Stapelladehilfe 100a, 100b von dem Übergabeplatz auf das Transportfahrzeug 9 erfolgt.

Gleichermaßen kann eine Stapelladehilfe 100a, 100b an einer teilautomatisiert betriebenen Entladevorrichtung 100 bereitgestellt werden.

Es kann zusammenfassend festgehalten werden, dass Andienungsplätze 41, 71a, 71b, 101a für die Transportladehilfen 7a, 7b, 7c, 7d und/oder die Andienungsplätze 91a, 91b, 101b, 111, 122 für die Stapelladehilfe 100a, 100b am Boden oder auf der automatisiert betriebenen stationären Fördertechnik ausgebildet sein können und nicht angetrieben oder angetrieben sind.

Das beschriebene Kommissionierlager und Verfahren zum Lagern und Kommissionieren eignet sich insbesondere im Frischebereich von Lebensmitteln, wo verderbliche Waren, wie beispielsweise Obst und Gemüse, einen schnellen Warenumschlag erfordern und bei denen üblicherweise nur eine beschränkte Anzahl von unterschiedlichen Sorten gleichzeitig kommissioniert werden müssen. Es ist eine besonders effiziente Handhabung der Waren 2 / Warenträger 3 mit hoher Kommissionierleistung in kurzen Zeiträumen möglich.

Abschließend wird auch festgehalten, dass der Schutzbereich durch die Patentansprüche bestimmt ist. Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1: Kommissionierlager
- 2: Ware
- 3: Warenträger
- 4: Anlieferbereich
- 5: Lagerbereich

- 6: Auftragsbearbeitungsbereich
- 7a..7d: Transportladehilfe
- 8a..8c: Warenträgerstapelgruppe
- 9: Transportfahrzeug
- 10: Beladevorrichtung

- 11: Entladevorrichtung (automatisch)
- 15: Auftragsrechner
- 16: Steuerungssystem
- 17a..17c: Anlieferladungsträger

- 20: Prüfvorrichtung
- 21: Fördertechnik Überprüfstation
- 22: Erfassungsvorrichtung
- 23: Eingabe- und/oder Ausgabevorrichtung
- 24: Klemm- und Hebevorrichtung

- 25a..25d: Datenträger
- 26a: oberer Warenträgerstapel
- 26b: unterer Warenträgerstapel
- 27a..27b: Klemmbacke
- 28: Hubrahmen

- 30: Fördertechnik Beladestation
- 31: Fördertechnik zwischen Überprüfstation und Beladestation
- 40: Andienungsplatz Warenträgerstapelgruppe Beladevorrichtung
- 41: Andienungsplatz Transportladehilfe Beladevorrichtung
- 42: Transfervorrichtung Beladevorrichtung
- 43: Pufferfläche Transportladehilfe Beladevorrichtung

- 45: Lagerfläche
- 50: Fördertechnik Beladevorrichtung
- 51: Teleskopgabeln
- 52: Ankipp- und Rückkippvorrichtung
- 53: Abstellplatte
- 70: Zieladehilfsmittel
- 71a..71b: Andienungsplatz Transportladehilfe automatische Entladevorrichtung
- 72: Transfervorrichtung Entladevorrichtung
- 73: Pufferfläche Transportladehilfe
- 74: Wartezone

- 80: Tragkonstruktion
- 81: Portalschlitten
- 82: Portalarm
- 83: Portalschlitten
- 84: Portalschlitten

- 85: Reinigungsroboter
- 90: Transportfahrzeug
- 91a..91b: Andienungsplatz Stapelladehilfe automatische Entladevorrichtung
- 92: Pufferfläche Stapelladehilfe automatische Entladevorrichtung
- 100: Entladevorrichtung (manuell)

- 100a: erste Stapelladehilfe
- 100b: zweite Stapelladehilfe
- 101a: Andienungsplatz Transportladehilfe manuelle Entladevorrichtung
- 101b: Andienungsplatz Stapelladehilfe manuelle Entladevorrichtung
- 102: Arbeitsplatz

- 103: Arbeitsfläche
- 104a: Pufferfläche Transportladehilfe manuelle Entladevorrichtung
- 104b: Pufferfläche Stapelladehilfe manuelle Entladevorrichtung
- 105a: Hubplattform Transportladehilfe
- 105b: Hubplattform Stapelladehilfe

- 106: Auftragsstapel
- 110: Bestückungsvorrichtung
- 111: Andienungsplatz Stapelladehilfe Bestückungsvorrichtung
- 112: Transfervorrichtung Bestückungsvorrichtung
- 113: Pufferfläche Stapelladehilfe Bestückungsvorrichtung

- 120: Ladungssicherungsvorrichtung
- 121: Sicherungsmittel
- 122: Andienungsplatz Stapelladehilfe Ladungssicherungsvorrichtung
- 123: Hubrahmen
- 124: Teleskopgabel

- 125: Pufferfläche Stapelladehilfe Ladungssicherungsvorrichtung
- 150: Fahrgestell
- 151: Ladeplattform
- 152: Rad
- 153: lenkbares Rad

- 154: Fahrsteuerung
- 160: Transportsicherung Transportfahrzeug
- 161a..161b: Seitenwand
- 170: Zieladehilfsmittel
- 171: Bodenwandteil

- 172: Transportrahmen
- 173a..173b: Seitenwand
- 174: Transportsicherung Transportladehilfe
- 175: Stellfuß
- 176a: erste Längskante

- 176b: zweite Längskante
- 205: Transportrahmen
- 206: Bodenwandteil
- 207: Transportsicherung Stapelladehilfe
- 208a..208b: Seitenwand

- 209: Stellfuß
- 210a: erste Längskante
- 210b: zweite Längskante
- 215: Aufnahmekanal
- 216: Abstellklotz

- 220a: erste Temperaturzone
- 220a: zweite Temperaturzone

## Patentansprüche

1. Verfahren zum Lagern und Kommissionieren von Waren (2), insbesondere Lebensmittel aus dem Frischebereich, enthaltenden und stapelbaren Warenträgern (3) in einem Kommissionierlager (1), umfassend die Schritte
Bereitstellung von autonom verfahrbaren, fahrerlosen Transportfahrzeugen (9; 90) im Kommissionierlager (1), welche jeweils ein Fahrgestell (150) mit einer Antriebseinheit und eine auf dem Fahrgestell (150) angeordnete Ladeplattform (151) zur Aufnahme einer mobilen Transportladehilfe (7a, 7b, 7c, 7d) aufweisen,
Bereitstellung von mobilen Transportladehilfen (7a, 7b, 7c, 7d) jeweils zur Aufnahme einer Warenträgerstapelgruppe (8a, 8b, 8c) im Kommissionierlager (1),
wobei die mobilen Transportladehilfen (7a, 7b, 7c, 7d) jeweils umfassen
- ein Transportgestell, welches einen Transportrahmen (172) ausbildet, gegen welchen die Ladeplattform (151) eines Transportfahrzeuges (9; 90) angestellt werden kann, und
- einen Boden, welcher einen Bodenwandteil (171) ausbildet, auf welchem die Warenträgerstapelgruppe (8a, 8b, 8c) abgestellt werden kann,
und wobei die mobilen Transportladehilfen (7a, 7b, 7c, 7d) leere Transportladehilfen (7a) umfassen,
Bereitstellung einer Transportsicherung (160; 174) an wenigstens einigen der autonom verfahrbaren, fahrerlosen Transportfahrzeugen (90) oder an wenigstens einigen der mobilen Transportladehilfen (7a, 7b, 7c), welche der Lagestabilisierung einer Warenträgerstapelgruppe (8a, 8b, 8c) dient, wenn diese auf der mobilen Transportladehilfe (7b, 7c, 7d) aufgenommen ist,
wobei die wenigstens einigen der autonom verfahrbaren, fahrerlosen Transportfahrzeuge (90) jeweils umfassen
- die Ladeplattform (151) und
- Seitenwände (161a, 161b), welche Seitenwände (161a, 161b) benachbart zur Ladeplattform (151) angeordnet sind und die Transportsicherung (160) zur Lagestabilisierung der Warenträgerstapelgruppe (8a, 8b, 8c) bilden, wenn diese mit der Transportladehilfe (7d) auf der Ladeplattform (151) abgestellt ist, und eine erste Seitenwand (161a) und eine zweite Seitenwand (161b) aufweisen, wobei die erste Seitenwand (161a) und zweite Seitenwand (161b) einen Winkel einschließen,
oder
wobei die wenigstens einigen der mobilen Transportladehilfen (7a, 7b, 7c, 7d) jeweils zusätzlich umfassen
- Seitenwände (173a, 173b), welche die Transportsicherung (174) zur Lagestabilisierung der Warenträgerstapelgruppe (8a, 8b, 8c) bilden, wenn diese auf dem Bodenwandteil (171) abgestellt ist, und eine erste Seitenwand (173a) und eine zweite Seitenwand (173b) aufweisen, wobei die erste Seitenwand (173a) und zweite Seitenwand (173b) einen Winkel einschließen,
und wobei der Bodenwandteil (171) sowohl um einen ersten Neigungswinkel (α₁) gegenüber einer zwischen der ersten Seitenwand (161a; 173a) und zweiten Seitenwand (161b; 173b) aufgespannten Horizontalebene in Richtung zur ersten Seitenwand (161a; 173a) nach unten geneigt verläuft, als auch um einen zweiten Neigungswinkel (α₂) gegenüber einer zwischen der ersten Seitenwand (161a; 173a) und zweiten Seitenwand (161b; 173b) aufgespannten Horizontalebene in Richtung zur zweiten Seitenwand (161b; 173b) nach unten geneigt verläuft, wobei die erste Seitenwand (161a; 173a) und die zweite Seitenwand (161b; 173b) normal auf den Bodenwandteil (171) ausgerichtet sind,
Bereitstellung von Warenträgerstapelgruppen (8a, 8b, 8c) umfassend mehrere nebeneinander und übereinander angeordnete Warenträger (3) in einem Anlieferbereich (4) des Kommissionierlagers (1),
Transport von leeren Transportladehilfen (7a) durch die autonom verfahrbaren, fahrerlosen Transportfahrzeuge (9; 90) zu einer Beladestation und Bereitstellung von einer oder mehreren leeren Transportladehilfe(n) (7a) entweder an einer oder mehreren automatisiert betriebenen Beladevorrichtung(en) (10) oder auf einer Pufferfläche (43) nahe der Beladevorrichtung(en) (10),
Beladen einer der leeren Transportladehilfen (7a), welche an der automatisiert betriebenen Beladevorrichtung (10) bereitgestellt wird, mit der Warenträgerstapelgruppe (8a, 8b, 8c), welche im Anlieferbereich (4) bereitgestellt und im Wesentlichen unverändert auf der leeren Transportladehilfe (7a) übernommen wird, durch die automatisiert betriebene Beladevorrichtung (10),
Transport der mit der Warenträgerstapelgruppe (8a, 8b, 8c) beladenen Transportladehilfe (7b, 7c) mit dem autonom verfahrbaren, fahrerlosen Transportfahrzeug (9; 90) von der Beladestation zu einem Lagerbereich (5) und Lagestabilisierung der Warenträgerstapelgruppe (8a, 8b, 8c) durch die Transportsicherung (160; 174) während der Transportbewegung der beladenen Transportladehilfe (7b, 7c),
Abstellen der mit der Warenträgerstapelgruppe (8a, 8b, 8c) beladenen Transportladehilfe (7b, 7c) auf einer Lagerfläche (45) im Lagerbereich (5),
Lagerung der mit den Warenträgerstapelgruppen (8a, 8b, 8c) beladenen Transportladehilfen (7b, 7c) im Lagerbereich (5),
Bearbeitung eines Kommissionierauftrags umfassend die Schritte
- Transport von einer oder mehreren die zu einem Kommissionierauftrag benötigten Warenträger (3) enthaltenden Transportladehilfe(n) (7b, 7c) vom Lagerbereich (5) zu einer Entladestation und Bereitstellung genannter Transportladehilfe(n) (7b, 7c) entweder an einer oder mehreren automatisiert betriebenen Entladevorrichtung(en) (11) oder auf einer Pufferfläche (73) nahe der Entladevorrichtung(en) (11) durch ein oder mehrere autonom verfahrbare(s), fahrerlose(s) Transportfahrzeug(e) (9; 90) und Lagestabilisierung der Warenträgerstapelgruppe (8a, 8b, 8c) durch die Transportsicherung (160; 174) während der Transportbewegung der beladenen Transportladehilfe (7b, 7c),
- Entladen einer oder mehrerer der Transportladehilfe(n) (7b, 7c), welche an der oder den automatisiert betriebenen Entladevorrichtung(en) (11) bereitgestellt wird (werden), durch Entnahme der für die Bearbeitung des genannten Kommissionierauftrags benötigten Warenträger (3), und
- Zusammenstellung der Warenträger (3) auf einem oder mehreren Zielladehilfsmitteln (70; 170) zum genannten Kommissionierauftrag in einem Auftragsbearbeitungsbereich (6).

2. Verfahren zum Lagern und Kommissionieren von Waren nach Anspruch 1, **dadurch gekennzeichnet, dass** die Zusammenstellung der Warenträger (3) zum genannten Kommissionierauftrag derart durchgeführt wird, dass ein an der Entladevorrichtung (11) aus der Warenträgerstapelgruppe (8a, 8b, 8c) entnommener einzelner Warenträger (3) oder ein aus der Warenträgerstapelgruppe (8a, 8b, 8c) entnommener Warenträgerstapel durch die Entladevorrichtung (11) auf ein Zielladehilfsmittel (70; 170) übergeben wird.

3. Verfahren zum Lagern und Kommissionieren von Waren nach Anspruch 1, ferner umfassend die Schritte
- Bereitstellung von Stapelladehilfen (100a, 100b) jeweils zur Aufnahme und gegebenenfalls Lagestabilisierung eines aus den Warenträgern (3) gemäß dem genannten Kommissionierauftrag zusammengestellten Auftragsstapels (106), wovon die Stapelladehilfen (100a, 100b) zumindest eine erste Stapelladehilfe (100a) und/oder zumindest eine zweite Stapelladehilfe (100b) umfassen, und welche ihrerseits einen Bodenwandteil (206) und gegebenenfalls an diesem vorragende Seitenwände (208a, 208b) umfassen,
- Bestücken der ersten Stapelladehilfe (100a) mit einem Zielladehilfsmittel (70) an einer Bestückungsstation mit einer oder mehreren automatisiert betriebenen Bestückungsvorrichtung(en) (110), indem das Zielladehilfsmittel (70) auf dem Bodenwandteil (206) abgestellt wird, sofern eine erste Stapelladehilfe (100a) im Kommissionierlager (1) verwendet wird, und/oder
- Definition der zweiten Stapelladehilfe (100b) als Zielladehilfsmittel (110), sofern eine zweite Stapelladehilfe (100b) im Kommissionierlager (1) verwendet wird.

4. Verfahren zum Lagern und Kommissionieren von Waren nach Anspruch 3, **gekennzeichnet durch** die Schritte
- Transport von Stapelladehilfen (100a, 100b) durch die autonom verfahrbaren, fahrerlosen Transportfahrzeuge (9; 90) zur Entladestation und Bereitstellung von einer oder mehreren Stapelladehilfe(n) (100a, 100b) entweder an einer oder mehreren automatisiert betriebenen Entladevorrichtung(en) (11) oder auf einer Pufferfläche (92) nahe der Entladevorrichtung(en) (11),
- Zusammenstellung der Warenträger (3) gemäß dem genannten Kommissionierauftrag zum Auftragsstapel (106) auf dem Zielladehilfsmittel (70) in der ersten Stapelladehilfe (100a) oder auf dem Bodenwandteil (206) der zweiten Stapelladehilfe (100b), welche erste Stapelladehilfe (100a) oder zweite Stapelladehilfe (100b) an der automatisiert betriebenen Entladevorrichtung(en) (11) bereitgestellt wird.

5. Verfahren zum Lagern und Kommissionieren von Waren nach einem der Ansprüche 1 bis 4, **dadurch gekennzeichnet, dass** die Bearbeitung eines Kommissionierauftrags zusätzlich die Schritte umfasst
- Transport von einer oder mehreren die zum Kommissionierauftrag benötigten Warenträger (3) enthaltenden Transportladehilfe(n) (7b, 7c) vom Lagerbereich (5) zur Entladestation und Bereitstellung genannter Transportladehilfe(n) (7b, 7c) entweder an einer oder mehreren teilautomatisiert betriebenen Entladevorrichtung(en) (100) oder auf einer Pufferfläche (104a) nahe der Entladevorrichtung(en) (100) durch ein oder mehrere autonom verfahrbare(s), fahrerlose(s) Transportfahrzeug(e) (9; 90) und Lagestabilisierung der Warenträgerstapelgruppe (8a, 8b, 8c) durch die Transportsicherung (160; 174) während der Transportbewegung der beladenen Transportladehilfe(n) (7b, 7c),
- manuelles Entladen einer oder mehrerer der Transportladehilfe(n) (7b, 7c), welche an der oder den teilautomatisiert betriebenen Entladevorrichtung(en) (100) bereitgestellt wird (werden), durch Entnahme der für die Bearbeitung des genannten Kommissionierauftrags benötigten Warenträger (3), und
- manuelle Zusammenstellung der Warenträger (3) auf einem oder mehreren Zielladehilfsmitteln (70; 170) zum genannten Kommissionierauftrag, wenn das oder die Zielladehilfsmitteln (70; 170) an der oder die teilautomatisiert betriebenen Entladevorrichtung(en) (100) bereitgestellt wird (werden).

6. Verfahren zum Lagern und Kommissionieren von Waren nach Anspruch 5, **gekennzeichnet durch** die Schritte
- Transport von Stapelladehilfen (100a, 100b) durch die autonom verfahrbaren, fahrerlosen Transportfahrzeuge (9; 90) zur Entladestation und Bereitstellung von einer oder mehreren Stapelladehilfe(n) (100a, 100b) entweder an einer oder mehreren teilautomatisiert betriebenen Entladevorrichtung(en) (100) oder auf einer Pufferfläche (104b) nahe der Entladevorrichtung(en) (100),
- Zusammenstellung der Warenträger (3) gemäß dem genannten Kommissionierauftrag zum Auftragsstapel (106) auf dem Zielladehilfsmittel (70) in der ersten Stapelladehilfe (100a) oder auf einem Bodenwandteil (206) der zweiten Stapelladehilfe (100b), welche erste Stapelladehilfe (100a) oder zweite Stapelladehilfe (100b) an der teilautomatisiert betriebenen Entladevorrichtung(en) (100) bereitgestellt wird.

7. Verfahren zum Lagern und Kommissionieren von Waren nach einem der Ansprüche 3 bis 6, ferner umfassend die Schritte
- Bereitstellung einer Auftragsstapel-Ladungssicherungsstation entweder mit einer oder mehreren automatisiert betriebenen Ladungssicherungsvorrichtung(en) (120) oder mit einer oder mehreren automatisiert betriebenen Ladungssicherungsvorrichtung(en) (120) und einer Pufferfläche (125) nahe der Ladungssicherungsvorrichtung(en) (120), welche Ladungssicherungsvorrichtung (120) zur Transportsicherung eines Auftragsstapels (106) mit einem Sicherungsmittel (121) ausgebildet ist,
- Transport von jeweils mit einem Auftragsstapel (106) beladenen Stapelladehilfen (100a, 100b) durch die autonom verfahrbaren, fahrerlosen Transportfahrzeuge (9; 90) zu genannter Auftragsstapel-Ladungssicherungsstation und Bereitstellung von einer oder mehreren Stapelladehilfe(n) (100a, 100b) entweder an einer oder mehreren automatisiert betriebenen Ladungssicherungsvorrichtung(en) (120) oder auf einer Pufferfläche (125) nahe der Ladungssicherungsvorrichtung(en) (120),
- Entfernen des Auftragsstapels (106) von der Stapelladehilfe (100a, 100b) durch eine Hebevorrichtung (123, 124), mit welcher das Zielladehilfsmittel (70) mit dem Auftragsstapel (106) von der ersten Stapelladehilfe (100a) abgehoben wird, wenn das Kommissionierlager (1) die erste Stapelladehilfe (100a) umfasst, oder mit welcher der Auftragsstapel (106) von der zweiten Stapelladehilfe (100b) abgehoben wird, wenn das Kommissionierlager (1) die zweite Stapelladehilfe (100b) umfasst,
- Sicherung des Auftragsstapels (106) mit dem Sicherungsmittel (121) durch die automatisiert betriebene Ladungssicherungsvorrichtung (120), indem das Sicherungsmittel (121) um den Auftragsstapel (106) umfänglich angebracht wird,
- Transport des gesicherten Auftragsstapels (106), insbesondere durch die autonom verfahrbaren, fahrerlosen Transportfahrzeuge (9; 90) von der Ladungssicherungsstation zu einem Auslieferbereich,
Transport der entladenen Stapelladehilfen (100a, 100b) durch die autonom verfahrbaren, fahrerlosen Transportfahrzeuge (9; 90), umfassend
- Transport der ersten Stapelladehilfe (100a) von der Ladungssicherungsstation zur Bestückungsstation mit einer oder mehreren automatisiert betriebenen Bestückungsvorrichtung(en) (110), sofern im Kommissionierlager (1) eine erste Stapelladehilfe (100a) verwendet wird, und/oder
- Transport der zweiten Stapelladehilfe (100b) von der Ladungssicherungsstation zur Entladestation und Bereitstellung der zweiten Stapelladehilfe(n) (100b) entweder an einer automatisiert betriebenen Entladevorrichtung (11) oder auf einer Pufferfläche (92) nahe der Entladevorrichtung (11), sofern im Kommissionierlager (1) eine zweite Stapelladehilfe (100b) verwendet wird.

8. Kommissionierlager (1) zum Lagern und Kommissionieren von Waren (2), insbesondere zur Durchführung des Verfahrens nach einem der Ansprüche 1 bis 7, enthaltenden und stapelbaren Warenträgern (3), umfassend
einen Auftragsrechner (15) zum Erfassen eines Kommissionierauftrags und zum Bestimmen von Waren (2), welche für den Kommissionierauftrag benötigt werden,
eine Vielzahl an Transportladehilfen (7a, 7b, 7c, 7d) jeweils zur Aufnahme einer Warenträgerstapelgruppe (8a, 8b, 8c),
wobei die mobilen Transportladehilfen (7a, 7b, 7c, 7d) jeweils umfassen
- ein Transportgestell, welches einen Transportrahmen (172) ausbildet, gegen welchen die Ladeplattform (151) eines Transportfahrzeuges (9; 90) angestellt werden kann, und
- einen Boden, welcher einen Bodenwandteil (171) ausbildet, auf welchem die Warenträgerstapelgruppe (8a, 8b, 8c) abgestellt werden kann,
und wobei die Transportladehilfen (7a, 7b, 7c, 7d) mobile leere Transportladehilfen (7a) umfassen,
einen Anlieferbereich (4) zur Bereitstellung von Warenträgerstapelgruppen (8a, 8b, 8c) umfassend mehrere nebeneinander und übereinander angeordnete Warenträger (3),
eine Beladestation entweder mit einer oder mehreren automatisiert betriebenen Beladevorrichtung(en) (10) oder mit einer oder mehreren automatisiert betriebenen Beladevorrichtung(en) (10) und einer Pufferfläche (43) nahe der Beladevorrichtung(en) (10), welche Beladevorrichtung (10) zum Beladen einer der leeren Transportladehilfen (7a) mit einer Warenträgerstapelgruppe (8a, 8b, 8c) ausgebildet ist, wobei die leere Transportladehilfe (7a) zum Beladen mit einer im Wesentlichen unveränderten Warenträgerstapelgruppe (8a, 8b, 8c) an der automatisiert betriebenen Beladevorrichtung (10) bereitgestellt wird, wobei die Warenträgerstapelgruppe (8a, 8b, 8c) mehrere nebeneinander und übereinander angeordnete Warenträger (3) umfasst,
einen Lagerbereich (5) zur Lagerung der mit den Warenträgerstapelgruppen (8a, 8b, 8c) beladenen Transportladehilfen (7b, 7c) auf einer Lagerfläche (45),
eine Entladestation mit einer oder mehreren automatisiert betriebenen Entladevorrichtung(en) (11) zum Entladen einer oder mehrerer der Transportladehilfe(n) (7; 107), durch Entnahme der für die Bearbeitung des Kommissionierauftrags benötigten Warenträger (3) von der Warenträgerstapelgruppe (8a, 8b, 8c), wobei die Transportladehilfe(n) (7b, 7c) zum Entladen an der(n) automatisiert betriebenen Entladevorrichtung(en) (11) bereitgestellt wird (werden), und
eine Vielzahl an autonom verfahrbaren, fahrerlosen Transportfahrzeugen (9; 90), welche von einem Steuerungssystem (16) angesteuert werden und jeweils ein Fahrgestell (150) mit einer Antriebseinheit und eine auf dem Fahrgestell (150) angeordnete Ladeplattform (151) zur Aufnahme einer Transportladehilfe (7a, 7b, 7c) aufweisen,
- um leere Transportladehilfen (7a) zur Beladestation zu transportieren und eine der leeren Transportladehilfen (7a) entweder an der automatisiert betriebenen Beladevorrichtung (10) oder auf der Pufferfläche (43) nahe der Beladevorrichtung (10) bereitzustellen, und
- um die mit der Warenträgerstapelgruppe (8a, 8b, 8c) beladene Transportladehilfe (7b, 7c) von der Beladestation zu dem Lagerbereich (5) zu transportieren, und
- um eine oder mehrere die zu einem Kommissionierauftrag benötigten Warenträger (3) enthaltende(n) Transportladehilfe(n) (7b, 7c) mit einer Warenträgerstapelgruppe (8a, 8b, 8c) vom Lagerbereich (5) zu einer Entladestation zu transportieren und genannte Transportladehilfe(n) (7b, 7c) entweder an einer oder mehreren automatisiert betriebenen Entladevorrichtung(en) (11) oder auf einer Pufferfläche (73) nahe der Entladevorrichtung(en) (11) bereitzustellen,
wobei an wenigstens einigen der autonom verfahrbaren, fahrerlosen Transportfahrzeugen (9; 90) oder an wenigstens einigen der mobilen Transportladehilfen (7a, 7b, 7c) eine Bereitstellung einer Transportsicherung (160; 174) vorgesehen ist, welche der Lagestabilisierung einer Warenträgerstapelgruppe (8a, 8b, 8c) dient, wenn diese auf der mobilen Transportladehilfe (7b, 7c, 7d) aufgenommen ist,
wobei die wenigstens einigen der autonom verfahrbaren, fahrerlosen Transportfahrzeuge (90) jeweils umfassen
- die Ladeplattform (151) und
- Seitenwände (161a, 161b), welche Seitenwände (161a, 161b) benachbart zur Ladeplattform (151) angeordnet sind und die Transportsicherung (160) zur Lagestabilisierung der Warenträgerstapelgruppe (8a, 8b, 8c) bilden, wenn diese mit der Transportladehilfe (7d) auf der Ladeplattform (151) abgestellt ist, und eine erste Seitenwand (161a) und eine zweite Seitenwand (161b) aufweisen, wobei die erste Seitenwand (161a) und zweite Seitenwand (161b) einen Winkel einschließen,
oder
wobei die wenigstens einigen der mobilen Transportladehilfen (7a, 7b, 7c, 7d) jeweils zusätzlich umfassen
- Seitenwände (173a, 173b), welche die Transportsicherung (174) zur Lagestabilisierung der Warenträgerstapelgruppe (8a, 8b, 8c) bilden, wenn diese auf dem Bodenwandteil (171) abgestellt ist, und eine erste Seitenwand (173a) und eine zweite Seitenwand (173b) aufweisen, wobei die erste Seitenwand (173a) und zweite Seitenwand (173b) einen Winkel einschließen,
und wobei der Bodenwandteil (171) sowohl um einen ersten Neigungswinkel (α₁) gegenüber einer zwischen der ersten Seitenwand (161a; 173a) und zweiten Seitenwand (161b; 173b) aufgespannten Horizontalebene in Richtung zur ersten Seitenwand (161a; 173a) nach unten geneigt verläuft, als auch um einen zweiten Neigungswinkel (α₂) gegenüber einer zwischen der ersten Seitenwand (161a; 173a) und zweiten Seitenwand (161b; 173b) aufgespannten Horizontalebene in Richtung zur zweiten Seitenwand (161b: 173b) nach unten geneigt verläuft, wobei die erste Seitenwand (161a; 173a) und die zweite Seitenwand (161b; 173b) normal auf den Bodenwandteil (171) ausgerichtet sind.

9. Kommissionierlager nach Anspruch 8, **gekennzeichnet durch** eine oder mehrere Stapelladehilfen (100a, 100b) jeweils zur Aufnahme und gegebenenfalls Lagestabilisierung eines aus den Warenträgern (3) gemäß dem genannten Kommissionierauftrag zusammengestellten Auftragsstapels (106), welche zumindest eine erste Stapelladehilfe (100a) und/oder zumindest eine zweite Stapelladehilfe (100b) umfassen.

10. Kommissionierlager nach Anspruch 9, **dadurch gekennzeichnet, dass** die zumindest eine erste Stapelladehilfe (100a) ein Transportgestell, einen Boden und an diesem vorragende Seitenwände (208a, 208b) umfasst, wobei das Transportgestell einen Transportrahmen (205) ausbildet, gegen welchen eine Ladeplattform (151) des Transportfahrzeuges (9; 90) angestellt werden kann, und wobei der Boden einen Bodenwandteil (206) ausbildet, auf welchem ein Zielladehilfsmittel (70), insbesondere eine Palette, mit dem auf diesem gestapelten Auftragsstapel (106) abgestellt werden kann, und die Seitenwände (208a, 208b) eine Transportsicherung (207) zur Lagestabilisierung eines Auftragsstapels (106) bilden, wenn dieser mit dem Zielladehilfsmittel (70) auf dem Bodenwandteil (206) aufgenommen ist.

11. Kommissionierlager nach Anspruch 9, **dadurch gekennzeichnet, dass** die zumindest eine zweite Stapelladehilfe (100b) ein Transportgestell, einen Boden und an diesem vorragende Seitenwände (208a, 208b) umfasst, wobei das Transportgestell einen Transportrahmen (205) ausbildet, gegen welchen eine Ladeplattform (151) des Transportfahrzeuges (9; 90) angestellt werden kann, und wobei der Boden einen Bodenwandteil (206) aufweist, welcher auf seiner oberen Seite vorragende und durch Aufnahmekanäle (215) voneinander getrennte Abstellklötze (216) ausbildet, auf welcher die Warenträger (3) des Auftragsstapels (106) abgestellt werden können, sodass die zumindest eine zweite Stapelladehilfe (100b) das Zielladehilfsmittel (170) bildet und die Seitenwände (208a, 208b) eine Transportsicherung (207) zur Lagestabilisierung eines Auftragsstapels (106) bilden, wenn dieser auf dem Bodenwandteil (206) aufgenommen ist.

12. Kommissionierlager nach einem der Ansprüche 8 bis 11, **gekennzeichnet durch** eine Auftragsstapel-Ladungssicherungsstation entweder mit einer oder mehreren automatisiert betriebenen Ladungssicherungsvorrichtung(en) (120) oder mit einer oder mehreren automatisiert betriebenen Ladungssicherungsvorrichtung(en) (120) und einer Pufferfläche (125) nahe der Ladungssicherungsvorrichtung(en) (120),
- welche Ladungssicherungsvorrichtung (120) zur Transportsicherung eines Auftragsstapels (106) mit einem Sicherungsmittel (121) ausgebildet ist, und
- welche eine Hebevorrichtung (123, 124) aufweist, mit welcher das Zielladehilfsmittel (70) mit dem Auftragsstapel (106) von der Stapelladehilfe (100a) abgehoben wird, wenn das Kommissionierlager (1) die erste Stapelladehilfe (100a) umfasst, oder mit welcher der Auftragsstapel (106) von der Stapelladehilfe (100b) abgehoben wird, wenn das Kommissionierlager (1) die zweite Stapelladehilfe (100b) umfasst wird, um den Auftragsstapel (106) mit dem Sicherungsmittel (121) zu stabilisieren.

13. Kommissionierlager nach Anspruch 8, **gekennzeichnet durch** eine Vorrichtung zur Erfassung von Daten zu der Warenträgerstapelgruppe (8a, 8b, 8c) und/oder Erfassung von Daten zu dem Warenträger (3) und/oder Erfassung von Daten zu der Ware (2) in dem Warenträger (3) und durch eine Datenleitung zum Steuerungssystem (16), um dieser die Daten zu der Warenträgerstapelgruppe (8a, 8b, 8c) und/oder die Daten zu dem Warenträger (3) und/oder die Daten zu der Ware (2) in dem Warenträger (3) zu übermitteln, wobei das Steuerungssystem (16) eine Steuerungslogik umfasst und die Daten zu der Warenträgerstapelgruppe (8a, 8b, 8c) und/oder die Daten zu dem Warenträger (3) und/oder die Daten zu der Ware (2) in dem Warenträger (3) entsprechend der Steuerungslogik verarbeitet und Steuerbefehle erzeugt, anhand der die Entladevorrichtung(en) (11), insbesondere eine Greifereinheit der Entladevorrichtung (11), angesteuert wird (werden) und/oder Transportbefehle erzeugt werden, anhand der das/die autonom verfahrbaren, fahrerlosen Transportfahrzeuge (9; 90) angesteuert wird (werden).

14. Kommissionierlager nach Anspruch 8 oder 13, **gekennzeichnet durch** eine Überprüfstation im Anlieferbereich (4) mit
- einer oder mehreren Prüfvorrichtung(en) (20) zum Überprüfen von Qualitätsmerkmalen der Waren (2) in den Warenträgern (3),
- einer Fördertechnik zum Antransport einer Warenträgerstapelgruppe (8a, 8b, 8c) und zum Abtransport einer Warenträgerstapelgruppe (8a, 8b, 8c),
- einer Erfassungsvorrichtung (22) zur Identifizierung der Warenträgerstapelgruppe (8a, 8b, 8c), welche mit dem Steuerungssystem (16) über eine Datenleitung verbunden ist, und
- einer Eingabe- und/oder Ausgabevorrichtung (23) zur Eingabe von Daten aus der Prüfung der Qualitätsmerkmale, welche mit dem Steuerungssystem (16) über eine Datenleitung verbunden ist.

15. Kommissionierlager nach Anspruch 14, **dadurch gekennzeichnet, dass** die Überprüfstation entlang der Fördertechnik zum Antransport einer Warenträgerstapelgruppe (8a, 8b, 8c) und zum Abtransport einer Warenträgerstapelgruppe (8a, 8b, 8c) eine automatisiert betriebene Klemm- und Hebevorrichtung (24) umfasst, durch welche die Warenträgerstapelgruppe (8a, 8b, 8c) in einen oberen Warenträgerstapel (26a) und einen unteren Warenträgerstapel (26b) auftrennbar ist und zwischen dem oberen Warenträgerstapel (26a) und dem unteren Warenträgerstapel (26b) ein Zugangsbereich entsteht, welcher die Entnahme zumindest eines Warenträgers (3) vom unteren Warenträgerstapel (26a) oder einer Ware (2) aus einem Warenträger (3) aus dem unteren Warenträgerstapel (26b) ermöglicht.

## Claims

1. A method for storing and picking article carriers (3) that contain articles (2), in particular groceries from the fresh food sector, and are stackable in a picking warehouse (1), comprising the steps
providing autonomously movable, driverless transport vehicles (9; 90) in the picking warehouse (1), said transport vehicles (9; 90) each having a chassis (150) with a drive unit and a loading platform (150) arranged on the chassis (151) for receiving a mobile transport loading aid (7a, 7b, 7c, 7d),
providing mobile transport loading aids (7a, 7b, 7c, 7d) in each case for receiving an article carrier stack group (8a, 8b, 8c) in the picking warehouse (1),
wherein the mobile transport loading aids (7a, 7b, 7c, 7d) each comprise
- a transport rack which forms a transport frame (172) against which the loading platform (151) of a transport vehicle (9; 90) can be positioned, and
- a base which forms a base wall part (171) on which the article carrier stack group (8a, 8b, 8c) can be placed,
and wherein the mobile transport loading aids (7a, 7b, 7c, 7d) comprise empty transport loading aids (7a),
providing a transport safeguard (160; 174) on at least some of the autonomously movable, driverless transport vehicles (90) or on at least some of the mobile transport loading aids (7a, 7b, 7c), said transport safeguard (160; 174) serving for stabilizing the position of an article carrier stack group (8a, 8b, 8c) while it is received on the mobile transport loading aid (7b, 7c, 7d),
wherein the at least some of the autonomously movable, driverless transport vehicles (90) each comprise
- the loading platform (151), and
- side walls (161a, 161b), said side walls (161a, 161b) being arranged adjacently to the loading platform (151), and forming the transport safeguard (160) for stabilizing the position of the article carrier stack group (8a, 8b, 8c) while it is placed on the loading platform (151) with the transport loading aid (7d), and comprise a first side wall (161a) and a second side wall (161b), wherein the first side wall (161a) and the second side wall (161b) enclose an angle,
or
wherein the at least some of the mobile transport loading aids (7a, 7b, 7c) each additionally comprise
- side walls (173a, 173b), which form the transport safeguard (174) for stabilizing the position of the article carrier stack group (8a, 8b, 8c) while it is placed on the base wall part (171), and comprise a first side wall (173a) and a second side wall (173b), wherein the first side wall (173a) and the second side wall (173b) enclose an angle,
and wherein the base wall part (171) is both inclined downwardly at a first inclination angle (α₁) with respect to a horizontal plane spanned between the first side wall (161a; 173a) and the second side wall (161b; 173b) in the direction towards the first side wall (161a; 173a), and inclined downwardly at a second inclination angle (α₂) with respect to a horizontal plane spanned between the first side wall (161a; 173a) and the second side wall (161b; 173b) in the direction towards the second side wall (161b; 173b), wherein the first side wall (161a; 173a) and the second side wall (161b; 173b) are aligned perpendicularly to the base wall part (171),
providing article carrier stack groups (8a, 8b, 8c) comprising multiple article carriers (3) arranged next to one another and on top of one another in a delivery zone (4) of the picking warehouse (1),
transporting empty transport loading aids (7a) by means of the autonomously movable, driverless transport vehicles (9; 90) to a loading station and providing one or multiple empty transport loading aid(s) (7a) either on one or on multiple automatically operated loading device(s) (10) or on a buffer surface (43) close to the loading device(s) (10),
loading one of the empty transport loading aids (7a), which is provided at the automatically operated loading device (10), with the article carrier stack group (8a, 8b, 8c), which is provided in the delivery zone (4) and is received essentially unchanged on the empty transport loading aid (7a), by the automatically operated loading device (10),
transporting the transport loading aid (7b, 7c) loaded with the article carrier stack group (8a, 8b, 8c) by the autonomously movable, driverless transport vehicle (9; 90) from the loading station to a storage zone (5) and stabilizing the position of the article carrier stack group (8a, 8b, 8c) by the transport safeguard (160; 174) during the transport movement of the loaded transport loading aid (7b, 7c),
placing the transport loading aid (7b, 7c) loaded with the article carrier stack group (8a, 8b, 8c) on a storage surface (45) in the storage zone (5),
storing the transport loading aids (7b, 7c) loaded with the article carrier stack groups (8a, 8b, 8c) in the storage zone (5),
processing a picking order comprising the following steps
- transporting one or multiple transport loading aid(s) (7b, 7c) containing the article carriers (3) required for a picking order from the storage zone (5) to an unloading station and providing said transport loading aid(s) (7b, 7c) either at one or at multiple automatically operated unloading device(s) (11) or on a buffer surface (73) close to the unloading device(s) (11) by means of one or multiple autonomously movable, driverless transport vehicle(s) (9; 90) and stabilizing the position of the article carrier stack group (8a, 8b, 8c) by the transport safeguard (160; 174) during the transport movement of the loaded transport loading aid (7b, 7c),
- unloading one or multiple ones of the transport loading aid(s) (7b, 7c) which is (are) provided at the automatically operated unloading device(s) (11), by removing the article carriers (3) required for processing the mentioned picking order, and
- assembling the article carriers (3) on one or multiple target loading aids (70; 170) for the mentioned picking order in an order processing zone (6).

2. The method for storing and picking articles according to claim 1, **characterized in that** assembling the article carriers (3) for the mentioned picking order is carried out such that an individual article carrier (3) removed from the article carrier stack group (8a, 8b, 8c) at the unloading device (11) or an article carrier stack removed from the article carrier stack group (8a, 8b, 8c) is transferred onto a target loading aid (70; 170) by the unloading device (11).

3. The method for storing and picking articles according to claim 1, further comprising the steps
- providing stack loading aids (100a, 100b) in each case for receiving and optionally stabilizing the position of an order stack (106) assembled of the article carriers (3) according to the mentioned picking order, of which the stack loading aids (100a, 100b) comprise at least one first stack loading aid (100a) and/or at least one second stack loading aid (100b), and which, in turn, comprise a base wall part (206) and optionally side walls (208a, 208b) projecting therefrom,
- lading the first stack loading aid (100a) with a target loading aid (70) at a lading station by means of one or multiple automatically operated lading device(s) (110), by the target loading aid (70) being placed on the base wall part (206) if a first stack loading aid (100a) is used in the picking warehouse (1), and/or
- defining the second stack loading aid (100b) as the target loading aid (110) if a second stack loading aid (100b) is used in the picking warehouse (1).

4. The method for storing and picking articles according to claim 3, **characterized by** the steps
- transporting stack loading aids (100a, 100b) by means of the autonomously movable, driverless transport vehicles (9; 90) to the unloading station and providing one or multiple stack loading aid(s) (100a, 100b) either on one or on multiple automatically operated unloading device(s) (11) or on a buffer surface (92) close to the unloading device(s) (11),
- assembling the article carriers (3) according to the mentioned picking order to the order stack (106) on the target loading aid (70) in the first stack loading aid (100a) or on the base wall part (206) of the second stack loading aid (100b), said first stack loading aid (100a) or second stack loading aid (100b) being provided at the automatically operated unloading device(s) (11).

5. The method for storing and picking articles according to one of claims 1 to 4, **characterized in that** processing a picking order additionally comprises the steps
- transporting one or multiple transport loading aid(s) (7b, 7c) containing the article carriers (3) required for the picking order from the storage zone (5) to the unloading station and providing said transport loading aid(s) (7b, 7c) either at one or at multiple semi-automated unloading device(s) (100) or on a buffer surface (104a) close to the unloading device(s) (100) by means of one or multiple autonomously movable, driverless transport vehicle(s) (9; 90) and stabilizing the position of the article carrier stack group (8a, 8b, 8c) by the transport safeguard (160; 174) during the transport movement of the loaded transport loading aid(s) (7b, 7c),
- manually unloading one or multiple ones of the transport loading aid(s) (7b, 7c) which is (are) provided at the semi-automated unloading device(s) (100), by removing the article carriers (3) required for processing the mentioned picking order, and
- manually assembling the article carriers (3) on one or multiple target loading aids (70; 170) for the mentioned picking order, if the target loading aid(s) (70; 170) is (are) provided at the semi-automated unloading device(s) (100).

6. The method for storing and picking articles according to claim 5, **characterized by** the steps
- transporting stack loading aids (100a, 100b) by means of the autonomously movable, driverless transport vehicles (9; 90) to the unloading station and providing one or multiple stack loading aid(s) (100a, 100b) either on one or on multiple semi-automated unloading device(s) (100) or on a buffer surface (104b) close to the unloading device(s) (100),
- assembling the article carriers (3) according to the mentioned picking order to the order stack (106) on the target loading aid (70) in the first stack loading aid (100a) or on a base wall part (206) of the second stack loading aid (100b), said first stack loading aid (100a) or second stack loading aid (100b) being provided at the semi-automated unloading device(s) (100).

7. The method for storing and picking articles according to one of claims 3 to 6, further comprising the steps
- providing an order stack load securing station either with one or multiple automatically operated load securing device(s) (120) or with one or multiple automatically operated load securing device(s) (120) and a buffer surface (125) close to the load securing device(s) (120), said load securing devices (120) being configured for securing transport of an order stack (106) with a securing means (121),
- transporting stack loading aids (100a, 100b) each loaded with one order stack (106) by means of the autonomously movable, driverless transport vehicles (9; 90) to the mentioned order stack load securing station and providing one or multiple stack loading aid(s) (100a, 100b) either on one or on multiple automatically operated load securing device(s) (120) or on a buffer surface (125) close to the load securing device(s) (120),
- removing the order stack (106) from the stack loading aid (100a, 100b) by means of a lifting device (123, 124), by means of which the target loading aid (70) with the order stack (106) is lifted from the first stack loading aid (100a), if the picking warehouse (1) comprises the first stack loading aid (100a), or by means of which the order stack (106) is lifted from the second stack loading aid (100b) if the picking warehouse (1) comprises the second stack loading aid (100b),
- securing the order stack (106) with the securing means (121) by means of the automatically operated load securing device (120), in that the securing means (121) is placed circumferentially around the order stack (106),
- transporting the secured order stack (106), in particular by means of the autonomously movable, driverless transport vehicles (9; 90), from the load securing station to a distribution zone,
transporting the unloaded stack loading aids (100a, 100b) by means of the autonomously movable, driverless transport vehicles (9; 90), comprising
- transporting the first stack loading aid (100a) from the load securing station to the lading station with one or multiple automatically operated lading device(s) (110), if a first stack loading aid (100a) is used in the picking warehouse (1), and/or
- transporting the second stack loading aid (100b) from the load securing station to the unloading station and providing the second stack loading aid(s) (100b) either at an automatically operated unloading device (11) or on a buffer surface (92) close to the unloading device (11), if a second stack loading aid (100b) is used in the picking warehouse (1).

8. The picking warehouse (1) for storing and picking article carriers (3), which contain articles (2) and are stackable, in particular for carrying out the method according to one of claims 1 to 7, comprising
an order-processing computer (15) for acquiring a picking order and for determining articles (2) which are required for the picking order,
a plurality of transport loading aids (7a, 7b, 7c, 7d) in each case for receiving an article carrier stack group (8a, 8b, 8c),
wherein the mobile transport loading aids (7a, 7b, 7c, 7d) each comprise
- a transport rack which forms a transport frame (172) against which the loading platform (151) of a transport vehicle (9; 90) can be positioned, and
- a base which forms a base wall part (171) on which the article carrier stack group (8a, 8b, 8c) can be placed,
and wherein the transport loading aids (7a, 7b, 7c, 7d) comprise mobile empty transport loading aids (7a),
a delivery zone (4) for providing article carrier stack groups (8a, 8b, 8c) comprising multiple article carriers (3) arranged next to one another and on top of one another,
a loading station either with one or multiple automatically operated loading device(s) (10) or with one or multiple automatically operated loading device(s) (10) and a buffer surface (43) close to the loading device(s) (10), said loading device (10) being configured for loading one of the empty transport loading aids (7a) with an article carrier stack group (8a, 8b, 8c), wherein the empty transport loading aid (7a) is provided for loading with an essentially unchanged article carrier stack group (8a, 8b, 8c) at the automatically operated loading device (10), wherein the article carrier stack group (8a, 8b, 8c) comprises multiple article carriers (3) arranged next to one another and on top of one another,
a storage zone (5) for storing the transport loading aids (7b, 7c) loaded with article carrier stack groups (8a, 8b, 8c) on a storage surface (45),
an unloading station with one or multiple automatically operated unloading device(s) (11) for unloading one or multiple ones of the transport loading aid(s) (7; 107) by removing the article carriers (3) required for processing the picking order from the article carrier stack group (8a, 8b, 8c), wherein the transport loading aid(s) (7b, 7c) is (are) provided for unloading at the automatically operated unloading device(s) (11), and
a plurality of autonomously movable, driverless transport vehicles (9; 90) which are controlled by a control system (16) and each have a chassis (150) with a drive unit and a loading platform (151) arranged on the chassis (150) for receiving a transport loading aid (7a, 7b, 7c),
- to transport empty transport loading aids (7a) to the loading station and to provide one of the empty transport loading aids (7a) either at the automatically operated loading device (10) or on the buffer surface (43) close to the loading device (10), and
- to transport the transport loading aid (7b, 7c) loaded with the article carrier stack group (8a, 8b, 8c) from the loading station to the storage zone (5), and
- to transport one or multiple transport loading aid(s) (7b, 7c) containing the article carriers (3) required for a picking order with an article carrier stack group (8a, 8b, 8c) from the storage zone (5) to an unloading station and to provide said transport loading aid(s) (7b, 7c) either at one or multiple automatically operated unloading device(s) (11) or on a buffer surface (73) close to the unloading device(s) (11),
wherein on at least some of the autonomously movable, driverless transport vehicles (9; 90) or on at least some of the mobile transport loading aids (7a, 7b, 7c) a provision of a transport safeguard (160; 174) is provided, said transport safeguard (160; 174) serving for stabilizing the position of an article carrier stack group (8a, 8b, 8c) while it is received on the mobile transport loading aid (7b, 7c, 7d),
wherein the at least some of the autonomously movable, driverless transport vehicles (90) each comprise
- the loading platform (151), and
- side walls (161a, 161b), said side walls (161a, 161b) being arranged adjacently to the loading platform (151), and forming the transport safeguard (160) for stabilizing the position of the article carrier stack group (8a, 8b, 8c) while it is placed on the loading platform (151) with the transport loading aid (7d), and comprise a first side wall (161a) and a second side wall (161b), wherein the first side wall (161a) and the second side wall (161b) enclose an angle,
or
wherein the at least some of the mobile transport loading aids (7a, 7b, 7c) each additionally comprise
- side walls (173a, 173b), which form the transport safeguard (174) for stabilizing the position of the article carrier stack group (8a, 8b, 8c) while it is placed on the base wall part (171), and comprise a first side wall (173a) and a second side wall (173b), wherein the first side wall (173a) and the second side wall (173b) enclose an angle,
and wherein the base wall part (171) is both inclined downwardly at a first inclination angle (α₁) with respect to a horizontal plane spanned between the first side wall (161a; 173a) and the second side wall (161b; 173b) in the direction towards the first side wall (161a; 173a), and inclined downwardly at a second inclination angle (α₂) with respect to a horizontal plane spanned between the first side wall (161a; 173a) and the second side wall (161b; 173b) in the direction towards the second side wall (161b; 173b), wherein the first side wall (161a; 173a) and the second side wall (161b; 173b) are aligned perpendicularly to the base wall part (171).

9. The picking warehouse according to claim 8, **characterized by** one or multiple stack loading aids (100a, 100b) each for receiving and optionally stabilizing the position of an order stack (106) assembled of the article carriers (3) according to the mentioned picking order, which comprise at least one first stack loading aid (100a) and/or at least one second stack loading aid (100b).

10. The picking warehouse according to claim 9, **characterized in that** the at least one first stack loading aid (100a) comprises a transport rack, a base and side walls (208a, 208b) projecting from the base, wherein the transport rack forms a transport frame (205), against which a loading platform (151) of the transport vehicle (9; 90) can be positioned, and wherein the base forms a base wall part (206) onto which a target loading aid (70), in particular a pallet, with the order stack (106) stacked thereon can be placed, and the side walls (208a, 208b) form a transport safeguard (207) for stabilizing the position of an order stack (106) when it is received on the base wall part (206) with the target loading aid (70).

11. The picking warehouse according to claim 9, **characterized in that** the at least one second stack loading aid (100b) comprises a transport rack, a base and side walls (208a, 208b) projecting from the base, wherein the transport rack forms a transport frame (205), against which a loading platform (151) of the transport vehicle (9; 90) can be positioned, and wherein the base comprises a base wall part (206), which forms placing blocks (216) projecting on its upper side and being separated from one another by receiving channels (215), onto which the article carriers (3) of the order stack (106) can be placed, such that the at least one second stack loading aid (100b) forms the target loading aid (170) and the side walls (208a, 208b) form a transport safeguard (207) for stabilizing the position of an order stack (106) when it is received on the base wall part (206).

12. The picking warehouse according to one of claims 8 to 11, **characterized by** an order stack load securing station either with one or multiple automatically operated load securing device(s) (120) or with one or multiple automatically operated load securing device(s) (120) and a buffer surface (125) close to the load securing device(s) (120),
- said load securing device (120) being configured for secure transport of an order stack (106) with a securing means (121), and
- which comprises a lifting device (123, 124), by means of which the target loading aid (70) with the order stack (106) is lifted from the stack loading aid (100a) if the picking warehouse (1) comprises the first stack loading aid (100a), or by means of which the order stack (106) is lifted from the stack loading aid (100b) if the picking warehouse (1) comprises the second stack loading aid (100b), for stabilizing the order stack (106) with the securing means (121).

13. The picking warehouse according to claim 8, **characterized by** a device for acquiring data relating to the article carrier stack group (8a, 8b, 8c) and/or acquiring data relating to the article carrier (3) and/or acquiring data relating to the article (2) in the article carrier (3), and by a data line to the control system (16), in order to transmit to it the data relating to the article carrier stack group (8a, 8b, 8c) and/or the data relating to the article carrier (3) and/or the data relating to the article (2) in the article carrier (3), wherein the control system (16) comprises a control logic and processes the data relating to the article carrier stack group (8a, 8b, 8c) and/or the data relating to the article carrier (3) and/or the data relating to the article (2) in the article carrier (3) in accordance with the control logic and generates control commands, by means of which the unloading device(s) (11), in particular a gripping unit of the unloading device (11), is (are) controlled and/or transport commands are generated by means of which the autonomously movable, driverless transport vehicle(s) (9; 90) is (are) controlled.

14. The picking warehouse according to claim 8 or 13, **characterized by** a checking station in the delivery zone (4) with
- one or multiple testing device(s) (20) for checking quality features of the articles (2) in the article carriers (3),
- a conveying system for inward transport of an article carrier stack group (8a, 8b, 8c) and for outward transport of an article carrier stack group (8a, 8b, 8c),
- a detection device (22) for identifying the article carrier stack group (8a, 8b, 8c) which is connected to the control system (16) via a data line, and
- an input and/or output device (23) to input data from the check of the quality features, which is connected to the control system (16) via a data line.

15. The picking warehouse according to claim 14, **characterized in that** the checking station comprises an automatically operated clamping and lifting device (24) along the conveying system for inwardly transporting an article carrier stack group (8a, 8b, 8c) and outwardly transporting an article carrier stack group (8a, 8b, 8c), by means of which clamping and lifting device (24) the article carrier stack group (8a, 8b, 8c) can be separated into an upper article carrier stack (26a) and a lower article carrier stack (26b) and an access region is created between the upper article carrier stack (26a) and the lower article carrier stack (26b), said access region allowing the removal of at least one article carrier (3) from the lower article carrier stack (26a) or of an article (2) from an article carrier (3) of the lower article carrier stack (26b).

## Revendications

1. Procédé de stockage et de prélèvement de supports de marchandises (3) empilables contenant des marchandises (2), plus particulièrement des produits alimentaires du rayon frais, de supports de marchandises dans un entrepôt de prélèvement (1), comprenant les étapes suivantes :
mise à disposition de véhicules de transport autonomes sans conducteur (9 ; 90) dans l'entrepôt de prélèvement (1), qui comprennent chacun un châssis (150) avec une unité d'entraînement et une plate-forme de chargement (151) disposée sur le châssis (150),
pour le logement d'une aide au chargement de transport (7a, 7b, 7c, 7d),
mise à disposition d'aides au chargement de transport (7a, 7b, 7c, 7d) respectivement pour le logement d'un groupe d'empilage de supports de marchandises (8a, 8b, 8c) dans l'entrepôt de prélèvement (1),
dans lequel les aides au chargement de transport mobiles (7a, 7b, 7c, 7d) comprennent chacune
- un châssis de transport qui constitue un cadre de transport (172), contre lequel la plate-forme de chargement (151) d'un véhicule de transport (9 ; 90) peut être placée et
- un fond qui constitue une partie de paroi de fond (171) sur laquelle le groupe d'empilage supports de marchandises (8a, 8b, 8c) peut être déposé,
et dans lequel les aides au chargement de transport (7a, 7b, 7c, 7d) comprennent des aides au chargement de transport vides (7a),
mise à disposition d'une sécurité de transport (160 ; 174) au niveau d'au moins certains des véhicules de transport autonomes sans conducteur (90) ou au niveau d'au moins certaines des aides au chargement de transport mobiles (7a, 7b, 7c) qui permet une stabilisation de la position d'un groupe d'empilage de supports de marchandises (8a, 8b, 8c) lorsque celui-ci est logé sur l'aide au chargement de transport mobile (7b, 7c, 7d),
dans lequel les au moins certains des véhicules de transport autonomes sans conducteur (90) comprennent chacun
- la plate-forme de chargement (151) et
- des parois latérales (161a, 161b), ces parois latérales (161a, 161b) étant disposées parallèlement à la plate-forme de chargement (151) et constituant la sécurité de transport (160) pour la stabilisation de la position d'un groupe d'empilage de supports de marchandises (8a, 8b, 8c) lorsque celui-ci est déposé avec l'aide au chargement de transport mobile (7d) sur la plate-forme de chargement (151), et comprennent une première paroi latérale (161a) et une deuxième paroi latérale (161b), dans lequel la première paroi latérale (161a) et la deuxième paroi latérale (161b) forment un angle, ou
dans lequel les au moins certaines des aides au chargement de transport mobiles (7a, 7b, 7c, 7d) comprennent en outre chacune
- des parois latérales (173a, 173b) qui constituent la sécurité de transport (174) pour la stabilisation de la position du groupe d'empilage de supports de marchandises (8a, 8b, 8c) lorsque celui-ci est déposé sur la partie de paroi de fond (171) et comprennent une première paroi latérale (173a) et une deuxième paroi latérale (173b), dans la première paroi latérale (173a) et la deuxième paroi latérale (173b) forment un angle,
et dans lequel la partie de paroi de fond (171) s'étend de manière inclinée vers le bas, avec un premier angle d'inclinaison (α₁) par rapport à un plan horizontal s'étendant entre la première paroi latérale (161a ; 173a) et la deuxième paroi latérale (161b ; 173b), en direction de la première paroi latérale (161a ; 173a) et de manière inclinée vers le bas, avec un deuxième angle d'inclinaison (α₂) par rapport à un plan horizontal s'étendant entre la première paroi latérale (161a ; 173a) et la deuxième paroi latérale (161b ; 173b),
en direction de la deuxième paroi latérale (161b, 173b), dans lequel la première paroi latérale (161a ; 173a) et la deuxième paroi latérale (161b ; 173b) sont orientées perpendiculairement par rapport à la partie de paroi de fond (171),
mise à disposition de groupes d'empilage de supports de marchandises (8a, 8b, 8c) comprenant plusieurs supports de marchandises juxtaposés et superposés (3) dans une zone de livraison (4) de l'entrepôt de prélèvement (1),
transport d'aides au chargement de transport vides (7a) par les véhicules autonomes sans conducteur (9 ; 90) vers une station de chargement et mise à disposition d'une ou
plusieurs aides au chargement de transport (7a) soit au niveau d'un ou plusieurs dispositifs de chargement automatisés (10) soit sur une surface tampon (43) proche du ou des dispositifs de chargement (10),
chargement d'une des aides au chargement de transport vides (7a) qui est mise à disposition au niveau du dispositif de chargement (10) automatisé, avec le groupe d'empilage de supports de marchandises (8a, 8b, 8c), qui est mis à disposition dans la zone de livraison (4) et qui est pris en charge globalement sans modification sur l'aide au transport de chargement vide (7a), par le dispositif de chargement (10) automatisé, transport de l'aide au chargement de transport (7b, 7c) chargée avec le groupe d'empilage de supports de marchandises (8a, 8b, 8c) avec le véhicule autonome sans conducteur (9 ; 90) de la station de chargement vers une zone de stockage (5) et
stabilisation de la position du groupe d'empilage de supports de marchandises (8a, 8b, 8c) par la sécurité de transport (160 ; 174) pendant le mouvement de transport de l'aide au chargement de transport (7b, 7c) chargée,
dépose de l'aide au chargement de transport (7b, 7c) chargée avec le groupe d'empilage de supports de marchandises (8a, 8b, 8c) sur une surface de stockage (45) dans la zone de stockage (5),
stockage de l'aide au chargement de transport (7b, 7c) chargée avec le groupe d'empilage de supports de marchandises (8a, 8b, 8c) dans la zone de stockage (5),
traitement d'une commande de prélèvement comprenant les étapes suivantes :
- transport d'une ou plusieurs aides au chargement de transport (7b, 7c) contenant les supports de marchandises (3) nécessaires à une commande de prélèvement, de la zone de stockage (5) vers une station de déchargement et mise à disposition des aides au chargement de transport (7b, 7c) mentionnées soit au niveau d'un ou plusieurs dispositifs de déchargement automatisés (11) soit sur une surface tampon (73) proche de la ou des dispositifs de déchargement (11) par un ou plusieurs véhicules autonomes sans conducteur (9 ; 90) et stabilisation de la position du groupe d'empilage de supports de marchandises (8a, 8b, 8c) par la sécurité de transport (160 ; 174) pendant le mouvement de transport de l'aide au chargement de transport (7b, 7c) chargée,
- déchargement d'une ou plusieurs des aides au chargement de transport (7b, 7c) qui est mise à disposition au niveau du ou des dispositifs de déchargement automatisés (11), par le retrait des supports de marchandises (3) nécessaires pour le traitement de la commande de prélèvement mentionnée et
- regroupement des supports de marchandises (3) sur un ou plusieurs outils de chargement cibles (70 ; 170) pour la commande de prélèvement mentionnée dans une zone de traitement de commande (6).

2. Procédé de stockage et de prélèvement de marchandises selon la revendication 1, **caractérisé en ce que** le regroupement des supports de marchandises (3) pour la commande de prélèvement mentionnée est effectué de sorte qu'un support de marchandises (3) individuel, retiré, au niveau du dispositif de déchargement (11), du groupe d'empilage de supports de marchandises (8a, 8b, 8c) ou un empilage de supports de marchandises retiré du groupe d'empilage de supports de marchandises (8a, 8b, 8c) est transféré par le dispositif de déchargement (11) sur un outil de chargement cible (70 ; 170).

3. Procédé de stockage et de prélèvement de marchandises selon la revendication 1, comprenant en outre les étapes suivantes :
- mise à disposition d'aides au chargement d'empilage (100a, 100b) respectivement pour le logement et, le cas échéant, la stabilisation de la position d'un empilage de commande (106) regroupé à partir des supports de marchandises (3) selon la commande de prélèvement mentionnée, les aides au chargement d'empilages (100a, 100b) comprenant au moins une première aide au chargement d'empilage (100a) et/ou au moins une deuxième aide au chargement d'empilage (100b) et qui comprennent de leur côté une partie de paroi de fond (206) et, le cas échéant, des parois latérales (208a, 208b) dépassant au niveau de celle-ci,
- équipement de la première aide au chargement d'empilage (100a) avec un outil de chargement cible (70) au niveau d'une station d'équipement avec un ou plus dispositifs d'équipement automatisés (110), en déposant l'outil de chargement cible (70) sur la partie de paroi de fond (206), si une première aide au chargement d'empilage (100a) est utilisée dans l'entrepôt de prélèvement (1) et/ou
- définition du deuxième outil de chargement d'empilage (100b) comme outil de chargement cible (110) si un deuxième outil de chargement d'empilage (100b) est utilisé dans l'entrepôt de prélèvement (1).

4. Procédé de stockage et de prélèvement de marchandises selon la revendication 3, **caractérisé par** les étapes suivantes :
- transport d'aides au chargement d'empilages (100a, 100b) par les véhicules autonomes sans conducteur (9 ; 90) vers la station de déchargement et mise à disposition d'une ou plusieurs aides au chargement d'empilages (100a, 100b) soit au niveau d'un ou plusieurs dispositifs de déchargement automatisés (11) soit sur une surface tampon (92) proche du ou des dispositifs de déchargement (11),
- regroupement des supports de marchandises (3) selon la commande de prélèvement mentionnée en un empilage de commande (106) sur l'outil de chargement cible (70) dans la première aide au chargement d'empilage (100a) ou sur la partie de paroi de fond (206) de la deuxième aide au chargement d'empilage (100b), cette première aide au chargement d'empilage (100a) ou deuxième aide au chargement d'empilage (100b) étant mise à disposition au niveau du ou des dispositifs de déchargement automatisés (11).

5. Procédé de stockage et de prélèvement de marchandises selon l'une des revendications 1 à 4, **caractérisé en ce que** le traitement d'une commande de prélèvement comprend en outre les étapes suivantes :
- transport d'une ou plusieurs aides au chargement de transport (7b, 7c) contenant les supports de marchandises (3) nécessaires pour la commande de prélèvement de la zone de stockage (5) vers la station de déchargement et mise à disposition de la ou des aides de chargement de transport (7b, 7c) soit au niveau d'un ou plusieurs dispositifs de déchargement partiellement automatisés (100) soit sur une surface tampon (104a) proche du ou des dispositifs de déchargement automatisés (100) par un ou plusieurs véhicules de transport autonomes sans conducteur (9 ; 90) et stabilisation de la position du groupe d'empilage de supports de marchandises (8a, 8b, 8c) par la sécurité de transport (160 ; 174) pendant le mouvement de transport de la ou des aides au chargement de transport (7b, 7c) chargées,
- déchargement manuel d'une ou plusieurs aides au chargement de transport (7b, 7c) qui sont mise à disposition au niveau du ou des dispositifs de déchargement partiellement automatisés (100), par le retrait des supports de marchandises (3) nécessaires pour le traitement de la commande de prélèvement mentionnée et
- regroupement manuel des supports de marchandises (3) sur un ou plusieurs outils de chargement cibles (70 ; 170) pour la commande de prélèvement mentionnée lorsque le ou les outils de chargement cibles (70 ; 170) sont mis à disposition au niveau du ou des dispositifs de déchargement partiellement automatisés (100).

6. Procédé de stockage et de prélèvement de marchandises selon la revendication 5, **caractérisé par** les étapes suivantes :
- transport d'aides au chargement d'empilages (100a, 100b) par les véhicules autonomes sans conducteur (9 ; 90) vers la station de déchargement et mise à disposition d'une ou plusieurs aides au chargement d'empilages (100a, 100b) soit au niveau d'un ou plusieurs dispositifs de déchargement partiellement automatisés (100) soit sur une surface tampon (104b) proche du ou des dispositifs de déchargement (100),
- regroupement des supports de marchandises (3) selon la commande de prélèvement mentionnée en un empilage de commande (106) sur l'outil de chargement cible (70) dans la première aide au chargement d'empilage (100a) ou sur une partie de paroi de fond (206) de la deuxième aide au chargement d'empilage (100b), cette première aide au chargement d'empilage (100a) ou cette deuxième aide au chargement d'empilage (100b) étant mise à disposition au niveau du ou des dispositifs de déchargement (100).

7. Procédé de stockage et de prélèvement de marchandises selon l'une des revendications 3 à 6, comprenant en outre les étapes suivantes :
- mise à disposition d'une station de sécurisation de chargement d'empilage de commande soit avec un ou plusieurs dispositifs de sécurisation de chargement automatisés (120) soit avec un ou plusieurs dispositifs de sécurisation de chargement automatisés (120) et une surface tampon (125) proche du ou des dispositifs de sécurisation de chargement automatisés (120), ce dispositif de sécurisation de chargement (120) étant conçu pour la sécurisation de transport d'un empilage de commande (106) avec un moyen de sécurisation (121),
- transport d'aides au chargement d'empilages (100a, 100b) chargées chacune avec un empilage de commande (106) par les véhicules de transport autonomes sans conducteur (9 ; 90) vers la station de sécurisation de chargement d'empilage de commande mentionnée et mise à disposition d'une ou plusieurs aides au chargement d'empilages (100a, 100b) soit au niveau d'un ou plusieurs dispositifs de sécurisation de chargement automatisés (120) soit sur une surface tampon (125) proche du ou des dispositifs de sécurisation de chargement automatisés (120),
- retrait de l'empilage de commande (106) de l'aide au chargement d'empilage (100a, 100b) par un dispositif de levage (123, 124) avec lequel l'outil de chargement cible (70) avec l'empilage de commande (106) est levé de la première aide au chargement d'empilage (100a) lorsque l'entrepôt de prélèvement (1) comprend la première aide au chargement d'empilage (100a), ou avec lequel l'empilage de commande (106) est levé de la deuxième aide au chargement d'empilage (100b) lorsque l'entrepôt de prélèvement (1) comprend la deuxième aide au chargement d'empilage (100b),
- sécurisation de l'empilage de commande (106) avec le moyen de sécurisation (121) par le dispositif de sécurisation de chargement automatisé (120) en montant le moyen de sécurisation (121) autour de l'empilage de commande (106),
- transport de l'empilage de commande sécurisé (106) plus particulièrement par les véhicules de transport autonomes sans conducteur (9 ; 90) de la station de sécurisation de chargement vers une zone de livraison,
transport des aides au chargement d'empilages déchargées (100a, 100b) par les véhicules de transport autonomes sans conducteur (9 ; 90), comprenant :
- transport de la première aide au chargement d'empilage (100a) de la station de sécurisation de chargement vers la station d'équipement avec un ou plusieurs dispositifs d'équipement automatisés (110) si, dans l'entrepôt de prélèvement (1), une première aide au chargement d'empilage (100a) est utilisée et/ou
- transport de la deuxième aide au chargement d'empilage (100b) de la station de sécurisation de chargement vers la station de déchargement et mise à disposition de la ou des deuxièmes aides au chargement d'empilages (100b) soit au niveau d'un dispositif de déchargement automatisé (11) soit sur une surface tampon (92) proche du dispositif de déchargement (11) si, dans l'entrepôt de prélèvement (1), une deuxième aide au chargement d'empilage (100b) est utilisée.

8. Entrepôt de prélèvement (1) pour le stockage et le prélèvement de supports de marchandises empilables (3) contenant des marchandises (2), plus particulièrement pour l'exécution du procédé selon l'une des revendications 1 à 7, comprenant un ordinateur de commande (15) pour la saisie d'une commande de prélèvement et pour la détermination des marchandises (2) nécessaires pour la commande de prélèvement, une pluralité d'aides au chargement de transport (7a, 7b, 7c, 7d) respectivement pour le logement d'un groupe d'empilage de marchandises (8a, 8b, 8c),
dans lequel les aides au chargement de transport mobiles (7a, 7b, 7c, 7d) comprennent chacune :
- un châssis de transport, qui constitue un cadre de transport (172), contre lequel la plate-forme de chargement (151) d'un véhicule de transport (9 ; 90) peut être placée et
- un fond, qui constitue une partie de paroi de fond (171), sur lequel le groupe d'empilage de supports de marchandises (8a, 8b, 8c) peut être déposé
et dans lequel les aides au chargement de transport (7a, 7b, 7c, 7d) comprennent des aides au chargement de transport mobiles vides (7a),
une zone de livraison (4) pour la mise à disposition de groupes d'empilage de supports de marchandises (8a, 8b, 8c) comprenant plusieurs supports de marchandises juxtaposés et superposés (3),
une station de chargement soit avec un ou plusieurs dispositifs de chargement automatisés (10) soit avec un ou plusieurs dispositifs de chargement automatisés (10) et une surface tampon (43) proche du ou des dispositifs de chargement (10), ce dispositif de chargement (10) étant conçu pour le chargement d'une des aides au chargement de transport vides (7a) avec un groupe d'empilage de supports de marchandises (8a, 8b, 8c), dans lequel l'aide au chargement de transport vide (7a) est mise à disposition pour le chargement avec un groupe d'empilage de supports de marchandises (8a, 8b, 8c) globalement inchangé au niveau du dispositif de chargement automatisé (10), dans lequel le groupe d'empilage de supports de marchandises (8a, 8b, 8c) comprend plusieurs supports de marchandises juxtaposés et superposés (3),
une zone de stockage (5) pour le stockage des aides au chargement de transport (7b, 7c) chargées avec les groupes d'empilage de supports de marchandises (8a, 8b, 8c) sur une surface de stockage (45),
une station de déchargement avec un ou plusieurs dispositifs de déchargement (11) pour le déchargement d'une ou plusieurs des aides au chargement de transport (7 ; 107), par le retrait des supports de marchandises (3) nécessaire pour le traitement de la commande de prélèvement du groupe d'empilage de supports de marchandises (8a, 8b, 8c), dans lequel la ou les aides au chargement de transport (7b, 7c) sont mises à disposition par le déchargement au niveau du ou des dispositifs de déchargement automatisés (11) et une pluralité de véhicules autonomes sans conducteur (9 ; 90) qui sont contrôlés par un système de contrôle (16) et qui comprennent chacun un châssis (150) avec une unité d'entraînement et une plate-forme de chargement (151) disposée sur le châssis (150) pour le logement d'une aide au chargement de transport (7a, 7b, 7c),
- afin de transporter des aides au chargement de transport vides (7a) vers la station de chargement et de mettre à disposition une des aides au chargement de transport vides (7a) soit au niveau du dispositif de chargement automatisé (10) soit sur la surface tampon (43) proche du dispositif de chargement (10) et
- afin de transporter l'aide au chargement de transport (7b, 7c) chargée avec le groupe d'empilage de supports de marchandises (8a, 8b, 8c) de la station de chargement vers la zone de stockage (5) et
- afin de transporter une ou plusieurs aides au chargement de transport (7b, 7c) contenant les supports de marchandises (3) nécessaires à une commande de prélèvement, avec un groupe d'empilage de supports de marchandises (8a, 8b, 8c), de la zone de stockage (5) vers une station de déchargement et de mettre à disposition les aides au chargement de transport (7b, 7c) mentionnées soit au niveau d'un ou plusieurs dispositifs de déchargement automatisés (11) soit sur une surface tampon (73) proche du ou des dispositifs de déchargement automatisés (11),
dans lequel, au niveau d'au moins certains des véhicules autonomes sans conducteur (9 ; 90) ou au niveau d'au moins certaines des aides au chargement de transport mobiles (7a, 7b, 7c), est prévue la mise à disposition d'une sécurité de transport (160 ; 174) qui permet la stabilisation de la position d'un groupe d'empilage de supports de marchandises (8a, 8b, 8c) lorsque celui-ci est logé sur l'aide au chargement de transport mobile (7b, 7c, 7d),
dans lequel les au moins certains des véhicules autonomes sans conducteur (9 ; 90) comprennent chacun :
- la plate-forme de chargement (151) et
- des parois latérales (161a, 161b), ces parois latérales (161a, 161b) étant disposées près de la plate-forme de chargement (151) et constituant la sécurité de transport (160) pour la stabilisation de la position du groupe d'empilage de supports de marchandises (8a, 8b, 8c) lorsque celui-ci est déposé avec l'aide au chargement de transport mobile (7d) sur la plate-forme de chargement (151), et qui comprennent une première paroi latérale (161a) et une deuxième paroi latérale (161b), dans lequel la première paroi latérale (161a) et la deuxième paroi latérale (161b) forment un angle,
ou
dans lequel les au moins certaines des aides au chargement de transport mobiles (7a, 7b, 7c, 7d) comprennent en outre chacune
- des parois latérales (173a, 173b) qui constituent la sécurité de transport (174) pour la stabilisation de la position du groupe d'empilage de supports de marchandises (8a, 8b, 8c) lorsque celui-ci est déposé sur la partie de paroi de fond (171) et qui comprennent une première paroi latérale (173a) et une deuxième paroi latérale (173b), dans la première paroi latérale (173a) et la deuxième paroi latérale (173b) forment un angle, et dans lequel la partie de paroi de fond (171) s'étend de manière inclinée vers le bas, avec un premier angle d'inclinaison (α₁) par rapport à un plan horizontal s'étendant entre la première paroi latérale (161a ; 173a) et la deuxième paroi latérale (161b ; 173b), en direction de la première paroi latérale (161a ; 173a) et de manière inclinée vers le bas, avec un deuxième angle d'inclinaison (α₂) par rapport à un plan horizontal s'étendant entre la première paroi latérale (161a ; 173a) et la deuxième paroi latérale (161b ; 173b), en direction de la deuxième paroi latérale (161b, 173b), dans lequel la première paroi latérale (161a ; 173a) et la deuxième paroi latérale (161b ; 173b) sont orientées perpendiculairement par rapport à la partie de paroi de fond (171).

9. Entrepôt de prélèvement selon la revendication 8, **caractérisé par** une ou plusieurs aides au chargement de transport (100a, 100b), respectivement pour le logement et, le cas échéant, la stabilisation de la position d'un empilage de commande (106) constitué des supports de marchandises (3) selon la commande de prélèvement mentionnée, qui comprennent au moins une première aide au chargement d'empilage (100a) et/ou au moins une deuxième aide au chargement d'empilage (100b).

10. Entrepôt de prélèvement selon la revendication 9, **caractérisé en ce que** l'au moins une première aide au chargement d'empilage (100a) comprend un châssis de transport, un fond et des parois latérales (208a, 208b) dépassant de celui-ci, dans lequel le châssis de transport constitue un cadre de transport (205) contre lequel une plate-forme de chargement (151) du véhicule de transport (9 ; 90) peut être placée et dans lequel le fond constitue une partie de paroi de fond (206) sur laquelle un outil de chargement cible (70), plus particulièrement une palette, avec l'empilage de commande (106) empilé sur celui-ci, peut être déposé et les parois latérales (208a, 208b) constituent une sécurité de transport (207) pour la stabilisation de la position d'un empilage de commande (106) lorsque celui-ci est logé avec l'outil de chargement cible (70) sur la partie de paroi de fond (206).

11. Entrepôt de prélèvement selon la revendication 9, **caractérisé en ce que** l'au moins une deuxième aide au chargement d'empilage (100b) comprend un châssis de transport, un fond et des parois latérales (208a, 208b) dépassant de celui-ci, dans lequel le châssis de transport constitue un cadre de transport (205) contre lequel une plate-forme de chargement (151) du véhicule de transport (9 ; 90) peut être placée et dans lequel le fond comprend une partie de paroi de fond (206) qui forme des blocs de rangement (216), dépassant sur son côté supérieur et séparés entre eux par des canaux de logement (215), sur lesquels les supports de marchandises (3) de l'empilage de commande (106) peuvent être déposés, de sorte que l'au moins une deuxième aide au chargement d'empilage (100b) constitue l'outil de chargement cible (170) et les parois latérales (208a, 208b) constituent une sécurité de transport (207) pour la stabilisation de la position d'un empilage de commande (106) lorsque celui-ci est logé sur la partie de paroi de fond (206).

12. Entrepôt de prélèvement selon l'une des revendications 8 à 11, **caractérisé par** une station de sécurisation de chargement d'empilage de commande soit avec un ou plusieurs dispositifs de sécurisation de chargement automatisés (120) soit avec un ou plusieurs dispositifs de sécurisation de chargement automatisés (120) et une surface tampon (125) proche du ou des dispositifs de sécurisation de chargement automatisés (120),
- ce dispositif de sécurisation de chargement (120) étant conçu pour la sécurisation du transport d'un empilage de commande (106) avec un moyen de sécurisation (121) et
- qui comprend un dispositif de levage (123, 124) avec lequel l'outil de chargement cible (70) avec l'empilage de commande (106) est levé de l'aide au chargement d'empilage (100a) lorsque l'entrepôt de prélèvement (1) comprend la première aide au chargement d'empilage (100a) ou avec lequel l'empilage de commande (106) peut être levé de l'aide au chargement d'empilage (100b) lorsque l'entrepôt de prélèvement (1) comprend la deuxième aide au chargement d'empilage (100b), afin de stabiliser l'empilage de commande (106) avec le moyen de sécurisation (121).

13. Entrepôt de prélèvement selon la revendication 8, **caractérisé par** un dispositif pour la saisie de données concernant le groupe d'empilage de supports de marchandises (8a, 8b, 8c) et/ou la saisie de données concernant le support de marchandises (3) et/ou la saisie de données concernant la marchandise (2) dans le support de marchandises (3) et par une ligne de données vers le système de contrôle (16), afin de transmettre à celui-ci les données concernant le groupe d'empilage de supports de marchandises (8a, 8b, 8c) et/ou les données concernant le support de marchandises (3) et/ou les données concernant la marchandise (2) dans le support de marchandises (3), dans lequel le système de contrôle (16) comprend une logique de contrôle et les données concernant le groupe d'empilage de supports de marchandises (8a, 8b, 8c) et/ou les données concernant le support de marchandises (3) et/ou les données concernant la marchandise (2) dans le support de marchandises (3) sont traitées en fonction de la logique de contrôle et génère des instructions de contrôle à l'aide desquelles le ou les dispositifs de déchargement (11), plus particulièrement une unité de préhension du dispositif de déchargement (11), sont contrôlés, et/ou génère des instructions de transport à l'aide desquelles le ou les véhicules de transport autonomes sans conducteur (9 ; 90) sont contrôlés.

14. Entrepôt de prélèvement selon la revendication 8 ou 13, **caractérisé par** une station de vérification dans zone de livraison (4), avec
- un ou plusieurs dispositifs de vérification (20) pour la vérification de caractéristiques de qualité des marchandises (2) dans les supports de marchandises (3),
- un système de convoyage pour l'entrée d'un groupe d'empilage de supports de marchandises (8a, 8b, 8c) et pour la sortie d'un groupe d'empilage de supports de marchandises (8a, 8b, 8c),
- un dispositif de détection (22) pour l'identification du groupe d'empilage de supports de marchandises (8a, 8b, 8c), qui est relié avec le système de contrôle (16) par l'intermédiaire d'une ligne de données et
- un dispositif d'entrée et/ou de sortie (23) pour l'entrée de données provenant de la vérification des caractéristiques de qualité, qui est relié avec le système de contrôle (16) par l'intermédiaire d'une ligne de données.

15. Entrepôt de prélèvement selon la revendication 14, **caractérisé en ce que** la station de vérification comprend, le long du système de convoyage pour l'entrée d'un groupe d'empilage de supports de marchandises (8a, 8b, 8c) et pour la sortie d'un groupe d'empilage de supports de marchandises (8a, 8b, 8c), un dispositif de blocage et de levage automatisé (24) à l'aide duquel le groupe d'empilage de supports de marchandises (8a, 8b, 8c) peut être divisé en un empilage de supports de marchandises supérieur (26a) et un empilage de supports de marchandises inférieur (26b) et, entre l'empilage de supports de marchandises supérieur (26a) et l'empilage de supports de marchandises inférieur (26b), une zone d'accès est formée, qui permet le retrait d'au moins un support de marchandise (3) de l'empilage de supports de marchandises supérieur (26a) ou une marchandise (2) d'un support de marchandise (3) de l'empilage de supports de marchandises inférieur (26b).
